# EUROPÄISCHE PATENTSCHRIFT

(11) **EP 3 183 303 B1**
(45) Veröffentlichungstag und Bekanntmachung des Hinweises auf die Patenterteilung: **25.07.2018**
(21) Anmeldenummer: 15766059.8
(22) Anmeldetag: 21.08.2015
(51) Int. Cl.: C09D 5/03, C08L 67/00, C08L 67/08, C08L 77/00, C08L 77/08

(54) **WÄSSRIGE BESCHICHTUNGSZUSAMMENSETZUNG ZUM AUFBRINGEN EINER BASISLACKSCHICHT ENTHALTEND EINE MISCHUNG AUS EINEM POLYESTER UND EINEM POLYAMID MIT GERINGER SÄURE-ZAHL ALS RHEOLOGIEHILFSMITTEL**
AQUEOUS COATING COMPOSITION FOR APPLYING A BASE VARNISH LAYER CONTAINING A MIXTURE OF A POLYESTER AND A POLYAMIDE WITH LOW ACID NUMBER AS A RHEOLOGY CONTROL AGENT
COMPOSITION DE REVÊTEMENT AQUEUSE DESTINÉE À APPLIQUER UNE COUCHE D'APPRÊT CONTENANT UN MÉLANGE D'UN POLYESTER ET D'UN POLYAMIDE AYANT UN INDICE D'ACIDITÉ FAIBLE COMME AGENT RHÉOLOGIQUE

(30) Priorität: 22.08.2014 EP 14182024
(43) Veröffentlichungstag der Anmeldung: 28.06.2017
(73) Patentinhaber: BASF Coatings GmbH, 48165 Münster (DE)
(72) Erfinder: CORTEN, Cathrin, 59423 Unna (DE); EIERHOFF, Dirk, 48155 Münster (DE); KRETH, Susanne-Katharina, 48165 Münster (DE); WILM, Patrick, 59229 Ahlen (DE); SCHWARZ, Jörg, 48163 Münster (DE)
(74) Vertreter: BASF IP Association
(86) Internationale Anmeldenummer: PCT/EP2015/069261
(87) Internationale Veröffentlichungsnummer: WO 2016/026965

(56) Entgegenhaltungen:
- WO-A1-2009/100938
- DE-A1- 4 028 386
- US-A- 5 025 043

## Beschreibung

Die vorliegende Erfindung betrifft eine wässrige Beschichtungszusammensetzung umfassend wenigstens eine Mischung (M) aus wenigstens einem polymeren Harz (P1) und wenigstens einem davon verschiedenen polymeren Harz (P2), wobei (P1) ein Polyamid ist und (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol, wenigstens ein Bindemittel (A) umfassend wenigstens ein polymeres Harz (A1), welches von den polymeren Harzen (P1) und (P2) verschieden ist, wenigstens ein Pigment (B), wobei das als polymeres Harz (P1) eingesetzte Polyamid eine Säure-Zahl <10 mg KOH pro g an Polyamid aufweist und die Mischung (M) erhältlich ist durch Dispergieren des polymeren Harzes (P1) in Wasser oder einem wässrigen Medium in Gegenwart des polymeren Harzes (P2), ein Verfahren zur zumindest teilweisen Beschichtung eines Substrats mit einer Basislackschicht mittels der wässrigen Beschichtungszusammensetzung und eine Verwendung der Mischung (M) als Rheologiehilfsmittel in wässrigen Beschichtungszusammensetzungen.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen. Mehrschichtlackierungen werden dabei bevorzugt nach dem sogenannten "Basislack/Klarlack"-Verfahren aufgebracht, d.h. es wird ein pigmentierter Basislack vorlackiert und nach kurzer Ablüftzeit ohne Einbrennschritt (Nass-in-Nass-Verfahren) mit Klarlack überlackiert. Anschließend werden Basislack und Klarlack zusammen eingebrannt. Besonders große Bedeutung hat das "Basislack/Klarlack"-Verfahren bei der Applikation von Automobil-Metalleffektlacken erlangt.

Aus wirtschaftlichen und ökologischen Gründen besteht ein Bedarf beim Auftragen solcher Mehrschichtlackierungen, insbesondere bei der Applikation der Basislackschicht, wässrige Beschichtungszusammensetzungen einzusetzen.

Die Beschichtungszusammensetzungen zur Herstellung dieser Basislackschichten sollten nach dem vorstehend genannten "Nass-in-Nass"-Verfahren zu verarbeiten sein, d.h. sie sollten nach einer möglichst kurzen Vortrocknungszeit ohne Einbrennschritt mit einer Klarlackschicht überlackiert werden können, ohne dass dabei Störungen im visuellen Erscheinungsbild wie zum Beispiel sogenannte Nadelstiche, Kocher, Stippen und/oder Verlaufsstörungen auftreten. Um solche Störungen zumindest zu minimieren, werden üblicherweise unter anderem geeignete Rheologiehilfsmittel in den aufzutragenden Beschichtungszusammensetzungen eingesetzt.

Bei Metalleffektlacken des Basislack/Klarlack-Typs sollten außerdem noch weitere Anforderungen erfüllt werden. Der Metalleffekt hängt entscheidend von der Orientierung der Metallpigmentteilchen in der Lackschicht ab. Ein im "Nass-in-Nass"-Verfahren zu verarbeitender Metalleffektbasislack muss demnach Lackfilme liefern, in denen die Metallpigmente nach der Applikation in einer günstigen räumlichen Orientierung vorliegen und in denen diese Orientierung schnell so fixiert wird, dass sie im Laufe des weiteren Lackierungsprozesses nicht gestört werden kann. Geeignete Kenngrößen zur Charakterisierung des Metalleffektes sind die Helligkeit des Farbtons, der Flop-Index sowie die Beurteilung der Wolkigkeit der resultierenden Lackierung.

Aus EP 0 877 063 A2 sind wässrige Beschichtungszusammensetzungen bekannt, die ein üblicherweise in wässrigen Zusammensetzungen eingesetztes Polyamid enthalten, welches sich aufgrund seines Einsatzzwecks in wässrigen Systemen durch eine vergleichsweise hohe Säure-Zahl von üblicherweise ≥30 auszeichnet. Wässrige Beschichtungszusammensetzungen, die solche üblicherweise in wässrigen Zusammensetzungen eingesetzten Polyamide mit vergleichsweise hoher Säure-Zahl aufweisen, sind ferner zudem aus WO 2009/100938 A1 und EP 2 457 961 A1 bekannt. Nachteilig an der Gegenwart eines solchen Polyamids als Rheologiehilfsmittel in wässrigen Beschichtungszusammensetzungen ist jedoch insbesondere das Auftreten von Stippen bei der Verarbeitung mittels des "Nass-in-Nass"-Verfahrens bzw. bei der Einarbeitung des Polyamids in die Beschichtungszusammensetzungen und/oder eine nicht ausreichende Lagerstabilität (Entmischung bzw. Phasenseparation) derartiger Beschichtungszusammensetzungen, insbesondere bei höheren Temperaturen wie beispielsweise Temperaturen ≥ 40°C.

Auch aus DE 40 28 386 A1 sind wässrige Beschichtungszusammensetzungen bekannt, die als alleiniges Rheologiehilfsmittel ein Polyamid enthalten.

Aus EP 1 153 989 A1 sind wässrige Beschichtungszusammensetzungen bekannt, die ein üblicherweise in wässrigen Beschichtungszusammensetzungen eingesetztes Polyamid mit einer Säure-Zahl ≥30 wie beispielsweise das kommerziell erhältliche Produkt Disparlon® AQ-600 aufweisen und zudem als weiteres Rheologiehilfsmittel ein Metallsilikat wie beispielsweise das kommerziell erhältliche Metallsilikat "Laponite® RD" enthalten. Nachteilig an der Gegenwart eines solchen Metallsilikats, insbesondere in Kombination mit einem üblicherweise in wässrigen Zusammensetzungen eingesetzten Polyamid mit einer Säure-Zahl >30, in wässrigen Beschichtungszusammensetzungen kann jedoch oftmals das Auftreten von Nadelstichen und/oder Kochern bei der Verarbeitung mittels des "Nass-in-Nass"-Verfahrens sein. Der Einsatz von solchen Metallsilikaten als alleiniges Rheologiehilfsmittel hat jedoch u.a. Nachteile hinsichtlich des Auftretens von Läufern und Kochern.

Der Einsatz von Polyamiden mit geringeren Säure-Zahlen per se als Rheologiehilfsmittel ist grundsätzlich bekannt, jedoch können solche Polyamide ausschließlich in lösemittel-basierten Beschichtungszusammensetzungen eingesetzt werden. Der Einsatz von solchen lösemittel-basierten Beschichtungszusammensetzungen mit hohen Anteilen an organischen Lösemitteln ist jedoch aus ökologischen Gründen unerwünscht.

Es besteht daher ein Bedarf an wässrigen Beschichtungszusammensetzungen, insbesondere Basislackzusammensetzungen, welche die vorstehend genannten Nachteile nicht aufweisen.

Eine Aufgabe der vorliegenden Erfindung ist es daher, eine wässrige Beschichtungszusammensetzung, insbesondere eine wässrige Basislackzusammensetzung, zur Verfügung zu stellen, welche Vorteile gegenüber den aus dem Stand der Technik bekannten Beschichtungszusammensetzungen aufweist. Insbesondere ist es eine Aufgabe der vorliegenden Erfindung, eine wässrige Beschichtungszusammensetzung, insbesondere eine wässrige Basislackzusammensetzung, zur Verfügung zu stellen, welche sich durch vorteilhafte Applikationseigenschaften auszeichnet, bei der aber gleichzeitig der zu erzielende Metalleffekt der Beschichtungszusammensetzung nicht negativ beeinflusst werden soll.

Diese Aufgabe wird gelöst durch die in den Patentansprüchen beanspruchten Gegenstände sowie den in der nachfolgenden Beschreibung beschriebenen bevorzugten Ausführungsformen dieser Gegenstände.

Ein erster Gegenstand der vorliegenden Erfindung ist daher eine wässrige Beschichtungszusammensetzung umfassend
wenigstens eine Mischung (M) aus wenigstens einem polymeren Harz (P1) und wenigstens einem davon verschiedenen polymeren Harz (P2), wobei
das polymere Harz (P1) ein Polyamid ist und
das polymere Harz (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol,
wenigstens ein Bindemittel (A) umfassend wenigstens ein polymeres Harz (A1), welches von den polymeren Harzen (P1) und (P2) verschieden ist, und gegebenenfalls wenigstens ein Vernetzungsmittel (A2), und
wenigstens ein Pigment (B)
zur zumindest teilweisen Beschichtung eines gegebenenfalls beschichteten Substrats mit einer Basislackschicht,
dadurch gekennzeichnet, dass das als polymeres Harz (P1) eingesetzte Polyamid eine Säure-Zahl <10 mg KOH pro g an Polyamid aufweist und
die Mischung (M) erhältlich ist durch Dispergieren des polymeren Harzes (P1) in Wasser oder einem wässrigen Medium in Gegenwart des polymeren Harzes (P2).

Vorzugsweise ist die erfindungsgemäße wässrige Beschichtungszusammensetzung daher eine wässrige Basislackzusammensetzung, d.h. eine Beschichtungszusammensetzung, die sich zur Herstellung einer wässrigen Basislackschicht eignet. Der Begriff "Basislack" ist dem Fachmann bekannt und beispielsweise definiert im Römpp Lexikon, Lacke und Druckfarben, Georg Thieme Verlag 1998.

Es wurde überraschend gefunden, dass sich die erfindungsgemäße wässrige Beschichtungszusammensetzung insbesondere im "Basislack/Klarlack"-Verfahren zum Aufbringen einer Basislackschicht auf ein gegebenenfalls beschichtetes Substrats eignet und deshalb als Basislackbeschichtungszusammensetzung eingesetzt werden kann.

Es wurde zudem überraschend gefunden, dass es die Gegenwart des polymeren Harzes (P2) ermöglicht, ein Polyamid als polymeres Harz (P1), welches eine Säure-Zahl <10 mg KOH pro g an Polyamid aufweist und welches daher üblicherweise ausschließlich in lösemittel-basierten Beschichtungszusammensetzungen eingesetzt werden kann, in wässrige Beschichtungszusammensetzungen einzuarbeiten. Insbesondere wurde überraschend gefunden, dass sich die Mischung (M) der polymeren Harze (P1) und (P2) bzw. das mittels (P2) in eine wässrige Zusammensetzung überführte Polyamid (P1) als Rheologiehilfsmittel in der erfindungsgemäßen wässrigen Beschichtungszusammensetzung eignet.

Es wurde ferner überraschend gefunden, dass es erfindungswesentlich ist, dass die erfindungsgemäß eingesetzte Mischung (M) erhältlich ist durch Dispergieren des polymeren Harzes (P1) in Wasser oder einem wässrigen Medium in Gegenwart des polymeren Harzes (P2).

Es wurde ferner überraschend gefunden, dass insbesondere durch die Gegenwart der in der Mischung (M) enthaltenen polymeren Harze (P1) und (P2) bzw. durch die Gegenwart des mittels (P2) in eine wässrige Phase überführten polymeren Harzes (P1) der Mischung (M) das Auftreten von Stippen, Nadelstichen, Kochern, Läufern und Verlaufsstörungen verhindert bzw. verbessert werden kann, wenn eine die Mischung (M) enthaltende Beschichtungszusammensetzung zur zumindest teilweisen Beschichtung eines gegebenenfalls beschichteten Substrats mit einer Basislackschicht eingesetzt wird. Dabei wurde zudem überraschend festgestellt, dass der Metalleffekt der jeweiligen Beschichtungszusammensetzung nicht negativ beeinflusst wird und sich die erfindungsgemäßen Beschichtungszusammensetzungen insbesondere durch gute Eigenschaften hinsichtlich der Beurteilung der Wolkigkeit der Lackierung auszeichnen. Zudem hat sich überraschenderweise gezeigt, dass sich die erfindungsgemäßen Beschichtungszusammensetzungen durch einen guten Auftragswirkungsgrad auszeichnen, wodurch im Vergleich zu üblicherweise eingesetzten Beschichtungszusammensetzungen bei vergleichbarem Festkörpergehalt ein Auftrag in höheren Schichtdicken erzielt werden kann. Zudem ermöglicht ein guter Auftragswirkungsgrad einen geringeren Materialverbrauch (geringerer Overspray) bzw. weniger Abfallprodukte. Ferner wurde überraschenderweise gefunden, dass sich die erfindungsgemäßen Beschichtungszusammensetzungen durch eine gute Lagerstabilität auch bei höheren Temperaturen wie beispielsweise Temperaturen ≥ 40°C über eine Dauer von 2 Wochen auszeichnen. Aus dem Stand der Technik bekannte übliche Beschichtungszusammensetzungen, in denen Polyamide mit einer Säure-Zahl ≥10 oder Metallsilikate wie zum Beispiel das kommerziell erhältliche Produkt Laponite® als Rheologiehilfsmittel eingesetzt werden, weisen hinsichtlich wenigstens einer dieser vorstehend genannten Eigenschaften Nachteile auf. Eine direkte separate Einarbeitung des polymeren Harzes (P1) (ohne vorherige Herstellung einer Mischung (M) aus (P1) und dem polymeren Harz (P2)) in wässrige Beschichtungszusammensetzungen ist nicht möglich, da es hierbei zur Stippenbildung kommt bzw. entsprechende Beschichtungszusammensetzungen keine ausreichende Lagerstabilität aufweisen.

Die Begriffe "Kocher", "Läufer", "Nadelstiche", "Flop", "Stippen", "Auftragswirkungsgrad" ("Festkörpernutzungsgrad"), "Rheologiehilfsmittel" ("Rheologisches Additiv") sowie "Verlaufsstörungen" bzw. "Verlauf" sind dem Fachmann bekannt und beispielsweise definiert im Römpp Lexikon, Lacke und Druckfarben, Georg Thieme Verlag 1998.

### Beschichtungszusammensetzung und darin enthaltene Mischung (M)

Vorzugsweise addieren sich die Anteile in Gew.-% der in der erfindungsgemäßen Beschichtungszusammensetzung enthaltenen Komponenten (P1) und (P2) (in Form der Mischung (M)), (A1), (B), Wasser sowie der gegebenenfalls vorhandenen nachstehend beschriebenen Komponenten (C) und/oder (D) und/oder (E) sowie gegebenenfalls vorhandener organischer Lösemittel und/oder gegebenenfalls vorhandener Komponente (A2) auf 100 Gew.-%, bezogen auf das Gesamtgewicht der Beschichtungszusammensetzung.

Der Begriff "umfassend" im Sinne der vorliegenden Erfindung im Zusammenhang mit der erfindungsgemäßen Beschichtungszusammensetzung hat in einer bevorzugten Ausführungsform die Bedeutung "bestehend aus". Dabei können hinsichtlich der erfindungsgemäßen Beschichtungszusammensetzung in dieser bevorzugten Ausführungsform eine oder mehrere der weiteren nachstehend genannten optional in der erfindungsgemäß eingesetzten Beschichtungszusammensetzung enthaltenen Komponenten in der Beschichtungszusammensetzung enthalten sein wie zum Beispiel - neben den Komponenten Wasser, (P1) und (P2) (in Form der Mischung (M)), (A1) und (B) - zudem gegebenenfalls (A2) und/oder (C) und/oder (D) und/oder (E) und/oder organische(s) Lösemittel. Alle Komponenten können dabei jeweils in ihren vorstehend und nachstehend genannten bevorzugten Ausführungsformen in der erfindungsgemäßen Beschichtungszusammensetzung enthalten sein.

Die erfindungsgemäße wässrige Beschichtungszusammensetzung enthält als flüssiges Verdünnungsmittel Wasser.

Unter dem Begriff "wässrig" im Zusammenhang mit der erfindungsgemäßen Beschichtungszusammensetzung werden vorzugsweise solche flüssigen Beschichtungszusammensetzungen verstanden, die - als flüssiges Verdünnungsmittel, d.h. als flüssiges Lösemittel und/oder Dispergiermittel - Wasser als Hauptkomponente enthalten. Gegebenenfalls können die erfindungsgemäßen Beschichtungszusammensetzungen jedoch organische Lösemittel in bestimmten Anteilen enthalten. Dem Fachmann ist der Begriff eines "organischen Lösemittels" bekannt. Dieser Begriff ist beispielsweise in der Richtlinie 1999/13/EG des Rates vom 11. März 1999 (Artikel §2, Punkt 18.) definiert (darin als "Lösungsmittel" bezeichnet). Als Beispiele für solche organischen Lösemittel seien (hetero)cyclische, (hetero)aliphatische oder (hetero)aromatische Kohlenwasserstoffe, ein- oder mehrwertige Alkohole, Ether, Ester, Ketone und Amide, wie z. B. N-Methylpyrrolidon, N-Ethylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Methylisobutylketon, Aceton, Isophoron oder Mischungen davon genannt.

Vorzugsweise beträgt der Anteil dieser organischen Lösemittel höchstens 40,0 Gew.-%, besonders bevorzugt höchstens 35,0 Gew.-%, ganz besonders bevorzugt höchstens 30,0 Gew.-%, insbesondere höchstens 25,0 Gew.-% oder höchstens 20,0 Gew.-% oder höchstens 15,0 Gew.-%, noch bevorzugter höchstens 10,0 Gew.-%, jeweils bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln. Insbesondere liegt der Anteil an organischen Lösemitteln in der erfindungsgemäßen Beschichtungszusammensetzung höchstens in einem Bereich von 10,0 Gew.-% bis 40,0 Gew.-%, bezogen auf den Gesamtanteil der in der erfindungsgemäßen Beschichtungszusammensetzung enthaltenen flüssigen Verdünnungsmitteln, d.h. flüssigen Lösemitteln und/oder Dispergiermitteln.

Vorzugsweise weist die erfindungsgemäße Beschichtungszusammensetzung einen nicht-flüchtigen Anteil im Bereich von 10 bis 50 Gew.-%, besonders bevorzugt im Bereich von 10 bis 45 Gew.-%, ganz besonders bevorzugt im Bereich von 10 bis 40 Gew.-%, bezogen auf das Gesamtgewicht der Beschichtungszusammensetzung auf.

Vorzugsweise ist die erfindungsgemäße Beschichtungszusammensetzung erhältlich durch die in dieser Reihenfolge aufeinanderfolgenden Schritte (1) und (2), nämlich
(1) Dispergieren des polymeren Harzes (P1) in Wasser oder einem wässrigen Medium in Gegenwart des polymeren Harzes (P2) sowie gegebenenfalls einer weiteren Komponente (C) und/oder gegebenenfalls organischen Lösemittel(n) unter Erhalt einer wässrigen Dispersion der Mischung (M) und
(2) Vermischen der nach Schritt (1) erhaltenen wässrigen Dispersion der Mischung (M) mit den weiteren zur Herstellung der Beschichtungszusammensetzung eingesetzten Komponenten, d.h. wenigstens mit den Komponenten (A1) und (B) sowie gegebenenfalls (A2), gegebenenfalls (D), gegebenenfalls (E) sowie gegebenenfalls weiterem Wasser und/oder organischer Lösemittel.

Das Dispergieren gemäß Schritt (1) erfolgt dabei vorzugsweise bei einer Temperatur im Bereich von 15 bis 30°C über eine Dauer von 10 bis 60 Minuten, vorzugsweise über eine Dauer von 10 bis 30 Minuten. Das Dispergieren kann mittels handelsüblicher Geräte, insbesondere Dissolvern erfolgen wie beispielsweise mit dem Gerät "Dispermat® LC30" der Firma VWA-Getzmann, Deutschland. Solche Geräte weisen üblicherweise eine in einem Rührbehälter befindliche Rührscheibe (Zahnscheibe) auf. Vorzugsweise liegt das relative Größenverhältnis des Durchmessers der Rührscheibe zum Durchmesser des Rührbehälters dabei in einem Bereich von 1:1,1 bis 1:2,5. Vorzugsweise liegt die Umfangsgeschwindigkeit der Rührscheibe bei Durchführen des Schritts (1) in einem Bereich von 15 bis 25 m/s, besonders bevorzugt von 15 bis 20 m/s. Die Füllhöhe des Rührbehälters liegt vorzugsweise in einem Bereich von 60 bis 90 %, bezogen auf die Gesamthöhe des Rührbehälters. Vorzugsweise ist der Durchmesser der Rührscheibe größer als der Abstand der Rührscheibe zum Boden des Rührbehälters. Das Dispergieren gemäß Schritt (1) erfolgt vorzugsweise so, dass sich dabei ein torusartiges Strömungsbild einstellt, d.h. ein sogenannter Doughnut-Effekt (Donut-Effekt) beobachtet wird. Dieser Begriff ist dem Fachmann bekannt.

Die Mischung (M) wird somit vorzugsweise vorab in Form einer wässrigen Dispersion dieser Mischung (M) durch Dispergieren des polymeren Harzes (P1) in Wasser oder einem wässrigen Medium in Gegenwart des polymeren Harzes (P2) hergestellt. Diese so hergestellte wässrige Dispersion der Mischung (M) wird vorzugsweise als eine Komponente zur Herstellung der erfindungsgemäßen Beschichtungszusammensetzung eingesetzt.

Zur Herstellung der Mischung (M) kann neben (P1), (P2) und Wasser sowie gegebenenfalls organischem Lösemittel gemäß Schritt (1) wie vorstehend beschrieben wenigstens eine weitere Komponente (C) eingesetzt werden.

Als Komponente (C) eignet sich vorzugsweise ein Emulgator, vorzugsweise ein solcher Emulgator, der vom polymeren Harz (P2) verschieden ist. Zudem ist die optionale Komponente (C) auch vom polymeren Harz (P1) verschieden. Es können auch zwei oder mehr voneinander verschiedene Komponenten (C) eingesetzt werden.

Jeder dem Fachmann bekannte übliche Emulgator eignet sich als Komponente (C). Vorzugsweise ist Komponente (C) ausgewählt aus der Gruppe bestehend aus Lecithinen und C₁₂-C₂₄-Fettalkoholpolyglykolethern. Die eingesetzten Polyglykolether können dabei vollständig oder partiell mit C₁₂-C₂₄-Fettalkoholen verethert sein. Ein geeignetes Lecithin, d.h. ein geeignetes Phospholipid, ist beispielsweise Lipotin® A, welches kommerziell erhältlich ist. Weiterhin geeignet ist Sojalecithin. Geeignete C₁₂-C₂₄-Fettalkoholpolyglykolether sind beispielsweise die kommerziell erhältlichen Produkte Lutensol® ON 60 und Lutensol® XP 70.

Wird zur Herstellung der Mischung (M) wenigstens eine weitere Komponente (C) eingesetzt, so liegt das relative Gewichtsverhältnis des als polymeren Harzes (P2) eingesetzten Polyesters zu der Komponente (C) vorzugsweise im Bereich von 50:1 bis 1,5:1, besonders bevorzugt im Bereich von 35:1 bis 1,75:1, ganz besonders bevorzugt im Bereich von 30:1 bis 2:1, insbesondere bevorzugt im Bereich von 10:1 bis 4:1.

Vorzugsweise liegt die wenigstens eine weitere Komponente (C) in der erfindungsgemäßen Beschichtungszusammensetzung in einer Menge von 0,05 bis 5 Gew.-%, besonders bevorzugt von 0,05 bis 3 Gew.-%, jeweils bezogen auf das Gesamtgewicht der Beschichtungszusammensetzung, vor.

Vorzugsweise ist die Mischung (M) aus dem wenigstens einen polymeren Harz (P1) und dem wenigstens einen davon verschiedenen polymeren Harz (P2) in der erfindungsgemäßen Beschichtungszusammensetzung in einer Menge in einem Bereich von 0,5 bis 15 Gew.-%, besonders bevorzugt von 0,75 bis 10 Gew.-%, ganz besonders bevorzugt von 1,0 bis 8,5 Gew.-%, insbesondere bevorzugt von 1,5 bis 7,5 Gew.-%, am meisten bevorzugt von 1,0 bis 5,0 Gew.-% jeweils bezogen auf das Gesamtgewicht der Beschichtungszusammensetzung, vorhanden.

Die erfindungsgemäße Beschichtungszusammensetzung enthält das innerhalb der Mischung (M) als polymeres Harz (P1) eingesetzte Polyamid, bezogen auf dessen Festkörper, vorzugsweise in einer Menge in einem Bereich von 0,05 bis 5 Gew.-%, besonders bevorzugt in einer Menge in einem Bereich von 0,1 bis 4,5 Gew.-%, ganz besonders bevorzugt in einer Menge in einem Bereich von 0,15 bis 4 Gew.-%, noch bevorzugter in einer Menge in einem Bereich von 0,2 bis 3,5 Gew.-%, insbesondere in einer Menge in einem Bereich von 0,25 bis 3 Gew.-%, jeweils bezogen auf das Gesamtgewicht der Beschichtungszusammensetzung. Die Menge des Polyamids in Gew.-% in der erfindungsgemäßen Basislackzusammensetzung bezieht sich dabei jeweils auf das Polyamid per se, d.h. auf dessen Festkörper.

Die erfindungsgemäße Beschichtungszusammensetzung enthält den innerhalb der Mischung (M) als polymeres Harz (P2) eingesetzten Polyester, bezogen auf dessen Festkörper, vorzugsweise in einer Menge in einem Bereich von 0,4 bis 10 Gew.-%, besonders bevorzugt in einer Menge in einem Bereich von 0,6 bis 9 Gew.-%, ganz besonders bevorzugt in einer Menge in einem Bereich von 0,8 bis 8 Gew.-%, noch bevorzugter in einer Menge in einem Bereich von 1 bis 6 Gew.-%, insbesondere in einer Menge in einem Bereich von 1,5 bis 5 Gew.-%, jeweils bezogen auf das Gesamtgewicht der Beschichtungszusammensetzung. Die Menge des Polyesters in Gew.-% in der erfindungsgemäßen Basislackzusammensetzung bezieht sich dabei jeweils auf den Polyester per se, d.h. auf dessen Festkörper.

Vorzugsweise liegt das relative Gewichtsverhältnis der polymeren Harze (P2) und (P1) zueinander, jeweils bezogen auf deren Festkörpergehalt, in der Mischung (M) bzw. in der erfindungsgemäßen Beschichtungszusammensetzung in einem Bereich von 15:1 bis 1:1, besonders bevorzugt in einem Bereich von 12,5 bis 1,1:1, ganz besonders bevorzugt in einem Bereich von 10:1 bis 1,5:1, noch bevorzugter in einem Bereich von 8:1 bis 1,5:1, insbesondere in einem Bereich von 7:1 bis 1,5:1, am meisten bevorzugt in einem Bereich von 6,5:1 bis 1,5:1.

Vorzugsweise ist das als polymeres Harz (P1) eingesetzte Polyamid in der erfindungsgemäß eingesetzten Mischung (M) in einer Menge in einem Bereich von 0,1 bis 15 Gew.-%, besonders bevorzugt von 0,2 bis 12,5 Gew.-%, ganz besonders bevorzugt von 0,5 bis 10 Gew.-%, noch bevorzugter von 0,75 bis 9 Gew.%, am meisten bevorzugt von 1 bis 8 Gew.-% oder von 1 bis 7 Gew.-%, jeweils bezogen auf das Gesamtgewicht der erfindungsgemäß eingesetzten Mischung (M) vorhanden.

Vorzugsweise ist der als polymeres Harz (P2) eingesetzte Polyester in der erfindungsgemäß eingesetzten Mischung (M) in einer Menge in einem Bereich von 2,5 bis 25 Gew.-%, besonders bevorzugt von 3,5 bis 22,5 Gew.-%, ganz besonders bevorzugt von 4,5 bis 20 Gew.-%, noch bevorzugter von 5 bis 19 Gew.%, am meisten bevorzugt von 6 bis 18 Gew.-%, jeweils bezogen auf das Gesamtgewicht der erfindungsgemäß eingesetzten Mischung (M) vorhanden.

### Polymeres Harz (P1)

Das als polymeres Harz (P1) eingesetzte Polyamid weist eine Säure-Zahl <10 mg KOH pro g an Polyamid auf. Vorzugsweise weist das als polymeres Harz (P1) eingesetzte Polyamid eine Säure-Zahl <9 mg KOH pro g an Polyamid, besonders bevorzugt <8 mg KOH pro g an Polyamid, ganz besonders bevorzugt ≤7 mg KOH pro g an Polyamid, auf. Vorzugsweise weist das polymere Harz (P1) eine Säure-Zahl in einem Bereich von 0 bis <10,0 mg KOH pro g an Polyamid, besonders bevorzugt in einem Bereich von 0,1 bis <10,0 mg KOH pro g an Polyamid, ganz besonders bevorzugt in einem Bereich von 0,1 bis <9,0 mg KOH pro g an Polyamid, am meisten bevorzugt in einem Bereich von 0,1 bis 8,0 mg KOH pro g an Polyamid, auf. In einer weiteren bevorzugten Ausführungsform weist das polymere Harz (P1) eine Säure-Zahl in einem Bereich von 0,1 bis <10 mg KOH pro g an Polyamid, besonders bevorzugt in einem Bereich von 0,1 bis 9 mg oder von 0,5 bis 9 mg KOH pro g an Polyamid, ganz besonders bevorzugt in einem Bereich von 0,1 bis 8 mg oder von 0,5 bis 8 mg KOH pro g an Polyamid, insbesondere bevorzugt in einem Bereich von 0,1 bis ≤7 mg oder von 0,5 bis ≤7 mg KOH pro g an Polyamid auf. Die Säure-Zahl wird gemäß der nachstehend beschriebenen Methode ermittelt.

Jedes dem Fachmann bekannte übliche Polyamid kann als polymeres Harz (P1) eingesetzt werden, solange dieses Polyamid eine Säure-Zahl <10 mg KOH pro g an Polyamid aufweist. Bei dem entsprechenden Polyamid kann es sich dabei um ein Polyamid Homo- oder Copolymer handeln. Es kann auch eine Mischung aus zwei oder mehr voneinander verschiedenen Polyamiden als polymere Harz-Komponente (P1) eingesetzt werden.

Vorzugsweise weist das als polymeres Harz (P1) eingesetzte Polyamid eine Amin-Zahl <9 mg KOH pro g an Polyamid, besonders bevorzugt <8 mg KOH pro g an Polyamid, ganz besonders bevorzugt ≤7 mg KOH pro g an Polyamid, auf. Vorzugsweise weist das als polymeres Harz (P1) eingesetzte Polyamid eine Amin-Zahl in einem Bereich von 0,1 bis <10 mg KOH pro g an Polyamid, besonders bevorzugt in einem Bereich von 0,1 bis 9 mg oder von 0,5 bis 9 mg KOH pro g an Polyamid, ganz besonders bevorzugt in einem Bereich von 0,1 bis 8 mg oder von 0,5 bis 8 mg KOH pro g an Polyamid, insbesondere bevorzugt in einem Bereich von 0,1 bis ≤7 mg oder von 0,5 bis ≤7 mg KOH pro g an Polyamid auf. Dem Fachmann sind Bestimmungsmetoden zur Ermittlung der Amin-Zahl bekannt. Vorzugsweise wird die Amin-Zahl gemäß DIN 16945 (Datum: März 1989) bestimmt.

Vorzugsweise weist das als polymeres Harz (P1) eingesetzte Polyamid ein zahlenmittleres Molekulargewicht in einem Bereich von 100 g/mol bis 5 000 g/mol, besonders bevorzugt in einem Bereich von 150 g/mol bis 4 000 g/mol, ganz besonders bevorzugt in einem Bereich von 200 g/mol bis 3 000 g/mol, insbesondere bevorzugt in einem Bereich von 250 g/mol bis 2 000 g/mol, auf, am meisten bevorzugt in einem Bereich von 400 g/mol bis 1 500 g/mol Dem Fachmann sind Methoden zur Bestimmung des zahlenmittleren Molekulargewichts bekannt. Die Bestimmung des zahlenmittleren Molekulargewichts erfolgt gemäß der nachstehenden Methode.

Vorzugsweise ist das erfindungsgemäß als polymeres Harz (P1) eingesetzte Polyamid erhältlich durch Umsetzung wenigstens einer Polycarbonsäure (C1a) mit wenigstens einem Polyamin (C1b), gegebenenfalls in Gegenwart wenigstens einer Monocarbonsäure, insbesondere wenigstens einer C₁₂-C₂₄-Monocarbonsäure, und/oder wenigstens eines Monoamins wie beispielsweis eines C₂-C₁₂-Monoamins.

Vorzugsweise ist das erfindungsgemäß als polymeres Harz (P1) eingesetzte Polyamid erhältlich durch Umsetzung wenigstens einer Polycarbonsäure (C1a) ausgewählt aus der Gruppe bestehend aus aliphatischen C₃-C₂₂-Dicarbonsäuren, Polymeren wie Dimeren und Trimeren von aliphatischen C₁₂-C₂₄-Monocarbonsäuren, und Mischungen davon, mit wenigstens einem aliphatischen C₂-C₁₂-Diamin (C1b).

Vorzugsweise wird die Umsetzung wenigstens einer Polycarbonsäure (C1a) und wenigstens eines Polyamins (C1b) in einem vorzugsweise organischen Lösemittel durchgeführt.

Vorzugsweise ist das erfindungsgemäß als polymeres Harz (P1) eingesetzte Polyamid erhältlich durch Umsetzung wenigstens einer Polycarbonsäure (C1a), vorzugsweise wenigstens einer Polycarbonsäure ausgewählt aus der Gruppe bestehend aus aliphatischen C₃-C₂₂-Dicarbonsäuren, Polymeren wie Dimeren und Trimeren von aliphatischen C₁₂-C₂₄-Monocarbonsäuren, und Mischungen davon, mit wenigstens einem Polyamin (C1b), vorzugsweise mit wenigstens einem aliphatischen C₂-C₁₂-Diamin (C1b), wobei das dann erhaltene Umsetzungsprodukt gegebenenfalls im Anschluss mit wenigstens einem vorzugsweise basischen Neutralisationsmittel kontaktiert wird. Dabei kann die Säure-Zahl des erhaltenen Umsetzungsprodukts durch Reaktion freier Carboxyl-Gruppen mit dem Neutralisationsmittel eingestellt werden, so dass eine Säure-Zahl < 10 mg KOH/g Umsetzungsprodukt erzielt werden kann.

Das erfindungsgemäß als polymeres Harz (P1) eingesetzte Polyamid ist kommerziell erhältlich: beispielhaft seien die kommerziell erhältlichen Produkte Thixatrol® P220X-MF, Disparlon® A6900-20X, Disparlon® A650-20X, Disparlon® A670-20M, Disparlon F-9030, Disparlon® 6900-20X, Luvotix® AB, Luvotix® PA 20 XA, Luvotix® R-RF, Luvotix® HT-SF, Luvotix® HAT 400, Luvotix® HT, Troythix® 250 XF, Byk-430, und Byk-431 genannt.

### Polymeres Harz (P2)

Jeder dem Fachmann bekannte übliche Polyester kann als polymeres Harz (P2) eingesetzt werden, solange dieser Polyester mindestens erhältlich ist durch Umsetzung wenigstens einer polymerisierten aliphatischen C₁₂-C₂₄-Monocarbonsäure mit wenigstens einem Diol und/oder Polyol. Bei dem entsprechenden Polyester kann es sich dabei um ein Polyester Homo- oder Copolymer handeln. Es kann auch eine Mischung aus zwei oder mehr voneinander verschiedenen Polyestern als polymere Harz-Komponente (P2) eingesetzt werden. Unter dem Begriff "mindestens erhältlich" wird diesbezüglich im Sinne der vorliegenden Erfindung verstanden, dass neben der wenigstens einer polymerisierten aliphatischen C₁₂-C₂₄-Monocarbonsäure und dem wenigstens einen Diol und/oder Polyol gegebenenfalls noch weitere Ausgangskomponenten zur Herstellung des Polyesters (P2) eingesetzt werden können wie beispielsweise wenigstens eine aliphatische C₁₂-C₂₄-Monocarbonsäure und/oder wie wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂- Tricarbonsäuren.

Das polymere Harz (P2) dient vorzugsweise als Emulgator, um das polymere Harz (P1) in eine wässrige Phase zu überführen.

Vorzugsweise weist der als polymeres Harz (P2) eingesetzte Polyester eine Säure-Zahl in einem Bereich von 20 bis 50 mg KOH pro g an Polyester auf. Besonders bevorzugt weist der als polymeres Harz (P2) eingesetzte Polyester eine Säure-Zahl in einem Bereich von 20 bis 45 mg KOH pro g an Polyester, ganz besonders bevorzugt in einem Bereich von 25 bis 40 mg KOH pro g an Polyester, insbesondere bevorzugt in einem Bereich von 30 bis 38 mg KOH pro g an Polyester, auf. Dem Fachmann sind Bestimmungsmetoden zur Ermittlung der Säure-Zahl bekannt. Die Bestimmung der Säure-Zahl erfolgt gemäß der nachstehend beschriebenen Methode.

Vorzugsweise weist der als polymeres Harz (P2) eingesetzte Polyester eine OH-Zahl (Hydroxyl-Zahl) in einem Bereich von 20 bis 300 mg KOH pro g an Polyester auf. Besonders bevorzugt weist der als polymeres Harz (P2) eingesetzte Polyester eine OH-Zahl in einem Bereich von 25 bis 250 mg KOH pro g an Polyester, ganz besonders bevorzugt in einem Bereich von 25 bis 200 mg KOH pro g an Polyester, insbesondere bevorzugt in einem Bereich von 25 bis 150 mg KOH pro g an Polyester oder in einem Bereich von 30 bis 120 mg KOH pro g an Polyester, auf. Dem Fachmann sind Bestimmungsmetoden zur Ermittlung der OH-Zahl bekannt. Die Bestimmung der OH-Zahl erfolgt gemäß der nachstehend beschriebenen Methode.

In einer anderen bevorzugten Ausführungsform weist der als polymeres Harz (P2) eingesetzte Polyester eine OH-Zahl von höchstens 300 mg KOH, besonders bevorzugt von höchstens 250 mg KOH, ganz besonders bevorzugt von höchstens 200 mg KOH, noch bevorzugter von höchstens 150 mg KOH, insbesondere bevorzugt von höchstens 120 mg KOH, jeweils pro g an Polyester auf.

Vorzugsweise weist der als polymeres Harz (P2) eingesetzte Polyester
eine Säure-Zahl in einem Bereich von 20 bis 50 mg KOH pro g an Polyester, besonders bevorzugt in einem Bereich von 20 bis 45 mg KOH pro g an Polyester, ganz besonders bevorzugt in einem Bereich von 25 bis 40 mg KOH pro g an Polyester, insbesondere bevorzugt in einem Bereich von 30 bis 38 mg KOH pro g an Polyester, und/oder
eine Hydroxyl-Zahl in einem Bereich von 20 bis 300 mg KOH pro g an Polyester, besonders bevorzugt in einem Bereich von 25 bis 250 mg KOH pro g an Polyester, ganz besonders bevorzugt in einem Bereich von 25 bis 200 mg KOH pro g an Polyester, insbesondere bevorzugt in einem Bereich von 25 bis 150 mg KOH pro g an Polyester oder in einem Bereich von 30 bis 120 mg KOH pro g an Polyester,
auf.

Vorzugsweise weist der als polymeres Harz (P2) eingesetzte Polyester ein zahlenmittleres Molekulargewicht in einem Bereich von 500 g/mol bis 100 000 g/mol, besonders bevorzugt in einem Bereich von 700 g/mol bis 90 000 g/mol, ganz besonders bevorzugt in einem Bereich von 1 000 g/mol bis 80 000 g/mol, insbesondere bevorzugt in einem Bereich von 1 000 g/mol bis 60 000 g/mol oder in einem Bereich von 2 000 g/mol bis 60 000 g/mol oder in einem Bereich von 2 000 g/mol bis 50 000 g/mol, am meisten bevorzugt in einem Bereich von 2 000 g/mol bis 10 000 g/mol oder in einem Bereich von 2 000 g/mol bis 6 000 g/mol, auf. Dem Fachmann sind Methoden zur Bestimmung des zahlenmittleren Molekulargewichts bekannt. Die Bestimmung des zahlenmittleren Molekulargewichts erfolgt gemäß der nachstehenden Methode.

Der erfindungsgemäß als polymeres Harz (P2) eingesetzte Polyester ist mindestens erhältlich durch Umsetzung wenigstens einer polymerisierten aliphatischen C₁₂-C₂₄-Monocarbonsäure mit wenigstens einem Diol und/oder Polyol. Dabei können jeweils nicht nur die freien Säuren, sondern zudem entsprechende geeignete Derivate wie entsprechende Ester und/oder Anhydride sowie entsprechende Salze eingesetzt werden.

Unter dem Begriff "polymerisierte aliphatische C₁₂-C₂₄-Monocarbonsäure" wird im Sinne der vorliegenden Erfindung vorzugsweise ein Polymer, insbesondere ein Dimer und/oder Trimer einer aliphatischen C₁₂-C₂₄-Monocarbonsäure verstanden. Dieser Begriff ist dem Fachmann bekannt.

Dem Fachmann sind zudem Herstellungsverfahren zur Bereitstellung von Polymeren, insbesondere Dimeren und Trimeren, von aliphatischen C₁₂-C₂₄-Monocarbonsäuren, d.h. zur Bereitstellung von polymerisierten aliphatischen C₁₂-C₂₄-Monocarbonsäuren, wie beispielsweise dimerisierten, trimerisierten und/oder höher polymerisierten, insbesondere dimerisierten und/oder trimerisierten, aliphatischen C₁₂-C₂₄-Monocarbonsäuren bekannt, beispielsweise aus DE 25 06 211 A1, US 2,793,219 A und US 2,955,121 A. Die polymerisierten aliphatischen C₁₄-C₂₂-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Als Ausgangsmaterial zur Herstellung solcher polymerisierter aliphatischer C₁₂-C₂₄-Monocarbonsäuren werden wenigstens einfach ungesättigte aliphatische C₁₂-C₂₄-Monocarbonsäuren eingesetzt. Die erhaltenen polymerisierten wie dimerisierten und trimerisierten aliphatischen C₁₂-C₂₄-Monocarbonsäuren können jeweils mittels Destillation voneinander und zudem jeweils von höherwertigen Polymerisationsprodukten abgetrennt werden und gegebenenfalls weiteren Umsetzungsreaktionen wie beispielsweise Hydrierungen unterworfen werden.

Vorzugsweise ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte, insbesondere wenigstens eine dimerisierte, C₁₂-C₂₄-Monocarbonsäure.

Polymerisierte, insbesondere dimerisierte und trimerisierte C₁₂-C₂₄-Monocarbonsäuren sind kommerziell erhältlich. Beispiel für handelsübliche dimerisierte Fettsäuren sind die Produkte Empol 1003, Empol 1005, Empol 1008, Empol 1012, Empol 1016, Empol 1026, Empol 1028,Empol 1061, Empol 1062, Pripol 1006, Pripol 1009, Pripol 1012, Pripol 1013, Pripol 1017, Pripol 1022, Pripol 1025, Pripol 1027 der Firma Croda und für kommerziell erhältliche trimerisierte Fettsäuren die Produkte Empol 1043 von BASF und Pripol 1040 von Croda.

Unter dem Begriff "aliphatische C₁₂-C₂₄-Monocarbonsäure" wird im Sinne der vorliegenden Erfindung vorzugsweise eine gesättigte oder ungesättigte, vorzugsweise ungesättigte, aliphatische C₁₂-C₂₄-Monocarbonsäure mit insgesamt 12-24, d.h. 12, 13, 14, 15, 16, 17, 18, 19, 20, 21, 22, 23 oder 24 Kohlenstoffatomen, vorzugsweise eine aliphatische C₁₄-C₂₂-Monocarbonsäure mit insgesamt 14-22, d.h. 14, 15, 16, 17, 18, 19, 20, 21 oder 22 Kohlenstoffatomen, oder eine aliphatische C₁₆-C₂₀-Monocarbonsäure mit insgesamt 16-20, d.h. 16, 17, 18, 19 oder 20 Kohlenstoffatomen, verstanden, die jeweils genau eine -C(=O)-OH-Gruppe aufweist, d.h. eine aliphatische C₁₂-C₂₄-Monocarbonsäure, die neben dieser einen -C(=O)-OH-Gruppe einen C₁₁-C₂₃-aliphatischen Rest mit insgesamt 11-23, d.h. 11, 12, 13, 14, 15, 16, 17, 18, 19, 20, 21, 22 oder 23 Kohlenstoffatomen, vorzugsweise einen C₁₃-C₂₁-aliphatischen Rest mit insgesamt 13-21, d.h. 13, 14, 15, 16, 17, 18, 19, 20 oder 21 Kohlenstoffatomen oder einen C₁₅-C₁₉-aliphatischen Rest mit insgesamt 15-19, d.h. 15, 16, 17, 18 oder 19 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatische C₁₂-C₂₄-Monocarbonsäure können natürliche oder synthetisch erzeugte Fettsäuren sein. Die aliphatischen C₁₂-C₂₄-Monocarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind aliphatische C₁₂-C₂₄-Monocarbonsäure ausgewählt aus der Gruppe bestehend aus Myristinsäure, Pentadecansäure, Palmitinsäure, Margarinsäure, Stearinsäure, Nonadecansäure, Arachinsäure, Henicosansäure, Docosansäure, Myristoleinsäure, Palmitoleinsäure, Petroselinsäure, Ölsäure, Elaidinsäure, Vaccensäure, Gadoleinsäure, Icosensäure, Cetoleinsäure, Erucasäure, Linolsäure, Linolensäure, Calendulasäure, Punicinsäure, Elaeostearinsäure, Arachidonsäure, Timnodonsäure, Clupanodonsäure und Cervonsäure sowie Ricinolsäure. Vorzugsweise sind aliphatische C₁₆-C₂₀-Monocarbonsäuren ausgewählt aus der Gruppe bestehend aus Palmitinsäure, Margarinsäure, Stearinsäure, Nonadecansäure, Arachinsäure, Palmitoleinsäure, Petroselinsäure, Ölsäure, Elaidinsäure, Vaccensäure, Gadoleinsäure, Icosensäure, Linolsäure, Linolensäure, Calendulasäure, Punicinsäure, Elaeostearinsäure, Arachidonsäure und Timnodonsäure sowie Ricinolsäure. Vorzugsweise sind aliphatische C₁₈-Monocarbonsäure ausgewählt aus der Gruppe bestehend aus Stearinsäure, Petroselinsäure, Ölsäure, Elaidinsäure, Vaccensäure, Linolsäure, Linolensäure, Calendulasäure, Punicinsäure und Elaeostearinsäure sowie Ricinolsäure, insbesondere ausgewählt aus der Gruppe bestehend aus Stearinsäure, Ölsäure, Linolsäure und Linolensäure sowie Ricinolsäure, am meisten bevorzugt ausgewählt aus der Gruppe bestehend aus Ölsäure, Linolsäure und Linolensäure sowie Ricinolsäure.

Vorzugsweise ist der als polymeres Harz (P2) eingesetzte Polyester mindestens erhältlich durch Umsetzung wenigstens einer aliphatischen polymerisierten, vorzugsweise wenigstens einer dimerisierten und/oder trimerisierten, aliphatischen C₁₂-C₂₄-Monocarbonsäure und gegebenenfalls wenigstens einer aliphatischen C₁₂-C₂₄-Monocarbonsäure mit wenigstens einem C₂-C₂₀-Polyol und/oder C₂-C₂₀-Diol.

Vorzugsweise liegen die aus der wenigstens einen zur Herstellung des als polymeren Harzes (P2) eingesetzten Polyesters eingesetzten polymerisierte aliphatische C₁₂-C₂₄-Monocarbonsäure erhältlichen Struktureinheiten in dem Polyester in einer Menge in einem Bereich von 10 bis 80 mol-%, vorzugsweise 10 bis 60 mol-%, besonders bevorzugt 10 bis 40 mol-%, bezogen auf das Gesamtgewicht des Polyesters, vor. Besonders bevorzugt ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte C₁₂-C₂₄-Monocarbonsäure und die daraus erhältlichen Struktureinheiten liegen in dem Polyester in einer Menge in einem Bereich von 10 bis 40 mol-%, bezogen auf das Gesamtgewicht des Polyesters, vor. Einem Fachmann ist dabei klar, dass die eingesetzte polymerisierte aliphatische C₁₂-C₂₄-Monocarbonsäure dabei nicht vollständig in den Polyester integriert wird, sondern es bei der Reaktion des wenigstens einen Polyols und/oder Diols mit der wenigstens einen polymerisierten aliphatischen C₁₂-C₂₄-Monocarbonsäure erst unter Wasserabspaltung durch Ausbildung von Esterbindungen zum Aufbau der in dem Polyester vorhandenen Struktureinheiten kommt. Besonders bevorzugt ist die wenigstens eine zur Herstellung des als polymeren Harzes (P2) eingesetzten Polyesters eingesetzte polymerisierte aliphatische C₁₂-C₂₄-Monocarbonsäure eine dimerisierte und/oder trimerisierte C₁₂-C₂₄-Monocarbonsäure und die daraus erhältliche Struktureinheit liegt in dem Polyester in einer Menge in einem Bereich von 12 bis 38 mol-%, ganz besonders bevorzugt in einem Bereich von 14 bis 36 mol-% oder in einem Bereich von 16 bis 34 mol-% oder in einem Bereich von 18 bis 32 mol-% oder in einem Bereich von 20 bis 30 mol-% oder in einem Bereich von 22 bis 28 mol-%, insbesondere bevorzugt in einem Bereich von 23 bis 26 mol-%,jeweils bezogen auf das Gesamtgewicht des Polyesters, vor.

Unter dem Begriff "Polyol" wird im Sinne der vorliegenden Erfindung vorzugsweise eine Komponente verstanden, welche wenigstens drei vorzugsweise primäre Hydroxyl-Gruppen aufweist. Insgesamt kann ein Polyol jedoch vorzugsweise bis zu einschließlich 10 Hydroxyl-Gruppen aufweisen, d.h. zusätzlich zu den wenigstens zwei primären Hydroxyl-Gruppen noch bis zu einschließlich 8 weitere, Hydroxyl-Gruppen enthalten. Von dem Begriff "Polyol" sind somit insbesondere Triole umfasst. Ein "Polyol" im Sinne der vorliegenden Erfindung kann ein (hetero)aliphatisches, (hetero)cycloaliphatisches oder (hetero)aromatisches Polyol sein. Vorzugsweise wird als Polyol ein aliphatisches vorzugsweise gesättigtes Polyol eingesetzt. Vorzugsweise ist das Polyol ein Triol. Vorzugsweise weisen die erfindungsgemäß eingesetzten Polyole 2 bis 20, besonders bevorzugt 2 bis 12, Kohlenstoffatome pro Molekül auf, d.h. es handelt sich vorzugsweise um C₂-C₂₀-Polyole, besonders bevorzugt um C₂-C₁₂-Polyole. Das Polyol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann.

Unter dem Begriff "Diol" wird im Sinne der vorliegenden Erfindung vorzugsweise eine Komponente verstanden, welche zwei vorzugsweise primäre Hydroxyl-Gruppen aufweist. Ein "Diol" im Sinne der vorliegenden Erfindung kann ein (hetero)aliphatisches, (hetero)cycloaliphatisches oder (hetero)aromatisches Diol sein. Vorzugsweise wird als Diol ein aliphatisches vorzugsweise gesättigtes Diol eingesetzt. Vorzugsweise weisen die erfindungsgemäß eingesetzten Diole 2 bis 20, besonders bevorzugt 2 bis 12, Kohlenstoffatome pro Molekül auf, d.h. es handelt sich vorzugsweise um C₂-C₂₀- Diole, besonders bevorzugt um C₂-C₁₂- Diole. Das Diol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann.

Besonders bevorzugt ist das zur Herstellung des erfindungsgemäß als polymeren Harzes (P2) eingesetzten Polyesters eingesetzten Diols und/oder Polyols ausgewählt aus der Gruppe bestehend aus aliphatischen C₂-C₂₀-Polyolen und/oder aliphatischen C₂-C₂₀-Diolen. Ganz besonders bevorzugt ist das zur Herstellung des erfindungsgemäß als polymeren Harzes (P2) eingesetzten Polyesters eingesetzten Diols ausgewählt aus der Gruppe bestehend aus aliphatischen C₂-C₁₂-Diolen.

Unter dem Begriff "aliphatisches C₂-C₂₀-Polyol" bzw. "aliphatisches C₂-C₂₀-Diol" wird im Sinne der vorliegenden Erfindung vorzugsweise ein gesättigtes oder ungesättigtes, vorzugsweise ein gesättigtes, aliphatisches C₂-C₂₀-Polyol bzw. C₂-C₂₀-Diol mit insgesamt 2-20, d.h. 2, 3, 4, 5, 6, 7, 8, 9, 10, 11, 12, 13, 14, 15, 16, 17, 18, 19, oder 20, Kohlenstoffatomen, vorzugsweise ein aliphatisches C₂-C₁₂-Polyol bzw. aliphatisches C₂-C₁₂-Diol mit insgesamt 2-12, d.h. 2, 3, 4, 5, 6, 7, 8, 9, 10, 11 oder 12 Kohlenstoffatomen, verstanden, das jeweils genau zwei vorzugsweise endständige - OH-Gruppen aufweist. Der Ausdruck "aliphatisch" umfasst dabei vorzugsweise acyclische gesättigte oder ungesättigte, vorzugsweise gesättigte, verzweigte oder unverzweigte aliphatische Reste. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Das aliphatische C₂-C₂₀-Polyol bzw. C₂-C₂₀-Diol kann gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind die aliphatischen C₂-C₂₀-Polyole ausgewählt aus der Gruppe bestehend aus Ethylenglykol, Propylenglykol (1,2-Propandiol), Trimethylenglykol (1,3-Propandiol), 1,4-Dihydroxybutan (1,4-Butandiol), 1,5-Dihydroxypentan, 1,6-Dihydroxyhexan (1,6-Hexandiol), Neopentylgylkol, und 1,1,1-Trimethylolpropan (TMP). Vorzugsweise sind die aliphatischen C₂-C₂₀-Diole ausgewählt aus der Gruppe bestehend aus Ethylenglykol, Propylenglykol (1,2-Propandiol), Trimethylenglykol (1,3-Propandiol), 1,4-Dihydroxybutan (1,4-Butandiol), 1,5-Dihydroxypentan, 1,6-Dihydroxyhexan (1,6-Hexandiol) und Neopentylgylkol.

Zur Herstellung des als polymeren Harzes (P2) eingesetzten Polyesters kann gegebenenfalls - neben der wenigstens einen polymerisierten aliphatischen C₁₂-C₂₄-Monocarbonsäure und dem wenigstens einen Diol und/oder Polyol - zudem wenigstens eine aliphatische C₁₂-C₂₄-Monocarbonsäure, vorzugsweise wenigstens eine aliphatische C₁₆-C₂₀-Monocarbonsäure, eingesetzt werden. Dabei können die gleichen aliphatischen C₁₂-C₂₄-Monocarbonsäuren eingesetzt werden, die sich auch zur Herstellung von aliphatischen polymerisierten C₁₂-C₂₄-Monocarbonsäuren eignen. Insbesondere eignen sich hierfür wenigstens eine solche aliphatische C₁₂-C₂₄-Monocarbonsäure, vorzugsweise wenigstens eine solche aliphatische C₁₆-C₂₀-Monocarbonsäure, die wenigstens einfach ungesättigt ist und/oder deren aliphatischer Rest mit wenigstens einer OH-Gruppe substituiert ist. Ein Beispiel einer solchen aliphatischen C₁₂-C₂₄-Monocarbonsäure ist Ricinolsäure. Gegebenenfalls wird wenigstens eine zur Herstellung des als polymeren Harzes (P2) eingesetzten Polyesters eingesetzte aliphatische C₁₂-C₂₄-Monocarbonsäure eingesetzt und die daraus erhältliche Struktureinheit liegt in dem Polyester in einer Menge in einem Bereich von 0 bis 20 mol-%, ganz besonders bevorzugt in einem Bereich von 0 bis 10 mol-%, jeweils bezogen auf das Gesamtgewicht des Polyesters, vor.

Zur Herstellung des als polymeres Harz (P2) eingesetzten Polyesters kann gegebenenfalls wenigstens eine weitere Komponente eingesetzt werden. Vorzugsweise wird zur Herstellung des als polymeren Harzes (P2) eingesetzten Polyesters zudem wenigstens eine Dicarbonsäure und/oder wenigstens eine Tricarbonsäure - oder geeignete einsetzbare Derivate davon wie beispielsweise entsprechende Anhydride und/oder Ester - ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren, und aromatischen C₉-C₁₂-Tricarbonsäuren eingesetzt, besonders bevorzugt ausgewählt aus der Gruppe bestehend aus cycloaliphatischen C₅-C₁₂-Dicarbonsäuren und aromatischen C₉-C₁₂-Tricarbonsäuren und aromatischen C₈-C₂₂-Dicarbonsäuren. Vorzugsweise enthält der als polymeres Harz (P2) eingesetzte Polyester 3 bis 40 mol-%, besonders bevorzugt 5 bis 30 mol-%, bezogen auf den Gesamtanteil von 100 mol-% aller Struktureinheiten des Polyesters, an Struktureinheiten, die aus dem Einsatz von wenigstens einer Dicarbonsäure und/oder wenigstens einer Tricarbonsäure zur Herstellung des Polyesters resultieren.

Vorzugsweise wird zur Herstellung des als polymeren Harzes (P2) eingesetzten Polyesters zudem wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂-Tricarbonsäuren, und gegebenenfalls zudem wenigstens eine aliphatische C₁₂-C₂₄-Monocarbonsäure eingesetzt.

Unter dem Begriff "aliphatische C₃-C₁₂-Dicarbonsäure" wird im Sinne der vorliegenden Erfindung vorzugsweise eine gesättigte oder ungesättigte, vorzugsweise gesättigte, aliphatische C₃-C₁₂-Dicarbonsäure mit insgesamt 3 bis 12, d.h. 3, 4, 5, 6, 7, 8, 9, 10, 11 oder 12 Kohlenstoffatomen, verstanden, die jeweils genau zwei -C(=O)-OH-Gruppen aufweist, d.h. beispielsweise eine aliphatische C₃-C₂₂-Dicarbonsäure, die neben diesen zwei -C(=O)-OH-Gruppen einen C₁-C₂₀-aliphatischen Rest mit insgesamt 1 bis 20 Kohlenstoffatomen, aufweist. Der Ausdruck "aliphatisch" umfasst dabei vorzugsweise acyclische gesättigte oder ungesättigte, vorzugsweise ungesättigte, verzweigte oder unverzweigte aliphatische Reste. Dem Fachmann ist klar, dass, eine ungesättigte Bindung innerhalb der C₃-C₂₂-Dicarbonsäure dabei erst ab C₄-C₂₂-Dicarbonsäuren möglich ist. Dabei weisen ungesättigte aliphatische Reste wenigstens eine, vorzugsweise 1, 2, 3, 4 oder 5, besonders bevorzugt 1, 2, 3 oder 4, ganz besonders bevorzugt 1, 2 oder 3 Kohlenstoff-Doppelbindung(en) auf. Die aliphatischen C₃-C₂₂-Dicarbonsäure können natürliche oder synthetisch erzeugte Dicarbonsäuren sein. Die aliphatischen C₃-C₂₂-Dicarbonsäure können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind aliphatische C₃-C₂₂-Dicarbonsäuren ausgewählt aus der Gruppe bestehend aus Malonsäure, Bernsteinsäure, Glutarsäure, Adipinsäure, Pimelinsäure, Suberinsäure, Azelainsäure, Sebacinsäure, Undecandicarbonsäure, Dodecandicarbonsäure, Tridecandicarbonsäure, Tetradecandicarbonsäure und Hexadecandicarbonsäure.

Aliphatische C₅-C₁₂-Tricarbonsäuren weisen im Unterschied zu den aliphatischen C₃-C₁₂-Dicarbonsäuren wenigstens 5 Kohlenstoffatome auf und drei statt zwei Carboxyl-Gruppen.

Unter dem Begriff "cycloaliphatische C₅-C₁₂-Dicarbonsäure" wird im Sinne der vorliegenden Erfindung vorzugsweise eine gesättigte oder ungesättigte, vorzugsweise gesättigte, cycloaliphatische C₅-C₁₂-Dicarbonsäure mit insgesamt 5-12, d.h. 5, 6, 7, 8, 9, 10, 11, oder 12 Kohlenstoffatomen, verstanden, die jeweils genau zwei -C(=O)-OH-Gruppen aufweist, d.h. beispielsweise eine cycloaliphatische C₅-C₁₂-Dicarbonsäure, die neben diesen zwei -C(=O)-OH-Gruppen einen C₃-C₁₀-cycloaliphatischen Rest mit insgesamt 3 bis 10 Kohlenstoffatomen, aufweist. Der Ausdruck "cycloaliphatisch" umfasst dabei vorzugsweise cyclische gesättigte oder ungesättigte, vorzugsweise ungesättigte, cycloaliphatische Reste. Die cycloaliphatischen C₅-C₁₂-Dicarbonsäure können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind cycloaliphatischen C₅-C₁₂-Dicarbonsäuren ausgewählt aus der Gruppe bestehend aus Hexahydrophthalsäure bzw. Hexahydrophthalsäureanhydrid, Hexahydroterephthalsäure bzw. Hexahydroterephthalsäureanhydrid, Hexahydroisophthalsäure bzw. Hexahydroisophthalsäureanhydrid. Cycloaliphatische C₆-C₁₂-Tricarbonsäuren weisen im Unterschied zu den cycloaliphatischen C₅-C₁₂-Dicarbonsäuren wenigstens 6 Kohlenstoffatome auf und drei statt zwei Carboxyl-Gruppen.

Unter dem Begriff "aromatische C₈-C₁₂-Dicarbonsäure" wird im Sinne der vorliegenden Erfindung vorzugsweise eine aromatische C₈-C₂₂-Dicarbonsäure mit insgesamt 8-12, d.h. 8, 9, 10, 11, oder 12 Kohlenstoffatomen, verstanden, die jeweils genau zwei -C(=O)-OH-Gruppen aufweisen, d.h. beispielsweise eine aromatische C₈-C₁₂-Dicarbonsäure, die neben diesen zwei -C(=O)-OH-Gruppen einen C₆-C₁₀-aromatischen Rest mit insgesamt 6 bis 10 Kohlenstoffatomen, aufweist. Die aromatischen C₈-C₁₂-Dicarbonsäuren können gegebenenfalls einfach oder mehrfach, beispielsweise zweifach, dreifach, vierfach oder fünffach, substituiert sein, vorzugsweise mit wenigstens einem Substituenten ausgewählt aus der Gruppe bestehend aus OH, O-C₁₋₄-aliphatischen Resten, =O, NH₂, NH(C₁₋₄-aliphatischen Resten), N(C₁₋₄-aliphatischen Resten), wobei die Substitution an gleichen oder an verschiedenen Kohlenstoffatomen erfolgen kann. Vorzugsweise sind die aromatischen C₈-C₁₂-Dicarbonsäuren ausgewählt aus der Gruppe bestehend aus Terephthalsäure, Isophthalsäure, ortho-Phthalsäure und/oder Trimellitsäure bzw. deren Anhydriden und/oder Estern. Aromatische C₉-C₁₂-Tricarbonsäuren weisen im Unterschied zu den aromatischen C₈-C₁₂-Dicarbonsäuren wenigstens 9 Kohlenstoffatome auf und drei statt zwei Carboxyl-Gruppen.

Dem Fachmann sind geeignete als polymeres Harz (P2) einsetzbare Polyester und deren Herstellung beispielsweise aus der DE 40 09 858 A1 bekannt.

### Bindemittel (A)

Das in der erfindungsgemäßen wässrigen Beschichtungszusammensetzung eingesetzte Bindemittel (A) ist vorzugsweise ein in Wasser lösbares oder dispergierbares Bindemittel.

Unter dem Begriff "Bindemittel" werden im Sinne der vorliegenden Erfindung in Einklang mit der DIN EN ISO 4618 (deutsche Fassung, Datum: März 2007) vorzugsweise die für die Filmbildung verantwortlichen nicht-flüchtigen Anteile einer Beschichtungszusammensetzung mit Ausnahme von darin enthaltenen Pigmenten (B) und gegebenenfalls vorhandenen Füllstoffen verstanden, insbesondere die für die Filmbildung verantwortlichen polymeren Harze. Der nicht-flüchtige Anteil kann gemäß nachstehend beschriebener Methode bestimmt werden.

Als polymere Harze (A1) eignen sich alle üblichen dem Fachmann bekannten polymeren Harze (A1) wie selbstvernetzende und nicht-selbstvernetzende polymere Harze (A1). Werden nicht-selbstvernetzende polymere Harze (A1) eingesetzt, so kann das erfindungsgemäß eingesetzte Bindemittel (A) zudem ein Vernetzungsmittel (A2) aufweisen. Geeignete polymere Harze (A1) einschließlich gegebenenfalls vorhandener Vernetzungsmittel (A2) sind beispielsweise aus EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 und WO 2005/021168 A1, insbesondere aus EP 0 228 003 A1, DE 199 48 004 A1, DE 40 09 858 A1 und DE 44 37 535 A1 bekannt.

Vorzugsweise umfasst das Bindemittel (A) wenigstens ein polymeres Harz (A1), welches gegebenenfalls reaktive funktionelle Gruppen aufweist, die eine Vernetzungsreaktion ermöglichen.

Das polymere Harz (A1) ist von den polymeren Harzen (P1) und (P2) verschieden.

Das polymere Harz (A1) des erfindungsgemäß eingesetzten Bindemittels (A) weist vorzugsweise vernetzbare reaktive funktionelle Gruppen auf. Jede übliche dem Fachmann bekannte vernetzbare reaktive funktionelle Gruppe kommt dabei in Betracht. Vorzugsweise weist das wenigstens eine polymere Harz des Bindemittels (A) wenigstens eine Art von funktionellen reaktiven Gruppen ausgewählt aus der Gruppe bestehend aus primären Amino-Gruppen, sekundären Amino-Gruppen, Hydroxyl-Gruppen, Thiol-Gruppen, Carboxyl-Gruppen, Carbamat-Gruppen, Gruppen, welche wenigstens eine C=C-Doppelbindung aufweisen, wie beispielsweise VinylGruppen oder (Meth)acrylat-Gruppen, und Epoxid-Gruppen auf. Vorzugsweise weist das polymere Harz (A1) des Bindemittels (A) funktionelle Hydroxyl-Gruppen auf.

Der Ausdruck "(Meth)acryl" bzw. "(Meth)acrylat" umfasst im Sinne der vorliegenden Erfindung jeweils die Bedeutungen "Methacryl" und/oder "Acryl" bzw. "Methacrylat" und/oder "Acrylat".

Weist das polymere Harz (A1) des Bindemittels (A) vernetzbare funktionelle Gruppen wie Hydroxyl-Gruppen auf, so liegt der Anteil an vernetzbaren funktionellen Gruppen wie Hydroxyl-Gruppen vorzugsweise im Bereich von 0,1 Gew.-% bis 7,0 Gew.-%, besonders bevorzugt von 0,25 bis 6,5 Gew.-%, ganz besonders bevorzugt von 0,5 bis 6,0 Gew.-%, insbesondere von 0,75 bis 5,5 Gew.-%, jeweils bezogen auf das Gesamtgewicht des Festkörpergehalts des polymeren Harzes (A1) des Bindemittels (A) auf.

Das polymere Harz (A1) und das gegebenenfalls vorhandenen Vernetzungsmittel (A2) sind exotherm oder endotherm vernetzbar bzw. härtbar. Das polymere Harz (A1) und das gegebenenfalls vorhandene Vernetzungsmittel (A2) sind insbesondere thermisch vernetzbar bzw. härtbar. Vorzugsweise sind das polymere Harz (A1) und das gegebenenfalls vorhandene Vernetzungsmittel (A2) in einem Temperaturbereich von -20°C bis zu 250°C vernetzbar bzw. härtbar. Vorzugsweise sind das polymere Harz (A1) und das gegebenenfalls vorhandene Vernetzungsmittel (A2) bei Raumtemperatur oder bei Temperaturen im Bereich von 15°C bis 80°C vernetzbar. Unter Raumtemperatur wird im Sinne der vorliegenden Erfindung vorzugsweise eine Temperatur im Bereich von 18°C bis 23°C verstanden. Alternativ sind das polymere Harz (A1) und das gegebenenfalls vorhandene Vernetzungsmittel (A2) erst bei höheren Temperaturen vernetzbar, beispielsweise bei Temperaturen ≥ 80°C, bevorzugter ≥ 110°C, besonders bevorzugt ≥ 140°C oder ≥ 150°C vernetzbar. Besonders vorteilhaft sind das polymere Harz (A1) und das gegebenenfalls vorhandene Vernetzungsmittel (A2) bei 50 bis 150°C, noch bevorzugter bei 70 bis 150°C und besonders bevorzugt bei 80 bis 150°C vernetzbar.

Vorzugsweise umfasst das Bindemittel (A) wenigstens ein polymeres Harz (A1) ausgewählt aus der Gruppe bestehend aus Polyurethanen, Polyestern, Polyamiden, Polyharnstoffen, Polystyrolen, Polycarbonaten, Poly(meth)acrylaten, Vinylesterbasierten Harzen, Epoxidharzen, Phenol-Formaldehydharzen, Melamin-Formaldehydharzen, Phenolharzen und Silikonharzen sowie Mischungen davon, wobei vorzugsweise 70 bis 100 Gew.-% des polymeren Harzes aus wenigstens einem der vorstehend genannten Polymeren ausgewählt sind. Dabei werden unter den genannten Polymeren vorzugsweise jeweils sowohl Homo- als auch Copolymere verstanden. Diese Harze sowie ihre Herstellung sind dem Fachmann bekannt. Geeignete Polyester sind beispielsweise aus DE 40 09 858 A1 bekannt. Geeignete Polyurethane sind beispielsweise aus DE 199 48 004 A1 und aus EP 0 228 003 A1 bekannt. Der Begriff Polyurethane schließt vorzugsweise insbesondere Polyurethanpoly(meth)acrylate, d.h. polyurethanmodifizierte Poly(meth)acrylate mit ein. Solche Polyurethanpoly(meth)acrylate sind dem Fachmann beispielsweise aus DE 44 37 535 A1 bekannt.

Vorzugsweise umfasst das Bindemittel (A) wenigstens ein polymeres Harz (A1) ausgewählt aus der Gruppe bestehend aus Polyurethanen, Polyharnstoffen, Polyestern und Poly(meth)acrylaten, insbesondere ausgewählt aus der Gruppe bestehend aus Polyurethanen und Poly(meth)acrylaten wobei vorzugsweise 70 bis 100 Gew.-% des polymeren Harzes des Bindemittels aus wenigstens einem der vorstehend genannten Polymeren ausgewählt sind.

Es können auch mehrere verschiedene polymere Harze (A1) im Bindemittel (A) vorhanden sein, beispielsweise zwei oder drei jeweils voneinander verschiedene polymere Harze (A1).

In einer besonders bevorzugten Ausführungsform umfasst das Bindemittel (A) als polymeres Harz (A1) wenigstens ein Polyurethan, wobei vorzugsweise 70 bis 100 Gew.-% des polymeren Harzes ein solches Polyurethan darstellen, und/oder als polymeres Harz (A1) wenigstens ein Poly(meth)acrylat, wobei vorzugsweise 70 bis 100 Gew.-% des polymeren Harzes aus einem solchen Poly(meth)acrylat ausgewählt sind, und/oder als polymeres Harz (A1) wenigstens einen Polyester, wobei vorzugsweise 70 bis 100 Gew.-% des polymeren Harzes aus einem solchen Polyester ausgewählt sind.

Das Bindemittel (A) kann ein polymeres Harz (A1) umfassen, welches unter Beteiligung von Isocyanat-Gruppen und/oder oligomerisierten oder polymerisierten Isocyanat-Gruppen ausgehärtet bzw. vernetzt wird, ganz besonders bevorzugt wenigstens ein entsprechendes Polyurethan und/oder einen Polyester und/oder ein Poly(meth)acrylat.

Umfasst das Bindemittel (A) wenigstens ein Polyurethan als polymeres Harz (A1), so eignen sich insbesondere Polyurethan-basierte Harze, die durch eine Polyadditionsreaktion zwischen hydroxylgruppenhaltigen Verbindungen wie Polyolen einschließlich Diolen (wie z.B. Hydroxylgruppen von hydroxylgruppenhaltigen Polyestern oder hydroxylgruppenhaltigen Polyethern sowie Mischungen und Copolymeren davon) und wenigstens einem Isocyanat oder Polyisocyanat (einschließlich aromatischer und aliphatischer Isocyanate, Di-, Tri- und/oder Polyisocyanate) hergestellt werden. Dabei ist üblicherweise ein stöchiometrischer Umsatz der OH-Gruppen der Polyole mit den Isocyanat-Gruppen der Polyisocyanate erforderlich. Jedoch kann das einzusetzende stöchiometrische Verhältnis auch variiert werden, da das Polyisocyanat in solchen Mengen zu der Polyol-Komponente gegeben werden kann, dass es zu einer "Übervernetzung" oder zu einer "Untervernetzung" kommen kann. Neben einer Reaktion von Isocyanat-Gruppen mit OH-Gruppen kann als weitere Reaktion zur Vernetzung z.B. auch die Di- und Trimerisierung von Isocyanaten (zu Uretdionen oder Isocyanuraten) auftreten. Als Polyisocyanate bzw. Isocyanate eignen sich alle als Vernetzungsmittel (A2) genannten einsetzbaren Isocyanate bzw. Polyisocyanate.

Umfasst das Bindemittel (A) wenigstens ein Polyurethan als polymeres Harz (A1), so eignet sich zu dessen Herstellung vorzugsweise ein Polyester-Polyol als Präpolymer-Polyol-Komponente. Als Polyester-Polyole eignen sich insbesondere solche Verbindungen, die sich von wenigstens einem Polyol wie wenigstens einem Diol, beispielsweise Ethylenglykol, Propylenglykol (1,2-Propandiol), Trimethylenglykol (1,3-Propandiol), Neopentylgylkol, 1,4-Butandiol und/oder 1,6-Hexandiol, oder wie wenigstens einem Triol wie 1,1,1-Trimethylolpropan (TMP), und wenigstens einer Dicarbonsäure wie beispielsweise Adipinsäure, Terephthalsäure, Isophthalsäure, ortho-Phthalsäure und/oder Dimethylolpropionsäure und/oder wenigstens einem Dicarbonsäurederivat wie einem Dicarbonsäureester und/oder einem Dicarbonsäureanhydrid wie Phthalsäureanhydrid, ableiten. Insbesondere bevorzugt ist ein solches als Präpolymer-Polyol-Komponente eingesetztes Polyester-Polyol, welches sich von wenigstens einem Diol und/oder Triol ausgewählt aus der Gruppe bestehend aus 1,6-Hexandiol, Neopentylglycol, Trimethylolpropan und Mischungen davon, und wenigstens einer Dicarbonsäure (oder wenigstens einem Dicarbonsäurederivat davon) ausgewählt aus der Gruppe bestehend aus Adipinsäure, Terephthalsäure, Isophthalsäure, ortho-Phthalsäure Dimethylolpropionsäure und Mischungen davon, ableitet. Vorzugsweise wird wenigstens ein solches Polyester-Polyol mit wenigstens einem Vernetzungsmittel (A2), insbesondere mit wenigstens einem Polyisocyanat wie HDI oder IPDI zur Herstellung des Polyurethan-Harzes eingesetzt, welches vom Bindemittel (A) umfasst wird.

Um eine Lösung oder Dispersion eines solchen Polyurethan-Harzes und/oder Polyharnstoff-Harzes in Wasser zu ermöglichen, werden üblicherweise zur Stabilisierung der Dispersion in die Polyurethan-Kette bzw. Polyharnstoff-Kette ionische und/oder hydrophile Segmente eingebaut. Als Weichsegmente im Fall von Polyurethanen können bevorzugt 20 bis 100 mol % an höhermolekularen Diolen, bezogen auf die Menge aller Diole, bevorzugt Polyesterdiolen, mit einem zahlenmittleren Molekulargewicht Mₙ von 500 bis 5000 g/mol, bevorzugt von 1000 bis 3000 g/mol eingesetzt werden. Die Bestimmung des zahlenmittleren Molekulargewichts erfolgt gemäß der nachstehend beschriebenen Methode.

Umfasst das Bindemittel (A) wenigstens einen Polyester als polymeres Harz (A1), so können die im Zusammenhang mit der Herstellung der Polyurethan-Harze genannten Polyester-Polyole als Polyester-Komponente eingesetzt werden.

Umfasst das Bindemittel (A) wenigstens ein Poly(meth)acrylat-basiertes polymeres Harz als polymeres Harz (A1), so eignen sich zu deren Herstellung insbesondere Monomer- oder Oligomer-Gemische von Estern wie C₁₋₆-Alkyl-Estern der Acrylsäure und/oder der Methacrylsäure. Der Polymeraufbau erfolgt über die Umsetzung der C-C-Doppelbindungen dieser Monomere. Die Herstellung solcher Poly(meth)acrylat-basierter Harze kann durch eine radikalische Polymerisation erfolgen, die beispielsweise durch die Zersetzung organischer Peroxide initiiert wird.

Umfasst das Bindemittel (A) wenigstens ein Poly(meth)acrylat-basiertes polymeres Harz als polymeres Harz (A1), so eignen sich insbesondere solche Poly(meth)acrylat-basierten polymeren Harze, welche durch mehrstufige radikalische Emulsionspolymerisation von olefinisch ungesättigten Monomeren in Wasser hergestellt werden können. Besonders bevorzugt sind Poly(meth)acrylat-basierte polymere Harze, welche durch
i. Polymerisation einer Mischung von olefinisch ungesättigten Monomeren A durch Emulsionspolymerisation in Wasser unter Verwendung eines Emulgators und eines wasserlöslichen Initiators,
ii. Polymerisation einer Mischung von olefinisch ungesättigten Monomeren B durch Emulsionspolymerisation in Wasser unter Verwendung eines Emulgators und eines wasserlöslichen Initiators in Gegenwart des unter i. erhaltenen Polymerisats, wobei diese Mischung von olefinisch ungesättigten Monomeren B vorzugsweise mindestens ein mehrfach olefinisch ungesättigtes Monomer enthält,
iii. Polymerisation einer Mischung von olefinisch ungesättigten Monomeren C durch Emulsionspolymerisation in Wasser unter Verwendung eines Emulgators und eines wasserlöslichen Initiators in Gegenwart des unter ii. erhaltenen Polymerisats,
herstellbar sind. Geeignete olefinisch ungesättigte Monomere können einfach oder mehrfach olefinisch ungesättigt sein. Beispiele geeigneter einfach olefinisch ungesättigter Monomere sind insbesondere (Meth)acrylat-basierte einfach olefinisch ungesättigte Monomere wie beispielsweise (Meth)acrylsäure und Ester, Nitrile, oder Amide der (Meth)acrylsäure. Beispiele geeigneter mehrfach olefinisch ungesättigter Monomere sind Ester der (Meth)acrylsäure mit einem olefinisch ungesättigten Rest. Bei diesem Rest kann es sich um einen Allylrest handeln oder um einen (Meth)acrylsäureest. Bevorzugte mehrfach olefinisch ungesättigte Monomere umfassen Ethylenglykoldi(meth)acrylat, 1,2-Propylenglykoldi(meth)acrylat, 2,2-Propylenglykoldi(meth)acrylat, Butandiol-1,4-di(meth)acrylat, Neopentylglykoldi-(meth)acrylat, 3-Methylpentandioldi(meth)acrylat, Diethylenglykoldi(meth)acrylat, Triethylenglykoldi(meth)acrylat, Tetraethylenglykoldi(meth)acrylat, Dipropylenglykol-di(meth)acrylat, Tripropylenglykoldi(meth)acrylat, Hexandioldi(meth)acrylat und Allyl(meth)acrylat. Vorzugsweise enthält die Monomermischung A wenigstens mindestens einen einfach ungesättigten Ester der (Meth)acrylsäure mit einem unsubstituierten Alkylrest und gegebenenfalls zudem mindestens ein vinylisch, einfach ungesättigtes Monomer mit einem aromatischen Rest an der Vinylgruppe. Vorzugsweise enthält die Monomermischung B mindestens ein mehrfach olefinisch ungesättigtes Monomer, mindestens einen einfach ungesättigten Ester der (Meth)acrylsäure mit einem unsubstituierten Alkylrest, und gegebenenfalls mindestens ein vinylisch, einfach ungesättigtes Monomer mit einem aromatischen Rest an der Vinylgruppe. Vorzugsweise enthält die Monomermischung C mindestens eine alpha-beta ungesättigte Carbonsäure, mindestens einen einfach ungesättigten Ester der (Meth)acrylsäure mit einem mit einer oder mehreren Hydroxylgruppen substituierten Alkylrest, mindestens einen einfach ungesättigten Ester der (Meth)acrylsäure mit einem unsubstituierten Alkylrest, und gegebenenfalls mindestens ein vinylisch, einfach ungesättigtes Monomer mit einem aromatischen Rest an der Vinylgruppe.

Umfasst das Bindemittel (A) neben wenigstens einem polymeren Harz (A1) zudem wenigstens ein Vernetzungsmittel (A2), so eignen sich hierfür alle dem Fachmann bekannten üblichen Vernetzungsmittel wie beispielsweise Aminoplaste, Phenoplaste, polyfunktionelle Mannich-Basen, Melaminharze, Benzoguanamin-Harze, beta-Hydroxyalkylamide, Tris(alkoxycarbonylamino)triazine, Epoxide, freie Polyisocyanate und/oder blockierte Polyisocyanate, insbesondere blockierte Polyisocyanate, sowie Verbindungen mit im Mittel mindestens zwei zur Umesterung befähigten Gruppen, beispielsweise Umsetzungsprodukte von Malonsäurediestern und Polyisocyanaten oder von Estern und Teilestern mehrwertiger Alkohole der Malonsäure mit Monoisocyanaten. Ein besonders bevorzugtes Vernetzungsmittel ist ein blockiertes Polyisocyanat. Werden blockierte Polyisocyanate als Vernetzungsmittel gewählt, wird die erfindungsgemäße wässrige Beschichtungszusammensetzung vorzugsweise als 1-Komponenten-Zusammensetzung (1-K) formuliert. Werden unblockierte Polyisocyanate als Vernetzungsmittel gewählt, wird die erfindungsgemäße wässrige Beschichtungszusammensetzung vorzugsweise als 2-Komponenten-Zusammensetzung (2-K) formuliert.

Besonders bevorzugt alsVernetzungsmittel (A2) einsetzbar sind in Wasser lösbare oder dispergierbare Melamin-Harze, vorzugsweise Melamin-Formaldehyd-Kondensationsprodukte, insbesondere veretherte Melamin-Formaldehyd-Kondensationsprodukte. Ihre Wasserlöslichkeit bzw. Wasserdispergierbarkeit hängt - abgesehen vom Kondensationsgrad, der möglichst niedrig sein soll - von der Veretherungskomponente ab, wobei nur die niedrigsten Glieder der Alkanol- bzw. Ethylenglykolmonoetherreihe wasserlösliche Kondensate ergeben. Die größte Bedeutung haben die mit Methanol veretherten (methylierten) Melaminharze. Bei Verwendung von Lösungsvermittlern als optionale weitere Additive können auch ethanol-, propanol und/oder butanolveretherte Melaminharze, insbesondere die entsprechenden veretherten Melamin-Formaldehyd-Kondensationsprodukte in wässriger Phase gelöst oder dispergiert werden.

Als Isocyanate werden bevorzugt (hetero)aliphatische, (hetero)cycloaliphatische, (hetero)aromatische oder (hetero)aliphatisch-(hetero)aromatische Isocyanate eingesetzt. Bevorzugt sind Diisocyanate, die 2 bis 36, insbesondere 6 bis 15 Kohlenstoffatome enthalten. Bevorzugte Beispiele sind 1,2-Ethylendiisocyanat, 1,4-Tetramethylendiisocyanat, 1,6-Hexamethylendiisocyanat (HDI), 2,2,4-(2,4,4)-Trimethyl-1,6-hexamethylendiisocyanat (TMDI), Diphenylmethandiisocyanat (MDI), 1,9-Diisocyanato-5-methylnonan, 1,8-Diisocyanato-2,4-dimethyloctan, 1,12-Dodecandiisocyanat, ω,ω'-Diisocyanatodipropylether, Cyclobuten-1,3-diisocyanat, Cyclohexan-1,3- und -1,4-diisocyanat, 3-Isocyanato-methyl-3,5,5-trimethyl-cyclohexylisocyanat (Isophorondiisocyanat, IPDI), 1,4-Diisocyanatomethyl-2,3,5,6-tetramethyl-cyclohexan, Decahydro-8-methyl-(1,4-methano-naphthalen-2 (oder 3), 5-ylendimethylendiisocyanat, Hexahydro-4,7-methano-indan-1 (oder 2), 5 (oder 6) ylendimethylendiisocyanat, Hexahydro-4,7-methanoindan-1 (oder 2), 5 (oder 6) ylendiisocyanat, 2,4- und/oder 2,6-Hexahydrotoluylendiisocyanat (H6-TDI), 2,4- und/oder 2,6-Toluoldiisocyanat (TDI), Perhydro-2,4'-diphenylmethandiisocyanat, Perhydro-4,4'-diphenylmethandiisocyanat (H₁₂MDI), 4,4'-Diisocyanato-3,3',5,5'-tetramethyldicyclohexylmethan, 4,4'-Diisocyanato-2,2',3,3',5,5',6,6'-octamethyldicyclohexylmethan, ω,ω'-Diisocyanato-1,4-diethylbenzen, 1,4-Diisocyanatomethyl-2,3,5,6-tetramethylbenzen, 2-Methyl-1,5-diisocyanatopentan (MPDI), 2-Ethyl-1,4-diisocyanatobutan, 1,10-Diisocyanatodecan, 1,5-Diisocyanatohexan, 1,3-Diisocyanatomethylcyclohexan, 1,4-Diisocyanatomethylcyclohexan, Tetamethylxylylendiisocyanat (TMXDI), 2,5(2,6)-Bis(isocyanatomethyl)bicyclo[2.2.1]heptan (NBDI), sowie jede Mischung dieser Verbindungen. Es können auch Polyisocyanate von höherer Isocyanatfunktionalität verwendet werden. Beispiele dafür sind trimerisiertes Hexamethylendiisocyanat und trimerisiertes Isophorondiisocyanat. Ferner kann man auch Mischungen von Polyisocyanaten benutzen. Die bei der Erfindung als Vernetzungsmittel (A2) in Betracht kommenden organischen Polyisocyanate können auch Präpolymere sein, die sich beispielsweise von einem Polyol einschliesslich eines Polyetherpolyols oder eines Polyesterpolyols ableiten. Als blockierte Polyisocyanate können beliebige Isocyanate benutzt werden, bei denen die Isocyanat-Gruppen mit einer Verbindung umgesetzt worden sind, so dass das gebildete blockierte Polyisocyanat insbesondere gegenüber Hydroxyl- und Amino-Gruppen wie primärer und/oder sekundärer Amino-Gruppen bei Raumtemperatur, d.h. bei einer Temperatur von 18 bis 23°C beständig ist, bei erhöhten Temperaturen, beispielsweise bei ≥ 80°C, bevorzugter ≥ 110°C, besonders bevorzugt ≥ 130°C und ganz besonders bevorzugt ≥ 140°C oder bei 90°C bis 300°C oder bei 100 bis 250°C, noch bevorzugter bei 125 bis 250°C und besonders bevorzugt bei 150 bis 250°C, aber reagiert. Für die Blockierung der Isocyanate können vorzugsweise beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Andere geeignete Blockierungsmittel sind Hydroxylamine, wie Ethanolamin, Oxime, wie Methylethylketonoxim, Acetonoxim und Cyclohexanonoxim und Amine, wie Dibutylamin und Diisopropylamin.

Die erfindungsgemäße wässrige Beschichtungszusammensetzung enthält vorzugsweise als Vernetzungsmittel (A2) wenigstens ein gegebenenfalls alkyliertes Melamin-Formaldehyd-Kondensationsprodukt, vorzugsweise wenigstens ein in Wasser lösbares oder dispergierbares Melamin-Formaldehyd-Kondensationsprodukt, insbesondere wenigstens ein in Wasser lösbares oder dispergierbares verethertes (alkyliertes), vorzugsweise methyliertes Melamin-Formaldehyd-Kondensationsprodukt. Solche Produkte sind kommerziell erhältlich, beispielsweise unter der Bezeichnung Resimene® HM 2608.

Vorzugsweise ist das Vernetzungsmittel (A2) ein in Wasser gelöstes oder dispergiertes Vernetzungsmittel. Zur Beschleunigung der Vernetzung können der wässrigen Beschichtungszusammensetzung geeignete Katalysatoren zugesetzt werden. Auch solche Katalysatoren sind dem Fachmann bekannt.

Die erfindungsgemäße wässrige Beschichtungszusammensetzung enthält das polymere Harz (A1) vorzugsweise in einer Menge in einem Bereich von 5 bis 40 Gew.-% oder von 20 bis 40 Gew.-%,, besonders bevorzugt von 5 bis 30 Gew.-% oder von 20 bis 35 Gew.-%,, ganz besonders bevorzugt von 5 bis 25 Gew.-% oder von 20 bis 30 Gew.-%, auf, jeweils bezogen auf das Gesamtgewicht der wässrigen Beschichtungszusammensetzung.

Vorzugsweise enthält die erfindungsgemäße wässrige Beschichtungszusammensetzung das Vernetzungsmittel (A2) in einer Menge von 5 bis 40 Gew.-%, vorzugsweise in einer Menge von 10 bis 35 Gew.-%, besonders bevorzugt in einer Menge von 15 bis 30 Gew.-%, bezogen auf das Gesamtgewicht der polymeren Harze (A1) in der Beschichtungszusammensetzung. Die Mengenangaben sind dabei jeweils auf den jeweiligen Festkörpergehalt bezogen.

Vorzugsweise enthält die wässrige Beschichtungszusammensetzung das Vernetzungsmittel (A2) in einer Menge von 0,1 bis 20 Gew.-%, vorzugsweise in einer Menge von 0,5 bis 15 Gew.-%, besonders bevorzugt in einer Menge von 1 bis 10 Gew.-%, jeweils bezogen auf das Gesamtgewicht der wässrigen Beschichtungszusammensetzung.

### Pigment (B)

Die erfindungsgemäße Beschichtungszusammensetzung enthält wenigstens ein Pigment (B).

Vorzugsweise liegt das Pigment (B) als ein in Wasser gelöstes oder dispergiertes Pigment (B) vor.

Als Pigment (B) eignen sich insbesondere organische und/oder anorganische, farbgebende und/oder füllende Pigmente und insbesondere solche Pigmente, die vorzugsweise mindestens zwei dieser Eigenschaften aufweisen.

In einer bevorzugten Ausführungsform ist das Pigment (B) ein Effektpigment oder eine Mischung aus wenigstens einem Effektpigment und wenigstens einem davon unterschiedlichen Pigment, welches selbst kein Effektpigment ist und welches vorzugsweise aus der Gruppe bestehend aus organischen und anorganischen, farbgebenden und füllenden Pigmenten, sowie Pigmenten, die vorzugsweise mindestens zwei dieser Eigenschaften aufweisen, ausgewählt ist.

Ein Fachmann ist mit dem Begriff der Effektpigmente vertraut. Eine entsprechende Definition findet sich beispielsweise im Römpp Lexikon Lacke und Druckfarben, Georg Thieme Verlag, 1998. Vorzugsweise handelt es sich bei Effektpigmenten um solche Pigmente, die optisch effektgebend oder farb- und optisch effektgebend, insbesondere optisch effektgebend sind. Eine entsprechende Einteilung der Pigmente erfolgt nach DIN 55945 (Datum: Dezember 2011).

Vorzugsweise ist das Pigment (B) ausgewählt aus der Gruppe bestehend aus gegebenenfalls beschichteten organischen und anorganischen Effektpigmenten.

Besonders bevorzugt ist das Pigment (B) ausgewählt aus der Gruppe bestehend aus gegebenenfalls beschichteten Metalleffektpigmenten, gegebenenfalls beschichteten Metalloxideffektpigmenten, gegebenenfalls beschichtete Effektpigmente, die aus Metallen und Nichtmetallen zusammengesetzt sind, und gegebenenfalls beschichteten nichtmetallischen Effektpigmenten.

Ganz besonders bevorzugt ist das Pigment (B) ausgewählt aus der Gruppe bestehend aus Metalleffektpigmenten, silikatbeschichteten Metalleffektpigmenten, und gegebenenfalls beschichteten nichtmetallischen Effektpigmenten wie Perlglanzpigmenten, insbesondere Mica-Pigmenten. Insbesondere bevorzugt ist das Pigment (B) ausgewählt aus der Gruppe bestehend aus Metalleffektpigmenten und silikatbeschichteten Metalleffektpigmenten.

Bevorzugte Metalleffektpigmente sind beispielsweise Aluminiumeffektpigmente, Eiseneffektpigmente oder Kupfereffektpigmente. Ganz besonders bevorzugt sind gegebenenfalls beschichtete - wie beispielsweise silanisierte und/oder chromatierte - Aluminiumeffektpigmente, insbesondere kommerziell erhältliche Produkte der Firma Eckart wie Stapa® Hydrolac, Stapa® Hydroxal, Stapa® Hydrolux und Stapa® Hydrolan, am meisten bevorzugt Stapa® Hydrolux und Stapa® Hydrolan.

Die erfindungsgemäß eingesetzten Effektpigmente (B) können dabei in jeder üblichen dem Fachmann bekannten Form wie z.B. einer Blättchen- und/oder einer Plättchenform, insbesondere einer (Corn)flake- oder einer Silverdollar-Form vorliegen.

Beispiele für aus Metallen und Nichtmetallen zusammengesetzten Effektpigmente sind mit Eisenoxid beschichtete Aluminiumpigmente, wie sie beispielsweise in der europäischen Patentanmeldung EP 0 562 329 A2 beschrieben werden, Glasblättchen, die mit Metallen, insbesondere Aluminium, beschichtet sind, oder Interferenzpigmente, die eine Reflektorschicht aus Metall, insbesondere Aluminium, enthalten.

Beispiele für nichtmetallische Effektpigmente sind Perlglanzpigmente, insbesondere Micapigmente, mit Metalloxiden beschichtete, beispielsweise plättchenförmige Graphitpigmente, Interferenzpigmente, die keine Reflektorschicht aus Metall enthalten und einen starken Farbflop aufweisen; Effektpigmente auf der Basis von Eisenoxid oder organische, flüssigkristalline Effektpigmente.

Ergänzend wird hinsichtlich der als Pigment (B) erfindungsgemäß vorzugsweise eingesetzten Effektpigmente auf das Römpp Lexikon Lacke und Druckfarben, Georg Thieme Verlag, 1998, Seiten 176, «Effektpigmente» und Seiten 380 und 381, »Metalloxid-Glimmer-Pigmente« bis «Metallpigmente», verwiesen.

Als Pigment (B) geeignete Pigmente, welche keine Effektpigmente sind, sind vorzugsweise aus der Gruppe bestehend aus organischen und anorganischen, farbgebenden und füllenden Pigmenten, Pigmenten, die vorzugsweise mindestens zwei dieser Eigenschaften aufweisen, und Nanopartikeln ausgewählt. Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat. Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz. Beispiele geeigneter füllender Pigmente oder Füllstoffe sind Kreide, Calciumsulfat, Bariumsulfat, Silikate wie Talk oder Kaolin, Kieselsäuren, Oxide wie Aluminiumhydroxid oder Magnesiumhydroxid oder organische Füllstoffe wie Textilfasern, Cellulosefasern, Polyethylenfasern oder Polymerpulver; ergänzend wird auf Römpp Lexikon Lacke und Druckfarben, Georg Thieme Verlag, 1998, Seiten 250 ff., «Füllstoffe», verwiesen. Vorzugsweise werden die Nanopartikel aus der Gruppe bestehend aus Haupt- und Nebengruppen-Metallen und deren Verbindungen ausgewählt. Bevorzugt werden die Haupt- und Nebengruppen-Metalle aus Metallen der dritten bis fünften Hauptgruppe, der dritten bis sechsten sowie der ersten und zweiten Nebengruppe des Periodensystems der Elemente sowie den Lanthaniden ausgewählt. Besonders bevorzugt werden Bor, Aluminium, Gallium, Silizium, Germanium, Zinn, Arsen, Antimon, Silber, Zink, Titan, Zirkonium, Hafnium, Vanadium, Niob, Tantal, Molybdän, Wolfram und Cer, insbesondere Aluminium, Silizium, Silber, Cer, Titan und Zirkonium eingesetzt. Vorzugsweise handelt es sich bei den Verbindungen der Metalle um die Oxide, Oxidhydrate, Sulfate oder Phosphate. Bevorzugt werden Silber, Siliziumdioxid, Aluminiumoxid, Aluminiumoxidhydrat, Titandioxid, Zirkoniumoxid, Ceroxid und Mischungen hiervon, besonders bevorzugt Silber, Ceroxid, Siliziumdioxid, Aluminiumoxidhydrat und Mischungen hiervon, ganz besonders bevorzugt Aluminiumoxidhydrat und insbesondere Böhmit verwendet. Vorzugsweise weisen diese Nanopartikel eine mittlere Primärpartikelgröße < 50 nm, bevorzugt 5 bis 50 nm, insbesondere 10 bis 30 nm, auf. Die Primärpartikelgröße wird dabei vorzugsweise mittels Laserbeugung bestimmt, besonders bevorzugt mittels Lasergranulometrie gemäß ISO 13320-1 (Datum: September 2009).

Der Gehalt des erfindungsgemäß eingesetzten Pigments (B) in der erfindungsgemäßen Beschichtungszusammensetzung kann je nach Verwendungszweck der betreffenden pigmentierten Beschichtungszusammensetzung sehr breit variieren. Vorzugsweise liegt der Gehalt an Pigment (B), bezogen auf die erfindungsgemäße Beschichtungszusammensetzung bei 0,1 bis 25 Gew.-%, bevorzugt bei 1,0 bis 20 Gew.-%, besonders bevorzugt bei 1,5 bis 18 Gew.-%, ganz besonders bevorzugt bei 2 bis 15 Gew.-% und insbesondere bei 2,0 bis 8 Gew.-%.

### Verwendung der Mischung (M) als Rheologiehilfsmittel

Ein weiterer Gegenstand der vorliegenden Erfindung ist eine Verwendung der erfindungsgemäß zur Herstellung der erfindungsgemäßen Beschichtungszusammensetzung eingesetzten Mischung (M) aus wenigstens einem polymeren Harz (P1) und wenigstens einem davon verschiedenen polymeren Harz (P2), wobei
das polymere Harz (P1) ein Polyamid ist, welches eine Säure-Zahl <10 mg KOH pro g an Polyamid aufweist und
das polymere Harz (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol,
als Rheologiehilfsmittel in wässrigen Beschichtungszusammensetzungen.

Unter "Rheologiehilfsmittel" werden im Sinne der vorliegenden Erfindung vorzugsweise Rheologiehilfsmittel ausgewählt aus der Gruppe bestehend aus Thixotropiermitteln, Verdickungsmitteln und Verlaufhilfsmitteln und Mischungen davon, besonders bevorzugt Verdickungsmittel, verstanden.

Vorzugsweise ist die erfindungsgemäß verwendete Mischung (M) erhältlich durch Dispergieren des polymeren Harzes (P1) in Wasser oder einem wässrigen Medium in Gegenwart des polymeren Harzes (P2).

Alle im Zusammenhang mit der erfindungsgemäß eingesetzten Mischung (M) hierin zuvor beschriebene, bevorzugte Ausführungsformen sind auch bevorzugte Ausführungsformen hinsichtlich der Verwendung der erfindungsgemäß zur Herstellung der erfindungsgemäßen Beschichtungs-zusammensetzung eingesetzten Mischung (M), insbesondere im Zusammenhang mit den polymeren Harzen (P1) und (P2).

### Optionale Komponente (D)

Die erfindungsgemäße Beschichtungszusammensetzung kann gegebenenfalls wenigstens eine weitere Komponente (D) enthalten. Als Komponente (D) eignet sich vorzugsweise ein Verdickungsmittel, vorzugsweise ein solches Verdickungsmittel, welches vom polymeren Harz (P1) verschieden ist. Zudem ist die optionale Komponente (D) auch vom polymeren Harz (P2) verschieden. Es können auch zwei oder mehr voneinander verschiedene Komponenten (D) eingesetzt werden. Vorzugsweise ist die optionale Komponente (D) ausgewählt aus der Gruppe bestehend aus Metallsilikaten, Verdickungsmitteln auf Basis von Poly(meth)acrylsäure, Verdickungsmitteln auf Basis von Polyurethanen, polymeren Wachsen und Mischungen davon.

Das Metallsilikat wird bevorzugt aus der Gruppe der Smektite ausgewählt. Besonders bevorzugt werden die Smektite aus der Gruppe der Montmorillonite und Hectorite ausgewählt. Insbesondere werden die Montmorillonite und Hectorite aus der Gruppe bestehend aus Aluminium-Magnesium-Silikaten sowie Natrium-Magnesium- und Natrium-Magnesium-Fluor-Lithium-Schichtsilikaten, ausgewählt. Diese anorganischen Schichtsilikate werden unter der Marke Laponite® vertrieben.

Verdickungsmittel auf Basis von Poly(meth)acrylsäure sind gegebenenfalls vernetzt und/oder mit einer geeigneten Base neutralisiert. Beispiele solcher Verdickungsmittel auf Basis von Poly(meth)acrylsäure sind "Alkali Swellable Emulsions" (ASE), und hydrophob modifizierte Varianten davon, die "Hydrophically modified Alkali Swellable Emulsions (HASE). Vorzugsweise sind Verdickungsmittel auf Basis von Poly(meth)acrylsäure anionisch. Entsprechende Produkte wie Rheovis® AS 1130 sind kommerziell erhältlich.

Verdickungsmittel auf Basis von Polyurethanen (z.B. Polyurethan-Assoziativ-Verdickungsmittel) sind gegebenenfalls vernetzt und/oder mit einer geeigneten Base neutralisiert. Entsprechende Produkte wie Rheovis® PU 1250 sind kommerziell erhältlich.

Als polymere Wachse eignen sich beispielsweise gegebenenfalls modifizierte polymere Wachse auf Basis von Ethylen-Vinylacetat-Copolymeren. Entsprechende Produkte sind zum Beispiel unter der Bezeichnung Aquatix® kommerziell erhältlich.

Enthält die erfindungsgemäße Beschichtungszusammensetzung wenigstens eine Komponente (D), so liegt das relative Gewichtsverhältnis des polymeren Harzes (P1) in der erfindungsgemäßen Beschichtungszusammensetzung zu der weiteren Komponente (D) vorzugsweise in einem Bereich von 15:1 bis 1:15, besonders bevorzugt in einem Bereich von 5:1 bis 1:5, ganz besonders bevorzugt in einem Bereich von 5:1 bis 1,5:1. Alle Angaben beziehen sich auf den Festkörper der Komponenten.

Ist die Komponente (D) ein Metallsilikat, so liegt das relative Gewichtsverhältnis des polymeren Harzes (P1) in der erfindungsgemäßen Beschichtungszusammensetzung zu der Komponente (D) vorzugsweise in einem Bereich von 7,5:1 bis 1,2:1, besonders bevorzugt in einem Bereich von 5:1 bis 1,5:1. Ist die Komponente (D) ein Verdickungsmittel auf Basis von Poly(meth)acrylsäure, so liegt das relative Gewichtsverhältnis des polymeren Harzes (P1) in der erfindungsgemäßen Beschichtungszusammensetzung zu der Komponente (D) vorzugsweise in einem Bereich von 5:1 bis 1,5:1, besonders bevorzugt in einem Bereich von 4:1 bis 2:1. Ist die Komponente (D) ein Verdickungsmittel auf Basis von Polyurethanen, so liegt das relative Gewichtsverhältnis des polymeren Harzes (P1) in der erfindungsgemäßen Beschichtungszusammensetzung zu der Komponente (D) vorzugsweise in einem Bereich von 4:1 bis 1,2:1, besonders bevorzugt in einem Bereich von 3:1 bis 1,5:1. Alle Angaben beziehen sich auf den Festkörper der Komponenten.

Vorzugsweise liegt die wenigstens eine Komponente (D) in der erfindungsgemäßen Beschichtungszusammensetzung in einer Menge von höchstens 5 Gew.-%, besonders bevorzugt von höchstens 2,5 Gew.-%, ganz besonders bevorzugt von höchstens 1,5 Gew.-%, insbesondere von höchstens 1,0 Gew.-%, am meisten bevorzugt von höchstens 0,75 Gew.-%, jeweils bezogen auf das Gesamtgewicht der Beschichtungszusammensetzung, vor.

### Optionale Komponente (E)

Die erfindungsgemäße Beschichtungszusammensetzung kann je nach erwünschter Anwendung ein oder mehrere üblicherweise eingesetzte Additive als Komponente (E) enthalten. Vorzugsweise sind diese Additive (E) ausgewählt aus der Gruppe bestehend aus Antioxidantien, Antistatika, Netz- und Dispergiermitteln, Verlaufshilfsmitteln, Löslichkeitsvermittlern, Entschäumungsmitteln, Benetzungsmitteln, Stabilisierungsmitteln, vorzugsweise Hitze- und/oder Wäreme-Stabilisatoren, Prozess-Stabilisatoren und UV- und/oder Licht-Stabilisatoren, Lichtschutzmitteln, Entlüftern, Inhibitoren, Katalysatoren, Flexibilisierungsmitteln, Flammschutzmitteln, Reaktivverdünnern, Trägermedien, Hydrophobierungsmitteln, Hydrophilierungsmitteln, Schlagzähmachern, Blähmitteln, Prozesshilfsmitteln, Weichmachern, und Gemischen aus den vorstehend genannten weiteren Additiven. Der Additiv-Gehalt an Additiv (E) in der erfindungsgemäßen Beschichtungszusammensetzung kann variieren. Vorzugsweise liegt der Gehalt, bezogen auf das Gesamtgewicht der erfindungsgemäßen Beschichtungszusammensetzung bei 0,01 bis 20,0 Gew.-%, noch bevorzugter bei 0,05 bis 18,0 Gew.-%, besonders bevorzugt bei 0,1 bis 16,0 Gew.-%, ganz besonders bevorzugt bei 0,1 bis 14,0 Gew.-%, insbesondere bei 0,1 bis 12,0 Gew.-% und am meisten bevorzugt bei 0,1 bis 10,0 Gew.-%.

Die erfindungsgemäße Beschichtungszusammensetzung kann dadurch hergestellt werden, dass die jeweiligen Komponenten, die vorstehend beschrieben worden sind, in einem Medium auf Wasserbasis beispielsweise mittels Schnellrührer, Rührkessel, Rührwerksmühlen, Dissolver, Kneter, oder In-Line-Dissolver gemischt und dispergiert und/oder gelöst werden, gegebenenfalls unter zusätzlicher Wasserzugabe.

### Verwendung

Ein weiterer Gegenstand der vorliegenden Erfindung ist eine Verwendung der erfindungsgemäßen Beschichtungszusammensetzung zur zumindest teilweisen Beschichtung eines gegebenenfalls beschichteten Substrats mit einer Basislackschicht.

Als Substrat eignen sich beispielsweise zu beschichtende Gegenstände aus Metall oder Kunststoff wie daraus hergestellte Karosserien und deren Teile von Automobilen wie Personenkraftwagen, Lastwagen, Motorrädern und Autobussen, und aus Metall oder Kunststoff hergestellte Teile von elektrischen Haushaltsprodukten.

### Verfahren, Basislackschicht und Substrat

Ein weiterer Gegenstand der vorliegenden Erfindung ist ein Verfahren zur zumindest teilweisen Beschichtung eines gegebenenfalls beschichteten Substrats mit einer Basislackschicht umfassend wenigstens einen Schritt (a):
(a) zumindest teilweise Beschichtung wenigstens eines gegebenenfalls beschichteten Substrats mit einer Basislackschicht mit der erfindungsgemäßen wässrigen Beschichtungszusammensetzung.

Schritt (a) erfolgt dabei durch zumindest teilweises Kontaktieren des Substrats mit der erfindungsgemäßen Beschichtungszusammensetzung.

Gegebenenfalls kann auf Schritt (a) ein weiterer Schritt (b) folgen, nämlich das Aufbringen einer weiteren Schicht, vorzugsweise einer Klarlackschicht, auf die nach Schritt (a) aufgebrachte Basislackschicht. In diesem Fall ist das erfindungsgemäße Verfahren ein Verfahren zum Erhalt einer Mehrschichtlackierung.

Ein weiterer Gegenstand der vorliegenden Erfindung ist eine Basislackschicht, welche erhältlich ist durch zumindest teilweise Beschichtung wenigstens eines gegebenenfalls beschichteten Substrats mit der erfindungsgemäßen wässrigen Beschichtungszusammensetzung oder welche erhältlich ist durch das erfindungsgemäße Verfahren.

Ein weiterer Gegenstand der vorliegenden Erfindung ist ein zumindest teilweise mit der erfindungsgemäßen wässrigen Beschichtungszusammensetzung oder mit der erfindungsgemäßen Basislackschicht beschichtetes Substrat.

Die erfindungsgemäße Beschichtungszusammensetzung kann dabei direkt oder nach dem vorangegangenen zumindest teilweisen Auftragen einer Grundbeschichtungszusammensetzung (Grundierung) und erforderlichenfalls nach dem zumindest teilweisen Auftrag einer weiteren Beschichtungszusammensetzung wie einer Füllerschicht auf die Grundierung auf die zu beschichtenden Gegenstände aufgebracht werden. Anschließend erfolgt vorzugsweise ein Härten dieser Beschichtungsfilme. Vorzugsweise wird die erfindungsgemäße Beschichtungszusammensetzung als Lackierung auf Automobilkarosserien und deren Teile aufgebracht. Die zu beschichtenden metallischen Gegenstände werden zuvor bevorzugt einer chemischen Behandlung mit Phosphaten und Chromaten, vorzugsweise Phosphaten wie Metallphosphaten, insbesondere Zinkphosphaten, unterworfen.

Die erfindungsgemäße Beschichtungszusammensetzung kann auf diese zu beschichtenden Substrate durch ein elektrostatisches Beschichten, durch ein Luftspraybeschichten und durch luftloses Spraybeschichten beschichtet werden. Die Dicke des dadurch erhaltenen Überzugsfilms davon fällt vorzugsweise in einen Bereich von 5 bis 35 µm, insbesondere 10 bis 25 µm, als gehärteter Überzugsfilm. Der Überzugsfilm kann beispielsweise dadurch getrocknet werden, dass er 2 bis 40 Minuten, vorzugsweise 5 bis 20 Minuten, lang auf 50 bis 100°C (Ofentemperatur) erhitzt wird.

Eine klare Beschichtungszusammensetzung kann auf den Überzugsfilm aus der erfindungsgemäßen Beschichtungszusammensetzung nach dessen Härtung oder ohne dessen Härtung, d.h. auf eine beschichtete Seite davon, durch ein "2-mal-Aufschichten-1-mal-Härten" (2C1B)-Verfahren oder ein "2-mal-Aufschichten-2-mal-Härten" (2C2B)-Verfahren beschichtet werden.

Die klare Beschichtungszusammensetzung zum Auftrag eines solchen Klarlacks kann dadurch aufgeschichtet werden, dass zuerst die erfindungsgemäße Beschichtungszusammensetzung auf das zu beschichtende Substrat in der vorstehend beschriebenen Art und Weise aufgeschichtet wird und dass man die klare Beschichtungszusammensetzung mit einem auf vorzugsweise 30 bis 80 Gew.-% kontrollierten Feststoffgehalt in der Beschichtungszusammensetzung auf eine beschichtete Oberfläche davon durch ein elektrostatisches Beschichten, ein Luftsprühbeschichten und ein luftloses Sprühbeschichten nach dem Härten eines Überzugsfilms davon durch Erhitzen oder im nicht-gehärteten Zustand aufgeschichtet wird. Die Filmdicke der klaren Beschichtungszusammensetzung fällt vorzugsweise in einen Bereich von gewöhnlich 5 bis 100 µm, insbesondere 20 bis 80 µm, bezogen auf den gehärteten Überzugsfilm. Der gesamte Überzugsfilm kann dadurch gehärtet werden, dass er 10 bis 40 Minuten lang auf 100 bis 180°C erhitzt wird.

### Bestimmungsmethoden

### 1. Beurteilung des Auftretens von Kochern und Läufern

Zur Bestimmung der Kocher- und Läuferneigung einer erfindungsgemäßen Beschichtungszusammensetzung (oder einer Vergleichsbeschichtungszusammensetzung) werden in Anlehnung an DIN EN ISO 28199-1 (Datum: Januar 2010) und DIN EN ISO 28199-3 (Datum: Januar 2010) Mehrschichtlackierungen nach der folgenden allgemeinen Vorschrift hergestellt:
Ein mit einer Standard-Grundierung beschichtetes Lochblech der Abmessungen 57 cm x 20 cm aus Stahl (gemäß DIN EN ISO 28199-1, Punkt 8.1, Ausführung A) wird mit einem wässrigen Standard-Füller (SecuBloc® der Firma BASF Coatings GmbH) bei einer Zielschichtdicke (Trockenschichtdicke) von 25-35 µm beschichtet. Nach 5-10 Minuten des Ablüftens bei 18-23°C sowie einem Zwischentrocknen des Füllers über einen Zeitraum von 10 Minuten bei 70 °C wird dieser bei einer Temperatur von 150 °C über einen Zeitraum von 10 Minuten eingebrannt. Analog DIN EN ISO 28199-1, Punkt 8.2 werden die so erhaltenen beschichteten Stahltafeln mit einer erfindungsgemäßen Beschichtungszusammensetzung oder einer Vergleichsbeschichtungszusammensetzung als Wasserbasislack elektrostatisch keilförmig (d.h. mittels Keilauftrag) mit verschiedenen Schichtdicken im Bereich von 0 µm bis 30 µm appliziert. Die resultierende Wasserbasislackschicht wird nach einer Ablüftzeit bei 18-23°C von 4 Minuten und 30 Sekunden im Umluftofen für 5 Minuten bei 70 °C getrocknet. Im Falle der Prüfung auf Läufer werden die Bleche dabei senkrecht stehend abgelüftet und getrocknet. Auf die getrocknete Wasserbasislackschicht wird ein handelsüblicher Zweikomponenten-Klarlack (ProGloss® der BASF Coatings GmbH) mit einer Zielschichtdicke (Trockenschichtdicke) von 40-45 µm appliziert. Die resultierende Klarlackschicht wird für eine Dauer von 7 Minuten bei 18-23°C abgelüftet. Anschließend erfolgt eine Härtung im Umluftofen bei 140 °C für eine Dauer von 22 Minuten.

Die Bestimmung der Kochergrenze, d.h. derjenigen Basislackschichtdicke, ab der Kocher auftreten, erfolgt nach DIN EN ISO 28199-3, Punkt 5. Die Bestimmung der Läuferneigung wird nach DIN EN ISO 28199-3, Punkt 4 durchgeführt. Zusätzlich zu der Schichtdicke, bei der ein Läufer die Länge von 10 mm ab Unterkante des Loches überschreitet, wird diejenige Schichtdicke bestimmt, ab der eine erste Läuferneigung an einem Loch visuell zu beobachten ist.

Die jeweiligen Schichtdicken werden nach DIN EN ISO 2808 (Datum: Mai 2007), Verfahren 12A (mit dem Messgerät MiniTest® 3100 - 4100 der Firma ElektroPhysik) bestimmt.

### 2. Bestimmung des Verlaufs nach Schwitzwasserbehandlung

Die Beurteilung des Verlaufes bzw. der Welligkeit der beschichteten Substrate wird mit einem Wave scan Messgerät der Firma Byk/Gardner durchgeführt. Die beschichteten Substrate werden wie nachfolgend beschrieben hergestellt: Auf einem mit einer gehärteten Standard-Grundierung beschichteten metallischen Substrat der Abmessung 10 x 20 cm wird eine erfindungsgemäße Beschichtungszusammensetzung oder eine Vergleichsbeschichtungszusammensetzung als Wasserbasislack pneumatisch mit einer Ziel-Trockenschichtdicke von 12-14 µm appliziert. Die resultierende Wasserbasislackschicht wird anschließend nach einer Ablüftzeit bei Raumtemperatur von 5 Minuten im Umluftofen für 10 Minuten bei 80 °C getrocknet. Auf die getrocknete Wasserbasislackschicht wird ein handelsüblicher Zweikomponenten-Klarlack (ProGloss der BASF Coatings GmbH) mit einer Zielschichtdicke von 40-45 µm appliziert. Die resultierende Klarlackschicht wird während 10 Minuten bei Raumtemperatur abgelüftet; anschließend erfolgt die Härtung im Umluftofen bei 140 °C für weitere 20 Minuten. Zur Beurteilung des Verlaufes bzw. der Welligkeit der beschichteten Substrate wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild). Diese Messungen werden vor und nach Schwitzwasserbelastung durchgeführt. Dazu werden die beschichteten Substrate über einen Zeitraum von 10 Tagen in einer Klimakammer nach Prüfklima CH nach DIN EN ISO 6270-2 (Datum: September 2005) gelagert. Anschließend werden die beschichteten Substrate 24 Stunden nach Entnahme aus der Klimakammer visuell bezüglich einer Blasenbildung untersucht sowie der Verlauf bzw. die Welligkeit beurteilt.

### 3. Bestimmung der Wolkigkeit

Unter der Wolkigkeit einer Lackierung versteht man nach DIN EN ISO 4618 (Datum: März 2007) das uneinheitliche Aussehen einer Lackierung, verursacht durch unregelmäßige, willkürlich auf der Oberfläche verteilte Bereiche, die sich in Farbe und/oder Glanz unterscheiden. Eine derartige, fleckenähnliche Inhomogenität stört den gleichmäßigen Gesamteindruck der Lackierung und ist in der Regel unerwünscht. Die unerwünschte Wolkigkeit der Lackierung kann beispielsweise durch die Eigenschaften der eingesetzten Beschichtungszusammensetzung bedingt sein.

Zur Bestimmung bzw. Beurteilung der Wolkigkeit werden Mehrschichtlackierungen nach der folgenden allgemeinen Vorschrift hergestellt:
Ein mit einer Standard-Füllerlackierung (SecuBloc® der Firma BASF Coatings GmbH) beschichtetes Stahlblech der Abmessungen 32 cm x 60 cm wird mit einer erfindungsgemäßen Beschichtungszusammensetzung oder einer Vergleichsbeschichtungszusammensetzung als Wasserbasislack mittels Zweifachauftrag appliziert: die Applikation im ersten Schritt erfolgt elektrostatisch mit einer Zielschichtdicke (Trockenschichtdicke) von 8-9 µm, im zweiten Schritt wird nach einer 2-minüten Ablüftzeit bei 18-23°C pneumatisch mit einer Zielschichtdicke von 4-5 µm (Trockenschichtdicke) appliziert. Die resultierende Wasserbasislackschicht wird anschließend nach erneuter Ablüftzeit bei 18-23°C über eine Dauer von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Zielschichtdicke (Trockenschichtdicke) von 40-45 µm appliziert. Die resultierende Klarlackschicht wird während 10 Minuten bei 18-23°C abgelüftet. Anschließend erfolgt eine Härtung im Umluftofen bei 140 °C für 20 Minuten.

Die Beurteilung der Wolkigkeit erfolgt visuell unter definierten Lichtverhältnissen und Beobachtungsgeometrien. Die Wolkigkeit wird dabei anhand einer Notenskala bewertet (Note 1 = keine Wolkigkeit erkennbar bis Note 5 = starke Wolkigkeit sichtbar). Dazu werden die entsprechenden Lackierungen unter diffusem Licht in zwei verschiedenen Winkeln aus einem Abstand von 2 bis 3 Metern betrachtet (a) Aufsicht: Betrachtungswinkel beträgt etwa 80° und (b) Schrägsicht: Betrachtungswinkel beträgt etwa 40°).

### 4. Bestimmung des schichtdickenabhängigen Verlaufs

Zur Bestimmung bzw. Beurteilung des schichtdickenabhängigen Verlaufs werden Keillackierungen der erfindungsgemäßen Beschichtungszusammensetzungen oder Vergleichsbeschichtungszusammensetzungen als Wasserbasislacke nach folgender allgemeiner Vorschrift hergestellt:
Auf ein mit einer Standard-Grundierung beschichtetes metallisches Stahlblech der Abmessung 32 cm x 60 cm wird nach Aufbringen von zwei Klebestreifen (Tesaband, 19 mm) auf eine Längskante (um nach der Beschichtung Schichtdickendifferenzen ermitteln zu können) eine erfindungsgemäße Beschichtungszusammensetzung oder eine Vergleichsbeschichtungszusammensetzung als Wasserbasislack elektrostatisch als Keil (keilförmig) mit einer Schichtdicke von 0 µm bis 30 µm (Trockenschichtdicke) appliziert. Die resultierende Wasserbasislackschicht wird nach einer Ablüftzeit bei 18-23°C von 5 Minuten im Umluftofen für 5 Minuten bei 80 °C getrocknet. Nach Entfernen eines der beiden Klebestreifen wird auf die getrocknete Wasserbasislackschicht ein handelsüblicher Zweikomponenten-Klarlack (ProGloss® der BASF Coatings GmbH) mit einer Zielschichtdicke von 40-45 µm (Trockenschichtdicke) appliziert. Die resultierende Klarlackschicht wird während 4 Minuten bei 18-23°C abgelüftet. Anschließend erfolgt eine Härtung im Umluftofen bei 140 °C für 20 Minuten. Nach Entfernung des zweiten Klebestreifens werden die Trockenschichtdicke des Klarlackes kontrolliert sowie für den Basislackkeil die Schichtdickenbereiche 10-15 µm, 15-20 µm, 20-25 µm sowie 25-30 µm auf dem Stahlblech markiert. Die jeweiligen Schichtdicken werden nach DIN EN ISO 2808 (Datum: Mai 2007), Verfahren 12A (mit dem Messgerät MiniTest® 3100 - 4100 der Firma ElektroPhysik) bestimmt.

Die Bestimmung bzw. Beurteilung des schichtdickenabhängigen Verlaufs erfolgt mit Hilfe des Messgerätes Wave scan der Firma Byk/Gardner innerhalb der vier zuvor ermittelten Basislack-Schichtdickenbereiche (10-15 µm, 15-20 µm, 20-25 µm und 25-30 µm). Zu diesem Zweck wird ein Laserstrahl unter einem Winkel von 60° auf die zu untersuchende Oberfläche gerichtet, und es werden auf einer Messstrecke von 10 cm die Schwankungen des reflektierten Lichts im sogenannten short wave-Bereich (0,3 bis 1,2 mm) und im sogenannten long wave-Bereich (1,2 bis 12 mm) mit Hilfe des Messgeräts registriert (long wave = LW; short wave = SW; je niedriger die Werte, desto besser ist das Erscheinungsbild).

### 5. Bestimmung des Auftragswirkungsgrades

Zur Bestimmung des Auftragswirkungsgrades werden Mehrschichtlackierungen nach folgender allgemeiner Vorschrift hergestellt:
Ein mit einer Standard-Füllerlackierung (z.B. SecuBloc® der Firma BASF Coatings GmbH) beschichtetes Coil-Blech der Abmessungen 100 cm x 32 cm wird jeweils in 8 cm Abstand zu den Längskanten mit Klebestreifen (Tesaband, 30 mm) versehen, um nach der Beschichtung Schichtdickendifferenzen ermitteln zu können. Dieses Substrat wird mit einer erfindungsgemäßen Beschichtungszusammensetzung oder einer Vergleichsbeschichtungszusammensetzung als Wasserbasislack elektrostatisch beschichtet, indem ein Zerstäuber mehrfach waagerecht über die Mitte der langen Seite des Coil-Bleches von links nach rechts fährt und so ein sogenanntes Spritzbild generiert, welches der Fachmann üblicherweise zur Analyse des SB50%-Wertes nutzt. Unter dem SB50%-Wert wird der 50%ige Spritzbilddurchmesser verstanden, d.h. die Breitenausdehnung eines Spritzbildes, bei der die Schichte die Hälfte des Maximalwertes einnimmt. Die Lackierparameter wie Ausflussrate, Drehzahl, Hochspannung, Bandgeschwindigkeit etc. werden dabei jeweils so ausgewählt, dass der SB50% ca. 10 cm beträgt. Die resultierende Wasserbasislackschicht wird nach einer Ablüftzeit von 5 Minuten bei 18-23°C im Umluftofen für 10 Minuten bei 80 °C getrocknet, anschließend erfolgt eine weitere Trocknung für 20 Minuten bei 140 °C im Umluftofen.

Zur Ermittlung einer Kennzahl für die abgeschiedene Menge Basislack und damit des Auftragswirkungsgrades werden folgende Schritte a) bis e) unternommen:
a) Messung der Schichtdicken gemäß DIN EN ISO 2808 Verfahren 12A ((Datum: Mai 2007). mit dem Messgerät MiniTest® 3100 - 4100 der Firma ElektroPhysik) parallel zur Längsseite des Substrates in einem Raster von 2 cm an sechs Positionen entlang der Querseite (45 mm, 90 mm, 135 mm, 180 mm, 225 mm und 270 mm von der linken Längsseite des Bleches ausgehend; bei den Rastern bei 90 mm und 225 mm handelt es sich um die vormals abgeklebten Stellen, welche zur Ermittlung von Schichtdickendifferenzen benötigt werden),
b) Bestimmung der vier tatsächlichen Basislackschichtdickenprofile entlang der Längsseite des Substrates durch Berechnung der Schichtdickendifferenzen der Messungen bei 45 mm / 90 mm, 135 mm / 90 mm, 180 mm / 225 mm sowie 270 mm / 180 mm,
c) Berechnung eines mittleren Schichtdickenprofils durch Mittelwertbildung der vier einzelnen Schichtdickenprofile,
d) Fitten einer Kurve auf Basis der Messpunkte des gemittelten Schichtdickenprofils und
e) Bestimmung des Integrals unter dieser Kurve als Kennwert für die Menge des abgeschiedenen Basislackes und damit als Kennwert für den Auftragswirkungsgrad.

Je größer das bestimmte Flächenintegral ist, desto höher und besser ist der Auftragswirkungsgrad.

### 6. Bestimmung des nicht-flüchtigen Anteils

Die Bestimmung des nicht-flüchtigen Anteils erfolgt gemäß DIN EN ISO 3251 (Datum: Juni 2008). Dabei werden 1 g Probe in eine vorher getrocknete Aluminiumschale eingewogen und 60 Minuten bei 125 °C im Trockenschrank getrocknet, im Exsikkator abgekühlt, und dann zurückgewogen. Der Rückstand bezogen auf die Gesamtmenge der eingesetzten Probe entspricht dem nicht-flüchtigen Anteil. Das Volumen des nicht-flüchtigen Anteils kann falls erforderlich gegebenenfalls gemäß DIN 53219 (Datum: August 2009) bestimmt werden.

### 7. Bestimmung des zahlenmittleren und des gewichtsmittleren Molekulargewichts

Die Bestimmung des zahlenmittleren Molekulargewichts (Mₙ) erfolgt mittels Gel-Permeations-Chromatographie (GPC). Die Bestimmungsmethode ist dabei angelehnt an DIN 55672-1 (Datum: August 2007). Neben dem zahlenmittleren Molekulargewicht können mit dieser Methode zudem das gewichtsmittlere Molekulargewicht (M_{w}) sowie die Polydispersität (Verhältnis von gewichtsmittlerem Molekulargewicht (M_{w}) zu zahlenmittlerem Molekulargewicht (Mₙ)) bestimmt werden. Als Eluent wird Tetrahydrofuran eingesetzt. Die Bestimmung erfolgt gegen Polystyrol-Standards. Das Säulenmaterial besteht aus Styrol-Divinylbenzol-Copolymeren.

### 8. Bestimmung der Hydroxyl-Zahl (OH-Zahl)

Die Bestimmung der OH-Zahl erfolgt nach DIN 53240-2 (Datum: November 2007). Dabei werden die OH-Gruppen durch Acetylierung mit einem Überschuss Essigsäureanhydrid umgesetzt. Anschließend wird das überschüssige Essigsäureanhydrid durch Wasserzugabe zur Essigsäure aufgespalten und die gesamte Essigsäure mit ethanolischer KOH zurücktitriert. Die OH-Zahl gibt die Menge KOH in mg an, die der bei der Acetylierung von 1 g Probe gebundenen Menge an Essigsäure äquivalent ist.

### 9. Bestimmung der Steinschlaghaftung

Zur Bestimmung bzw. Beurteilung der Steinschlaghaftung werden Mehrschichtlackierungen nach der folgenden allgemeinen Vorschrift hergestellt:
Auf ein mit einer Standard-Grundierung beschichtetes metallisches Substrat wie einem Stahlblech der Abmessung 10 cm x 20 cm wird eine erfindungsgemäße Beschichtungszusammensetzung oder eine Vergleichsbeschichtungszusammensetzung als Wasserbasislack mittels manuellem Auftrag unter Verwendung einer Fließbecherpistole (der Firma DeVilbiss mit einer 1,1-1,3 mm Düse und einer Luftkappe 797) appliziert, wobei die Zielschichtdicke 16-19 µm beträgt (Trockenschichtdicke). Die resultierende Wasserbasislackschicht wird anschließend nach einer Ablüftzeit bei 18-23°C von 5 Minuten im Umluftofen für 10 Minuten bei 80 °C getrocknet. Auf die getrocknete Wasserbasislackschicht wird ein handelsüblicher Zweikomponenten-Klarlack (Evergloss® der BASF Coatings GmbH) mit einer Zielschichtdicke von 40-45 µm (Trockenschichtdicke) appliziert. Die resultierende Klarlackschicht wird für eine Dauer von 20 Minuten bei 18-23°C abgelüftet. Anschließend erfolgt eine Härtung im Umluftofen bei 140 °C für 20 Minuten.

Die so erhaltenen Mehrschichtlackierungen werden mittels des Steinschlagtests gemäß DIN EN ISO 20567-1, Verfahren B (Datum: April 2007) zur Beurteilung der Steinschlaghaftung untersucht. Die Beurteilung des sich ergebenden Schadensbildes erfolgt ebenfalls gemäß DIN EN ISO 20567-1.

### 10. Bestimmung der Säure-Zahl

Die Bestimmung der Säurezahl erfolgt gemäß DIN EN ISO 2114 (Datum: Juni 2002), wobei "Verfahren A" eingesetzt wird. Die Säurezahl entspricht der Masse an Kaliumhydroxid in mg, die zur Neutralisation von 1 g Probe unter den in der DIN EN ISO 2114 festgelegten Bedingungen erforderlich ist.

### 11. Beurteilung des Auftretens von Nadelstichen

Zur Beurteilung des Auftretens von Nadelstichen wird eine erfindungsgemäße Beschichtungszusammensetzung (oder eine Vergleichsbeschichtungszusammensetzung) als Wasserbasislack auf ein mit einer Füllerlackierung beschichtetes Stahlblech der Abmessungen 32 x 60 cm mittels Einfachauftrag appliziert. Zuvor wird das Stahlblech an einer Längskante mit zwei Klebstreifen (Tesaband, 19 mm) versehen, um nach der Beschichtung Schichtdickendifferenzen ermitteln zu können. Der Wasserbasislack wird dann elektrostatisch mit einer Trockenschichtdicke von 16-19 µm appliziert. Die resultierende Wasserbasislackschicht wird anschließend nach einer Ablüftzeit bei Raumtemperatur (18 bis 23°C) von 5 Minuten im Umluftofen für 10 Minuten bei 80 °C getrocknet. Nach Entfernen eines der beiden Klebestreifen wird auf die getrocknete Wasserbasislackschicht per Fließbecherpistole manuell ein handelsüblicher Zweikomponenten-Klarlack (Evergloss® der BASF Coatings GmbH) keilförmig mit einer Trockenschichtdicke von 0-55 µm appliziert. Die resultierende Klarlackschicht wird während 10 Minuten bei Raumtemperatur (18 bis 23°C) abgelüftet; anschließend erfolgt die Härtung im Umluftofen bei 140 °C für weitere 20 Minuten. Nach Entfernung des zweiten Klebestreifens wird die Trockenschichtdicke des Wasserbasislackes kontrolliert sowie für den Klarlackkeil die Schichtdickenbereiche 20-30 µm, 30-40 µm sowie 40-50 µm auf dem Stahlblech markiert. Die jeweiligen Schichtdicken werden dabei nach DIN EN ISO 2808 (Datum: Mai 2007), Verfahren 12A (z.B. mit dem Messgerät MiniTest 3100 - 4100 der Firma ElektroPhysik) bestimmt.

Die Auswertung der Nadelstiche erfolgt visuell in den drei getrennten Klarlack-Trockenschichtdickenbereichen (20-30 µm, 30-40 µm und 40-50 µm). Je Bereich wird die Anzahl der Nadelstiche ausgezählt. Alle Ergebnisse werden auf eine Fläche von 200 cm² normiert. Zusätzlich wird gegebenenfalls protokolliert, ab welcher Trockenschichtdicke der Klarlackschicht keine Nadelstiche mehr auftreten.

### 12. Bestimmung der Lagerstabilität von Beschichtungszusammensetzungen oder Vergleichsbeschichtungszusammensetzungen

Zur Bestimmung der Lagerstabilität der erfindungsgemäßen Beschichtungszusammensetzungen (oder von Vergleichsbeschichtungszusammensetzungen) werden diese vor und nach einer zweiwöchigen Lagerung bei 40 °C mit einem der DIN 53019-1 (Datum: September 2008) entsprechenden und nach DIN 53019-2 (Datum: Februar 2001) kalibrierten Rotationsviskosimeter unter temperierten Bedingungen (23,0 °C ± 0,2 °C) untersucht. Dabei werden die Proben zunächst 3 Minuten bei einer Scherrate von 100 s⁻¹ vorgeschert. Anschließend erfolgt eine Temperierung ohne Scherbelastung. Zur Messung einer sogenannten Fließkurve wird innerhalb von ca. 5 Minuten ein Scherratenbereich von 0,1 s⁻¹ bis 1000 s⁻¹ abgefahren (Aufwärtskurve). Danach wird für eine Minute bei 1000 s⁻¹ geschert (Haltezeit), bevor abschließend wiederum innerhalb von ca. 5 Minuten ein Scherratenbereich von 1000 s⁻¹ bis 0,1 s⁻¹ abgefahren wird (Abwärtskurve). Während der Auf- und Abwärtskurve werden 36, während der Haltezeit 10 Messpunkte erfasst. Das mittlere Viskositätsniveau während der Haltezeit (Hochscherviskosität) sowie das Viskositätsniveau bei 1 s⁻¹ (Niederscherviskosität), ermittelt aus der Abwärtskurve, werden aus den Messdaten ermittelt und die Werte vor und nach Lagerung miteinander verglichen.

### 13. Beurteilung des Auftretens von Stippen von Beschichtungszusammensetzungen oder Vergleichsbeschichtungszusammensetzungen

Zur Beurteilung des Auftretens von Stippen wird eine erfindungsgemäße Beschichtungszusammensetzung (oder eine Vergleichsbeschichtungszusammensetzung) als Wasserbasislack auf ein mit einer Füllerlackierung beschichtetes Stahlblech der Abmessungen 32 x 60 cm mittels Zweifachauftrag appliziert, wobei die Applikation im ersten Schritt elektrostatisch mit einer Trockenschichtdicke von 8-9 µm erfolgt und die Applikation im zweiten Schritt nach einer 2-minütigen Ablüftzeit bei Raumtemperatur (18 bis 23°C) pneumatisch mit einer Trockenschichtdicke von 4-5 µm erfolgt. Die resultierende Wasserbasislackschicht wird anschließend nach erneuter Ablüftzeit bei Raumtemperatur von 5 Minuten im Umluftofen für 5 Minuten bei 80 °C getrocknet. Auf die getrocknete Wasserbasislackschicht wird ein handelsüblicher Zweikomponenten-Klarlack (ProGloss® der BASF Coatings GmbH) mit einer Trockenschichtdicke von 40-45 µm appliziert. Die resultierende Klarlackschicht wird während einer Dauer 10 Minuten bei Raumtemperatur (18 bis 23°C) abgelüftet. Anschließend erfolgt eine Härtung im Umluftofen bei 140 °C für weitere 20 Minuten.

Die Auswertung von Stippen erfolgt visuell, dabei wird eine Note von 1-5 vergeben (1 = keine Stippen / 5 = sehr viele Stippen).

### 14. Beurteilung des Auftretens von Stippen bei Applikation der erfindungsgemäß eingesetzten wässrigen Dispersionen oder Vergleichsdispersionen auf ein Substrat

Zur Beurteilung des Auftretens von Stippen werden die Dispersionen gemäß der folgenden allgemeinen Vorschrift untersucht:
Die jeweilige Dispersion wird mittels einer 150 µm Kastenrakel auf eine Glastafel der Abmessungen 9 cm x 15 cm appliziert. Im nassen Zustand wird der so gebildete Film nach einer 60-minütigen Ablüftzeit bei 18 bis 23°C visuell hinsichtlich des Auftretens von Stippen beurteilt, indem er gegen eine Lichtquelle gehalten wird, um eventuelle Lufteinschlüsse nicht als Stippen fehlzuinterpretieren. Es wird eine Note von 1-5 vergeben (1 = keine Stippen / 5 = sehr viele Stippen).

### 15. Beurteilung der Homogenität und Wassermischbarkeit

Zur Beurteilung der Homogenität und Wassermischbarkeit werden die erfindungsgemäß eingesetzten wässrigen Dispersionen (oder Vergleichsdispersionen) gemäß der folgenden allgemeinen Vorschrift untersucht:
*a) Homogenität*: Es wird beurteilt, ob sich die einzelnen zur Herstellung der Dispersion eingesetzten Komponenten zu einer makroskopisch einphasigen Mischung (homogene Mischung) vermengen lassen oder ob sich beispielsweise bereits beim Einwiegen oder innerhalb von 5 bis 10 Minuten nach Zusammenrühren der Komponenten aufgrund einer Entmischung zwei oder mehrere Phasen ausbilden.
*b) Wassermischbarkeit*: Es wird beurteilt, inwiefern sich deionisiertes Wasser als letzte zur Herstellung der Dispersion eingesetzte Komponente mit den übrigen Bestandteilen der Dispersion mischen lässt. Ein Maß hierfür ist insbesondere die Menge an Scherenergie, die beim Mischen benötigt wird.

Es werden jeweils Noten von 1-5 vergeben (1 = sehr homogen / 5 = sehr inhomogen bzw. 1 = sehr gut wassermischbar / 5 = nicht wassermischbar).

Die nachfolgenden Beispiele und Vergleichsbeispiele dienen der Erläuterung der Erfindung, sind jedoch nicht einschränkend auszulegen.

### Beispiele und Vergleichsbeispiele

Sofern nicht anders angeführt, handelt es sich bei den Angaben in Teilen um Gewichtsteile und bei Angaben in Prozenten jeweils um Gewichtsprozente.

### 1. Eingesetzte Komponenten

Die nachfolgend genannten und zur Herstellung der erfindungsgemäßen Beschichtungszusammensetzungen oder Vergleichsbeschichtungszusammensetzungen eingesetzten Komponenten haben folgende Bedeutungen:
Disparlon® A650-20X ist ein kommerziell erhältliches Polyamid der Firma Kusumoto Chemicals, Ltd (Nicht-flüchtiger Anteil: 20 Gew.-%).
Disparlon® A670-20M ist ein kommerziell erhältliches Polyamid der Firma Kusumoto Chemicals, Ltd. (Nicht-flüchtiger Anteil: 20 Gew.-%).
Disparlon® A6900-20X ist ein kommerziell erhältliches Polyamid der Firma Kusumoto Chemicals, Ltd (Nicht-flüchtiger Anteil: 20 Gew.).
Thixatrol® P220X-MF ist ein kommerziell erhältliches Polyamid der Firma Elementis Specialties, Inc. (Nicht-flüchtiger Anteil: 20 Gew.-%, Säure-Zahl: 5 mg KOH/g).
Luvotix® AB ist ein kommerziell erhältliches Polyamid der Firma Lehmann & Voss & Co. (Nicht-flüchtiger Anteil: 100 Gew.-%; Säure-Zahl: ≤ 3 mg KOH/g).

Die erfindungsgemäß eingesetzte wässrige Dispersion eines Polyesters (I) wird hergestellt wie in Beispiel D der DE 40 09 858 A1 (Spalte 16, Zeilen 37-59) beschrieben, jedoch mit dem Unterschied, dass zum Anlösen anstelle von Butanol Butylglykol eingesetzt worden ist, und weist einen nicht-flüchtigen Anteil von 60 Gew.-% auf. Der Polyester weist eine Säure-Zahl von 30 mg KOH/g Polyester auf.

Polyester A (erfindungsgemäß eingesetzter Polyester) wird hergestellt, in dem in einen Reaktor, der mit einem Rührer, einem Thermometer und einer Füllkörperkolonne ausgestattet ist, 6,13 Gew.-Teile Neopentylglykol, 3,23 Gew.-Teile 1,6-Hexandiol, 7,78 Gew.-Teile Hexahydrophthalsäureanhydrid und 29,17 Gew.-Teile einer polymeren Fettsäure (Dimerengehalt mindestens 98 Gew.-%, Trimerengehalt höchstens 2 Gew.-%, Monomerengehalt höchstens Spuren) sowie 11,07 Gew.-Teile des kommerziell erhältlichen Produkts Bisphenol A 4EO, eingewogen und zum Schmelzen gebracht werden. Unter Rühren wird so aufgeheizt, dass die Kolonnenkopftemperatur 95°C nicht übersteigt. Es wird bei maximal 220° C so lange verestert, bis eine Säurezahl von 8,5 mg KOH/g erreicht ist. Nach Abkühlen auf 100°C werden 3,33 Gew.-Teile Trimellithsäureanhydrid zugegeben und weiter bei maximal 160°C verestert, bis eine Säurezahl von 30-35 mg KOH/g erreicht ist. Nach dem Abkühlen auf 90°C werden langsam 2,8 Gew.-Teile Dimethylethanolamin, 17,28 Gew.-Teile deionisiertes Wasser und 19,21 Gew.-Teile Butylglykol eingerührt. Man erhält eine feinteilige Dispersion mit einem pH-Wert von 7,3-8,5, einem nicht-flüchtigen Anteil von 60 Gew.-% und einer Säurezahl 35,3 mg KOH/g und einer OH-Zahl von 54 mg KOH/g. Diese Dispersion wird so als Polyester A eingesetzt.

Polyester B (erfindungsgemäß eingesetzter Polyester) wird hergestellt, in dem in einem Reaktor, der mit einem Rührer, einem Thermometer und einer Füllkörperkolonne ausgestattet ist, 6,87 Gew.-Teile Neopentylglykol, 7,23 Gew.-Teile 1,6-Hexandiol, 5,81 Gew.-Teile Hexahydrophthalsäureanhydrid und 32,66 Gew.-Teile einer polymeren Fettsäure (Dimerengehalt mindestens 98 Gew.-%, Trimerengehalt höchstens 2 Gew.-%, Monomerengehalt höchstens Spuren), 5,03 Gew.-Teile Dodecenylbernsteinsäure anhydrid, eingewogen und zum Schmelzen gebracht werden. Unter Rühren wird so aufgeheizt, dass die Kolonnenkopftemperatur 95°C nicht übersteigt. Es wird bei maximal 220° C so lange verestert, bis eine Säurezahl von 8,5 mg KOH/g erreicht ist. Nach Abkühlen auf 100°C werden 3,31 Gew.-Teile Trimellithsäureanhydrid zugegeben und weiter bei maximal 160°C verestert, bis eine Säurezahl von 30-35 mg KOH/g erreicht ist. Nach dem Abkühlen auf 90°C werden langsam 2,78 Gew.-Teile Dimethylethanolamin, 17,19 Gew.-Teile deionisiertes Wasser und 19,12 Gew.-Teile Butylglykol eingerührt. Man erhält eine feinteilige Dispersion mit einem pH-Wert von 7,3-8,5, einem nicht-flüchtigen Anteil von 60 Gew.-% und einer Säurezahl 35,5 mg KOH/g und einer OH-Zahl von 56 mg KOH/g. Diese Dispersion wird so als Polyester B eingesetzt.

Polyester C (nicht-erfindungsgemäß eingesetzter Polyester) wird hergestellt, in dem Maleinsäureanhydrid (MSA, 2,48 mol), Adipinsäure (AD, 2,72 mol) und 1,6-Hexandiol (HD, 7,01 mol) in einen 4-Liter-Reaktor aus rostfreiem Stahl, ausgestattet mit einer Kolonne, einem Kühler sowie einem Wasserabscheider gegeben werden. Anschließend erfolgte die Zugabe von 3% Xylol als Schleppmittel und 0.1% Methylhydrochinon (die prozentualen Angaben beziehen sich auf die Menge des eingesetzten MSA, AD und HD). Das resultierende Reaktionsgemisch wurde innerhalb von 5 Stunden unter Magerluft aufgeheizt. Während der gesamten Reaktionszeit überschritt die Temperatur des Reaktionsgemischs 230 °C nicht. Nachdem eine Säurezahl von 2 mg KOH/g bezogen auf den Oligoester erreicht worden war, wurde das Reaktionsgemisch auf 80 °C abgekühlt. Anschließend wurde *in situ* Trimellithsäureanhydrid (TMSA, 0,95 mol) hinzugegeben. Danach wurde langsam bis 160°C aufgeheizt und diese Temperatur beibehalten, bis eine Säurezahl von 35 mg KOH/g bezogen auf den resultierenden Oligoester erreicht worden war. Nach erneutem Abkühlen auf 80 °C wurde Dimethylethanolamin (DMEA, 0,77 mol) über einen Zeitraum von 30 Minuten hinzugegeben. Anschließend erfolgte die Zugabe von Wasser um einen Festkörpergehalt von 25 Gew.-% einzustellen über einen Zeitraum von 30 Minuten. Die resultierende Dispersion wurde für eine weitere Stunde bei 80 °C gerührt und anschließend auf 18-23°C abgekühlt. Diese Dispersion wird so als Polyester C eingesetzt. Der in der Dispersion enthaltene alpha,omega-hydroxyfunktionalisierte Oligoester weist eine OH-Zahl von 58 mg KOH/g, eine Säurezahl von 35 mg KOH/g und ein zahlenmittleres Molekulargewicht von 3618 g/mol sowie ein gewichtsmittleres Molekulargewicht von 25400 g/mol auf.

Resimene® HM 2608 ist ein kommerziell erhältliches Melamin-Formaldehyd-Harz der Firma Ineos (Nicht-flüchtiger Anteil: 80-85 Gew.-%).
Lipotin® A ist ein kommerziell erhältliches Netz- und Dispergiermittel der Firma Evonik Industries AG.
Alu Stapa Hydrolux® 2154, 8154 & VP56450 sind handelsübliche Aluminiumpigmente, erhältlich von der Firma Altana-Eckart.
Rheovis® AS 1130 ist eine kommerziell erhältliche wässrige Lösung der Firma BASF SE enthaltend 30 Gew.-% eines Verdickers basierend auf einem Acryl-Copolymer.

Rheovis® PU 1250 ist eine kommerziell erhältliche wässrige Butyldiglykol-Lösung der Firma BASF SE enthaltend 40 Gew.-% eines Verdickers basierend auf einem Polyurethan.
Pluriol® E300 ist ein kommerziell erhältliches Polyethylenglykol der Firma BASF SE. Agitan® 282 ist ein kommerziell erhältlicher Entschäumer der Firma Münzing Chemie GmbH.
Dispex® Ultra FA 4437 ist ein kommerziell erhältliches Verlaufshilfsmittel, erhältlich von der Firma BASF SE.

Die wässrige Dispersion wenigstens eines polymeren Harzes (I) wird hergestellt wie auf Seite 7, Zeile 55 bis Seite 8, Zeile 23 der DE 44 37 535 A1 beschrieben.

Bei der wässrigen Dispersion wenigstens eines polymeren Harzes (II) handelt es sich um eine Dispersion eines Poly(meth)acrylat-Harzes mit einem nicht-flüchtigen Anteil von 26-28 Gew.-%.

Die wässrige Dispersion eines polymeren Harzes (III) wird hergestellt wie auf Seite 14, Zeile 13 bis Seite 15, Zeile 28 der WO 92/15405 A1 (darin als Beispiel 1.3) beschrieben.

Byketol®-WS ist ein kommerziell erhältliches Oberflächenadditiv der Firma Altana/BYK-Chemie GmbH.
BYK®-346 ist ein kommerziell erhältliches Silikon-basiertes Tensid von der Firma Altana/BYK-Chemie GmbH.
Isopar® L ist ein Isoparaffin, erhältlich von der Firma Exxon Mobil.
Nacure® 2500 ist ein Amin-blockierter Säure-Katalysator, erhältlich von der Firma King Industries, Inc.
Die wässrige Polyamid-Dispersion I ist eine wässrige Dispersion enthaltend 31,5 Gewichtsteile deionisiertes Wasser, 18,5 Gewichtsteile Isobutanol und 50 Gewichtsteile des kommerziell erhältlichen Polyamids Disparlon® AQ600 der Firma Kusumoto Chemicals, Ltd (Nicht-flüchtiger Anteil: 20 Gew.-%; Säure-Zahl: 12,5 mg KOH/g, wobei diese Säure-Zahl nicht auf den nicht-flüchtigen Anteil, sondern auf das gesamte Produkt bezogen ist).

Die wässrige Polyamid-Dispersion II ist eine wässrige Dispersion enthaltend 78,5 Gewichtsteile deionisiertes Wasser, 0,5 Gewichtsteile Agitan® 282, 1 Gewichtsteil 2,4,7,9-Tetramethyl-5-decindiol in Butylglykol (52 Gew.-%) sowie 20 Gewichtsteile des kommerziell erhältlichen Polyamids Disparlon® AQ630 der Firma Kusumoto Chemicals, Ltd (Nicht-flüchtiger Anteil: 18 Gew.-%; Säure-Zahl: 12,5 mg KOH/g, wobei diese Säure-Zahl nicht auf den nicht-flüchtigen Anteil, sondern auf das gesamte Produkt bezogen ist).

### 2. Herstellung von erfindungsgemäß eingesetzten Dispersionen von Verdickungsmitteln

### 2.1 Herstellung von erfindungsgemäß eingesetzten Dispersionen der Verdickungsmittel X1 bis X3:

Es wird wenigstens ein organisches Lösemittel sowie gegebenenfalls wenigstens ein Neutralisationsmittel wie beispielsweise 2,4,7,9-Tetramethyl-5-decindiol vorgelegt. Zu der so erhaltenen Mischung wird unter Rühren bei einer Temperatur von 15-25°C wenigstens eines der vorstehend genannten kommerziell erhältlichen Polyamide gegeben. Zu dieser Mischung werden unter Rühren nacheinander oder gleichzeitig eine wässrige Dispersion eines Polyesters (I) und deionisiertes Wasser gegeben. Anschließend wird die resultierende Mischung über eine Dauer von 10 Minuten bei der vorstehend genannten Temperatur mittels des Geräts "Dispermat® LC30" der Firma VWA-Getzmann, Deutschland, bei einer Umfangsgeschwindigkeit der eingesetzten Rührscheibe von 15 bis 20 m/s unter Rühren homogenisiert.

Auf diese Weise werden aus den in nachfolgender Tabelle 1.1 aufgelisteten Komponenten die erfindungsgemäß eingesetzten Dispersionen der Verdickungsmittel **X1** bis **X3** erhalten. Die jeweiligen Mengenangaben stellen jeweils Gew.-%, bezogen auf das Gesamtgewicht der jeweiligen Dispersion, dar:

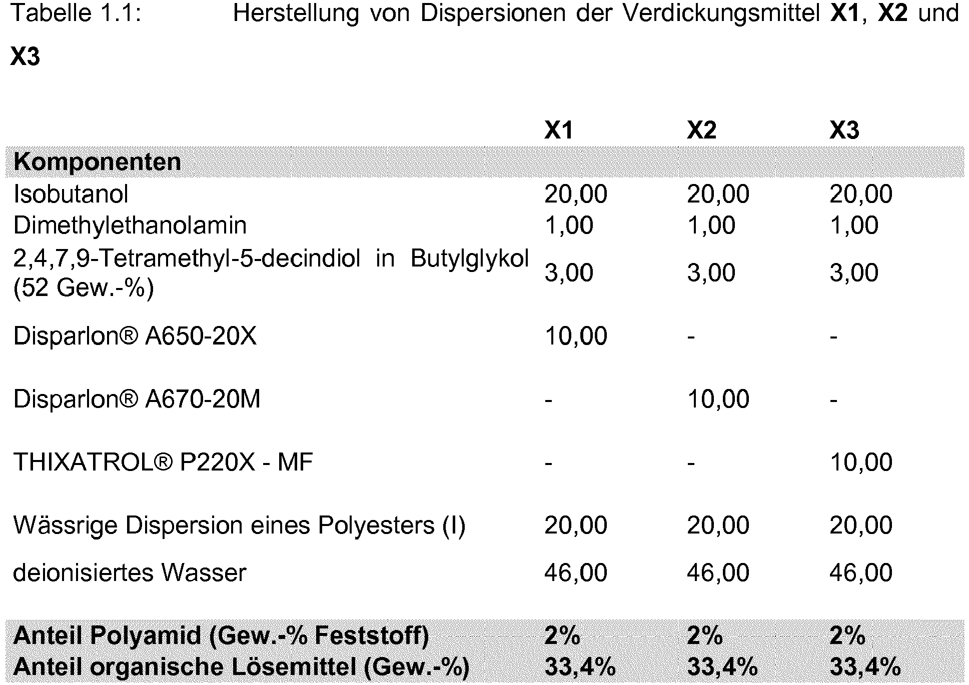

### 2.2 Herstellung von erfindungsgemäß eingesetzten Dispersionen der Verdickungsmittel X4 bis X11:

Die in der nachstehenden Tabelle 1.2 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren für 10 Minuten homogenisiert. Die Homogenisierung erfolgt wie vorstehend unter Punkt **2.1** beschrieben.

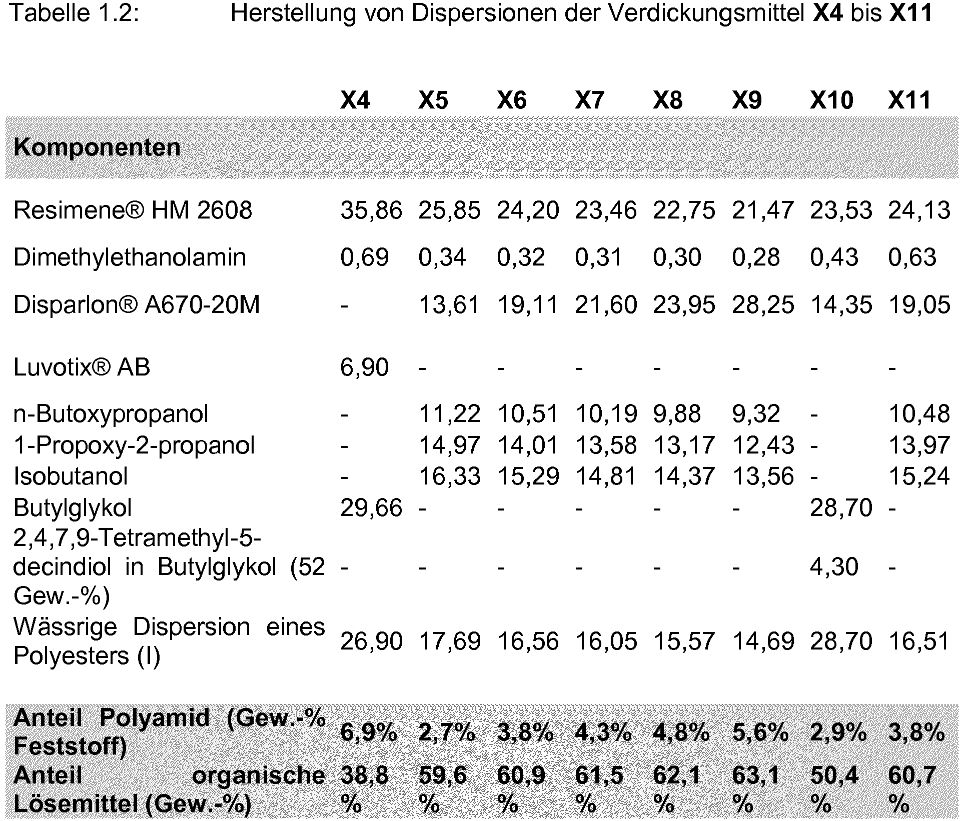

### 2.3 Herstellung von erfindungsgemäß eingesetzten Dispersionen der Verdickungsmittel X12 bis X13:

Die in der nachstehenden Tabelle 1.3 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

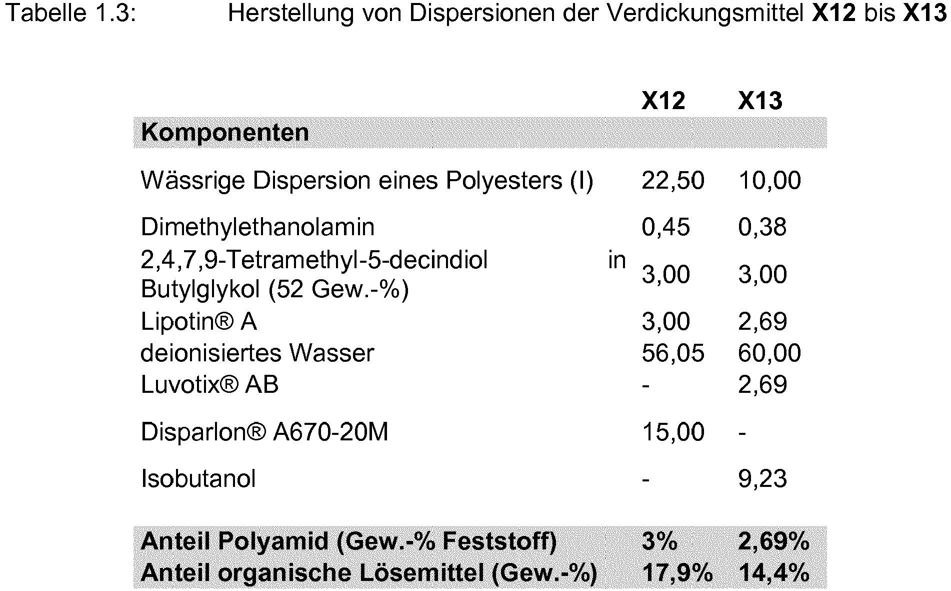

### 2.4 Herstellung von erfindungsgemäß eingesetzten Dispersionen der Verdickungsmittel X14 bis X19:

Die in der nachstehenden Tabelle 1.4 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

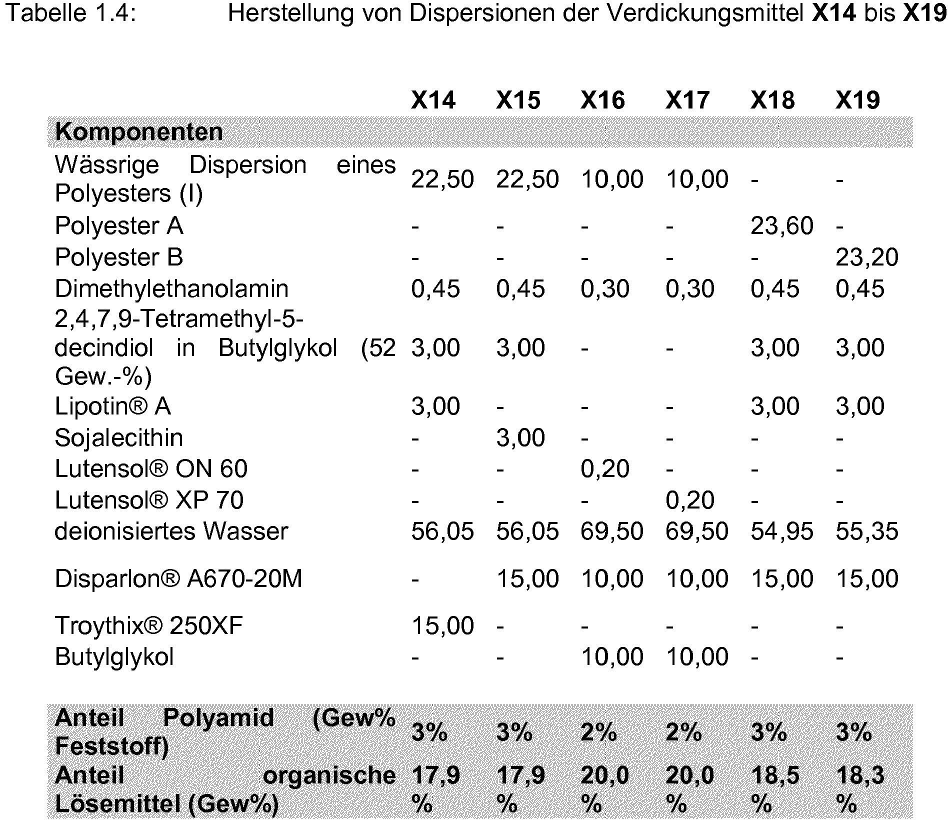

### 2.5 Herstellung von erfindungsgemäß eingesetzten Dispersionen der Verdickungsmittel X20 bis X22:

Die in der nachstehenden Tabelle 1.5 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

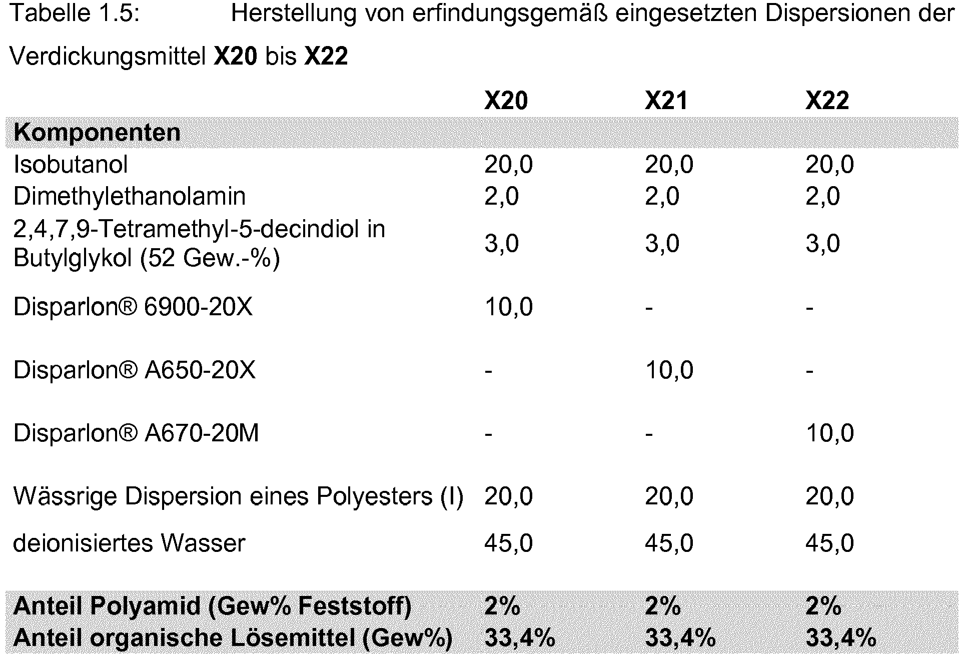

### 2.6 Herstellung einer erfindungsgemäß eingesetzten Dispersion des Verdickungsmittels X23 sowie einer nicht erfindungsgemäß eingesetzten Dispersion eines Verdickungsmittels Y1:

Die in der nachstehenden Tabelle 1.6 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

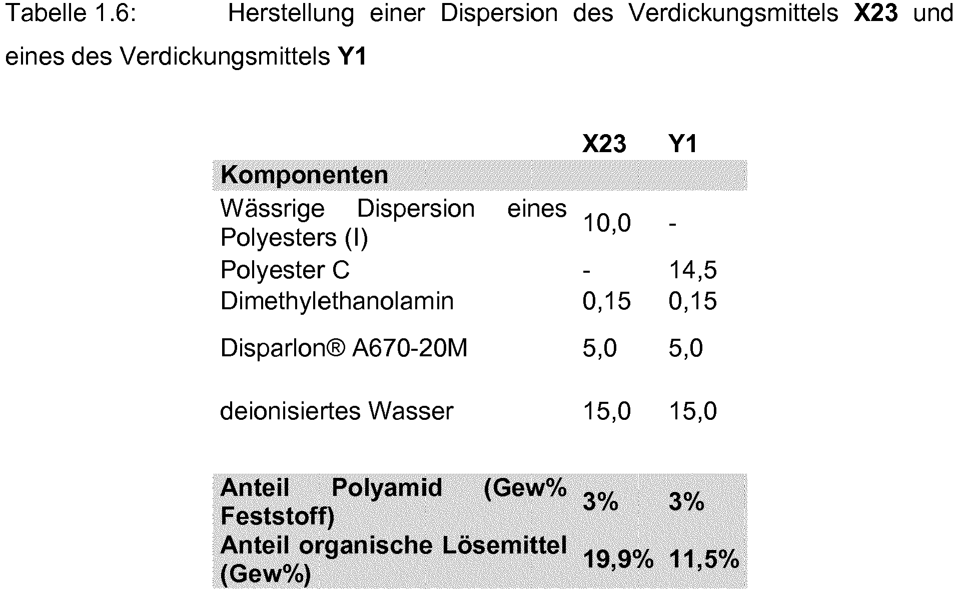

### 2.7 Herstellung von nicht-erfindungsgemäß eingesetzten Vergleichsdispersionen der Verdickungsmittel Y2 und Y3:

Die in der nachstehenden Tabelle 1.7 aufgelisteten Komponenten werden in der angegebenen Reihenfolge unter Rühren bei einer Temperatur von 15-25°C jeweils zu einer Mischung zusammengerührt. Anschließend wird diese Mischung jeweils bei der vorstehend genannten Temperatur unter Rühren über eine Dauer von 10 Minuten homogenisiert. Die Homogenisierung erfolgt wie vorstehend unter Punkt **2.1** beschrieben.

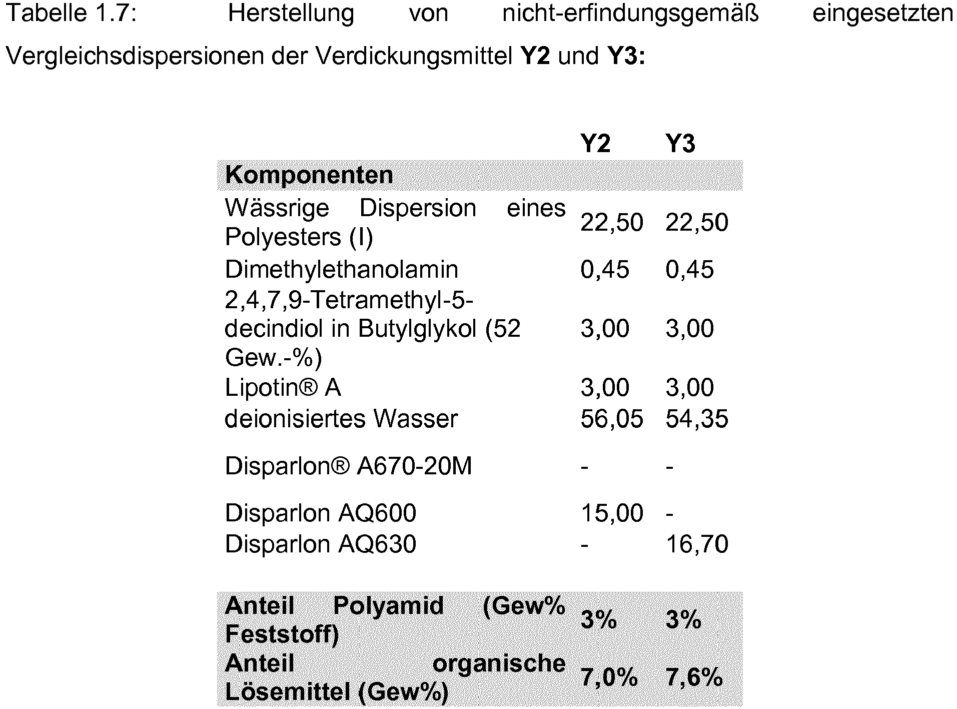

### 3. Herstellung von Pigment-haltigen Zusammensetzungen

Herstellung von Pigment-haltigen Zusammensetzungen, welche zur Herstellung von erfindungsgemäßen Beschichtungszusammensetzungen und Vergleichsbeschichtungszusammensetzungen eingesetzt werden

### Herstellung einer Blaupaste P1

Die Blaupaste P1 wird aus 69,8 Gewichtsteilen einer gemäß EP 0 228 003 B2, Seite 8, Zeilen 6-18 hergestellten Polyurethan-haltigen Dispersion, 12,5 Gewichtsteilen Paliogen® Blau L 6482 (erhältlich von der Firma BASF SE), 1,5 Gewichtsteilen einer 10%-igen wässrigen Dimethylethanolamin-Lösung (10 Gew.-% in Wasser), 1,2 Gewichtsteilen eines handelsüblichen Polyethers (Pluriol® P900, erhältlich von der Firma BASF SE) und 15 Gewichtsteilen deionisiertem Wasser hergestellt.

### Herstellung einer Rußpaste P2

Die Rußpaste P2 wird aus 57 Gewichtsteilen einer gemäß EP 0 228 003 B2, Seite 8, Zeilen 6-18 hergestellten Polyurethan-haltigen Dispersion, 10 Gewichtsteilen Ruß (Ruß Monarch® 1400 der Firma Cabot Corporation), 5 Gewichtsteilen der wässrigen Dispersion eines Polyesters (I), 6,5 Gewichtsteilen einer 10%-igen wässrigen Dimethylethanolamin-Lösung (10 Gew.-% in Wasser), 2,5 Gewichtsteilen eines handelsüblichen Polyethers (Pluriol® P900, erhältlich von der Firma BASF SE), 7 Gewichtsteilen Butyldiglykol und 12 Gewichtsteilen deionisiertem Wasser hergestellt.

### Herstellung einer Bariumsulfat-haltigen Paste P3

Die Bariumsulfat-haltige Paste P3 wird aus 39 Gewichtsteilen einer gemäß EP 0 228 003 B2, Seite 8, Zeilen 6-18 hergestellten Polyurethan-haltigen Dispersion, 54 Gewichtsteilen Bariumsulfat (Blanc fixe micro der Firma Sachtleben Chemie GmbH), 3,7 Gewichtsteilen Butylglykol und 0,3 Gewichtsteilen Agitan® 282 (ein kommerziell erhältliches Entschäumungsmittel erhältlich von der Firma Münzing Chemie GmbH) und 3 Gewichtsteilen deionisiertem Wasser hergestellt.

### Herstellung einer Talkum-haltigen Paste P4

Die Talkum-haltige Paste P4 wird aus 49,7 Gewichtsteilen einer gemäß WO 91/15528 A1, Seite 23, Zeile 26 bis Seite 25, Zeile 24 hergestellten wässrigen Bindemitteldispersion, 28,9 Gewichtsteilen Steatit® (Microtalc IT extra der Firma Mondo Minerals B.V.), 0,4 Gewichtsteilen Agitan 282 (erhältlich von der Firma Münzing Chemie GmbH), 1,45 Gewichtsteilen Disperbyk®-184 (erhältlich von der Firma BYK-Chemie GmbH), 3,1 Gewichtsteilen eines handelsüblichen Polyethers (Pluriol® P900, erhältlich von der Firma BASF SE) und 16,45 Gewichtsteilen deionisiertem Wasser hergestellt.

### 4. Herstellung von erfindungsgemäßen Beschichtungszusammensetzungen und Vergleichsbeschichtungszusammensetzungen

### 4.1 Allgemeine Arbeitsvorschrift zur Herstellung von erfindungsgemäßen Beschichtungszusammensetzungen und Vergleichsbeschichtungszusammensetzungen:

Die in den nachstehenden Tabellen jeweils unter "wässrige Phase" aufgeführten Komponenten werden in der angegebenen Reihenfolge jeweils zu einer wässrigen Mischung M1 zusammengerührt. Im nächsten Schritt wird aus den unter "organische Phase" aufgeführten Komponenten in den nachstehenden Tabellen jeweils eine organische Mischung M2 hergestellt. Die organische M2 Mischung wird zur wässrigen Mischung M1 gegeben. Sodann wird 10 min lang gerührt und mit Hilfe von deionisiertem Wasser und Dimethylethanolamin ein pH Wert von 8 und eine bestimmte Spritzviskosität bei einer Scherbelastung von 1000 s⁻¹, gemessen mit einem Rotations-Viskosimeter (Gerät Rheolab QC mit Temperiersystem C-LTD80/QC der Firma Anton Paar) bei 23°C, eingestellt.

Enthält eine der nachstehenden Tabellen zudem die weitere Rubrik "Mischlack", so werden diese darunter angeführten Komponenten in der angegebenen Reihenfolge jeweils zunächst zur Herstellung dieses Mischlacks zusammengerührt und über eine Dauer von 10 Minuten bei einer Temperatur von 15 bis 25°C durchmischt und dieser Mischlack dann zu der organischen Mischung M2 gegeben. Nachdem die resultierende Mischung aus Mischlack und organischer Mischung M2 über eine Dauer von 10 Minuten bei einer Temperatur von 15 bis 25°C gerührt worden ist, wird die so erhaltene Mischung dann zur wässrigen Mischung M1 gegeben und weiter wie vorstehend beschrieben verfahren.

Enthält eine der nachstehenden Tabellen lediglich die Rubrik "wässrige Phase", so werden die darunter aufgeführten Komponenten in der angegebenen Reihenfolge jeweils zu einer wässrigen Beschichtungszusammensetzung zusammengerührt und weiter wie vorstehend beschrieben verfahren.

Im Fall der Zusammensetzungen **V1** und **B1** sowie **V3** und **B3, B4, B5, B6, B7** und **B8** sowie **V6** und **V7** sowie von **B13** und **B14** und ferner von **B17, B18** und **B19** sowie von **V10** und **V11** wird jeweils eine Spritzviskosität von 95 ± 5 mPa·s eingestellt. Im Fall der Zusammensetzungen **V2** und **B2** sowie von **B15, B16** und **V9** wird jeweils eine Spritzviskosität von 85 ± 5 mPa·s eingestellt. Im Fall der Zusammensetzungen **V4** und **B9, B10** und **B11** wird jeweils eine Spritzviskosität von 90 ± 5 mPa·s eingestellt. Im Fall der Zusammensetzungen **V5** und **B12** wird jeweils eine Spritzviskosität von 105 ± 5 mPa·s eingestellt.

Die jeweiligen Mengenangaben in jeder der nachstehenden Tabellen stellen, sofern nicht anders angegeben, jeweils Gew.-% dar, bezogen auf das Gesamtgewicht der jeweiligen Zusammensetzung.

Die vorstehend unter Punkt **2.** beschriebenen Dispersionen werden direkt nach ihrer Herstellung zur Herstellung der erfindungsgemäßen Beschichtungszusammensetzungen und Vergleichsbeschichtungszusammensetzungen eingesetzt.

### 4.2 Beschichtungszusammensetzungen V1 (nicht erfindungsgemäß) und B1 (erfindungsgemäß)

**Tabelle 2.1: Herstellung von V1 und B1**

| | **V1** | **B1** |
|---|---|---|
| **Wässrige Phase:** | | |
| Wässrige Lösung eines Na-Mg-Schichtsilikats (3 Gew.-% in deionisiertem Wasser) | 25,00 | - |
| deionisiertes Wasser | 14,00 | 29,10 |
| Butylglykol | 4,34 | - |
| Dispersion des Verdickungsmittels **X4** | - | 14,50 |
| Wässrige Dispersion wenigstens eines polymeren Harzes (II) | 36,26 | 36,30 |
| Wässrige Dispersion eines Polyesters (I) | 3,92 | - |
| Resimene® HM 2608 | 5,18 | - |
| Dimethylethanolamin in Wasser (10 Gew.-%) | 0,77 | - |

| **Organische Phase:** | | |
|---|---|---|
| Alu Stapa Hydrolux® 8154 | 4,50 | 4,50 |
| Butylglykol | 5,60 | 5,60 |
| Wässrige Dispersion eines Polyesters (I) | 1,90 | 1,90 |
| Dimethylethanolamin in Wasser (10 Gew.-%) | 0,20 | 0,20 |

### 4.3 Beschichtungszusammensetzungen V2 und V8 (nicht erfindungsgemäß) und B2 (erfindungsgemäß)

**Tabelle 2.2: Herstellung von V2, V8 und B2**

| | **V2** | **B2** | **V8** |
|---|---|---|---|
| **Wässrige Phase:** | | | |
| Wässrige Lösung eines Na-Mg-Schichtsilikats (3 Gew.-% in deionisiertem Wasser) | 26,70 | - | - |
| deionisiertes Wasser | 7,75 | 16,48 | 29,34 |
| Butylglykol | 5,78 | 5,78 | - |
| Dispersion des Verdickungsmittels **X12** | - | 22,96 | - |
| Disparlon® A670-20M | - | - | 3,44 |
| Wässrige Dispersion wenigstens eines polymeren Harzes (II) | 32,26 | 32,26 | - |
| Wässrige Dispersion eines Polyesters (I) | 5,17 | - | 5,17 |
| Dimethylethanolamin in Wasser (10 Gew.-%) | 1,32 | 0,80 | 0,91 |
| Rheovis® AS 1130 | 0,86 | 0,75 | - |
| 2,4,7,9-Tetramethyl-5-decindiol in Butylglykol (52 Gew.-%) | 0,70 | - | 0,69 |
| Resimene® HM 2608 | 4,36 | 4,36 | - |
| Pluriol® P900 | 0,34 | 1,15 | - |

| **Organische Phase:** | | | |
|---|---|---|---|
| Butylglykol | 6,89 | 6,89 | 6,89 |
| Alu Stapa Hydrolux® VP56450 | 5,74 | 5,74 | 5,74 |

| **Mischlack:** | | | |
|---|---|---|---|
| Wässrige Dispersion wenigstens eines polymeren Harzes (II) | 1,89 | 1,89 | 1,89 |
| deionisiertes Wasser | 1,17 | 1,17 | 1,17 |
| 2,4,7,9-Tetramethyl-5-decindiol in Butylglykol (52 Gew.-%) | 0,24 | 0,24 | 0,24 |
| Dispex® Ultra FA 4437 | 0,10 | 0,10 | 0,10 |
| Dimethylethanolamin in Wasser (10 Gew.-%) | 0,01 | 0,01 | 0,01 |
| Butylglykol | 0,60 | 0,60 | 0,60 |

### 4.4 Beschichtungszusammensetzungen V3 (nicht erfindungsgemäß) und B3, B4, B5, B6, B7 und B8 (erfindungsgemäß)

**Tabelle 2.3: Herstellung von V3 und B3, B4, B5, B6, B7 und B8**

| | **V3** | **B3** | **B4** | **B5** | **B6** | **B7** | **B8** |
|---|---|---|---|---|---|---|---|
| **Wässrige Phase:** | | | | | | | |
| Wässrige Lösung eines Na-Mg-Schichtsilikats (3 Gew.-% in deionisiertem Wasser) | 24,35 | - | - | - | - | - | - |
| deionisiertes Wasser | 13,00 | 21,50 | 23,50 | 32,00 | 26,00 | 27,00 | - |
| n-Butoxypropanol | 1,65 | - | - | - | - | - | 1,65 |
| 1-Propoxy-2-propanol | 2,20 | - | - | - | - | - | 2,20 |
| 2-Ethylhexanol | 2,50 | 2,50 | 2,50 | 2,50 | 2,50 | 2,50 | 2,50 |
| Dispersion des Verdickungsmittels **X5** | - | 14,70 | - | - | - | - | - |
| Dispersion des Verdickungsmittels **X6** | - | - | 15,70 | - | - | - | - |
| Dispersion des Verdickungsmittels **X7** | - | - | - | 16,20 | - | - | - |
| Dispersion des Verdickungsmittels **X8** | - | - | - | - | 16,70 | - | - |
| Dispersion des Verdickungsmittels **X9** | - | - | - | - | - | 17,70 | - |
| Dispersion des Verdickungsmittels **X13** | - | - | - | - | - | - | 22,88 |
| Wässrige Dispersion wenigstens eines polymeren Harzes (II) | 26,00 | 26,00 | 26,00 | 26,00 | 26,00 | 26,00 | 26,00 |
| Wässrige Dispersion eines Polyesters (I) | 2,60 | - | - | - | - | - | - |
| Dimethylethanolamin in Wasser (10 Gew.-%) | 0,50 | 0,50 | 1,00 | 1,00 | 1,00 | 1,00 | - |
| deionisiertes Wasser | 4,05 | 4,05 | 4,05 | 4,05 | 4,05 | 4,05 | 4,05 |
| Rheovis® AS 1130 | 0,65 | 0,65 | 0,65 | 0,65 | 0,65 | 0,65 | 0,65 |
| Resimene® HM 2608 | 3,80 | - | - | - | - | - | 3,80 |
| Pluriol® P900 | 1,00 | 1,00 | 1,00 | 1,00 | 1,00 | 1,00 | 1,00 |
| Byketol®-WS | 1,00 | 1,00 | 1,00 | 1,00 | 1,00 | 1,00 | 1,00 |
| Wässrige Dispersion wenigstens eines polymeren Harzes (I) | 3,80 | 3,80 | 3,80 | 3,80 | 3,80 | 3,80 | 3,80 |
| Isobutanol | 2,40 | - | - | - | - | - | - |
| Rheovis® PU 1250 | 0,80 | 0,80 | 0,80 | 0,80 | 0,80 | 0,80 | 0,80 |

| **Organische Phase:** | | | | | | | |
|---|---|---|---|---|---|---|---|
| Mischung aus Alu Stapa Hydrolux® 2154 & VP56450 | 4,50 | 4,50 | 4,50 | 4,50 | 4,50 | 4,50 | 4,50 |
| Butylglykol | 5,60 | 5,60 | 5,60 | 5,60 | 5,60 | 5,60 | 5,60 |
| Wässrige Dispersion eines Polyesters (I) | 1,90 | 1,90 | 1,90 | 1,90 | 1,90 | 1,90 | 1,90 |
| Dimethylethanolamin in Wasser (10 Gew.-%) | 0,20 | 0,20 | 0,20 | 0,20 | 0,20 | 0,20 | 0,20 |

### 4.5 Beschichtungszusammensetzungen V4 (nicht erfindungsgemäß) und B9, B10 und B11 (erfindungsgemäß)

**Tabelle 2.4: Herstellung von V4 und B9, B10 und B11**

| | **V4** | **B9** | **B10** | **B11** |
|---|---|---|---|---|
| **Wässrige Phase:** | | | | |
| Wässrige Lösung eines Na-Mg-Schichtsilikats (3 Gew.-% in deionisiertem Wasser | 25,00 | - | - | - |
| deionisiertes Wasser | 15,30 | 8,00 | 10,00 | 7,50 |
| Butylglykol | 3,20 | 2,00 | 2,00 | 2,00 |
| Dispersion des Verdickungsmittels **X1** | - | 35,00 | - | - |
| Dispersion des Verdickungsmittels **X2** | - | - | 35,00 | - |
| Dispersion des Verdickungsmittels **X3** | - | - | - | 35,00 |
| Wässrige Dispersion wenigstens eines polymeren Harzes (II) | 32,90 | 32,90 | 32,90 | 32,90 |
| Wässrige Dispersion eines Polyesters (I) | 7,00 | - | - | - |
| Dimethylethanolamin in Wasser (10 Gew.-%) | 1,20 | 0,50 | 0,50 | 0,50 |
| Resimene® HM 2608 | 5,20 | 5,20 | 5,20 | 5,20 |

| **Organische Phase:** | | | | |
|---|---|---|---|---|
| Alu Stapa Hydrolux® 8154 | 7,20 | 7,20 | 7,20 | 7,20 |
| Butylglykol | 8,80 | 10,00 | 10,00 | 10,00 |

| **Mischlack:** | | | | |
|---|---|---|---|---|
| Wässrige Dispersion wenigstens eines polymeren Harzes (II) | 3,38 | 3,38 | 3,38 | 3,38 |
| deionisiertes Wasser | 2,10 | 2,10 | 2,10 | 2,10 |
| 2,4,7,9-Tetramethyl-5-decindiol in Butylglykol (52 Gew.-%) | 0,43 | 0,43 | 0,43 | 0,43 |
| Dispex® Ultra FA 4437 | 0,18 | 0,18 | 0,18 | 0,18 |
| Dimethylethanolamin in Wasser (10 Gew.-%) | 0,02 | 0,02 | 0,02 | 0,02 |
| Butylglykol | 1,08 | 1,08 | 1,08 | 1,08 |

### 4.6 Beschichtungszusammensetzungen V5 (nicht erfindungsgemäß) und B12 (erfindungsgemäß)

**Tabelle 2.5: Herstellung von V5 und B12**

| | **V5** | **B12** |
|---|---|---|
| **Wässrige Phase:** | | |
| Wässrige Lösung eines Na-Mg-Schichtsilikats (3 Gew.-% in deionisiertem Wasser | 13,10 | - |
| deionisiertes Wasser | 10,53 | 17,60 |
| n-Propanol | 0,87 | 0,87 |
| n-Butoxypropanol | 1,38 | 1,38 |
| 2-Ethylhexanol | 2,77 | 2,77 |
| Dispersion des Verdickungsmittels **X10** | - | 17,42 |
| Wässrige Dispersion wenigstens eines polymeren Harzes (II) | 35,24 | 35,24 |
| Wässrige Dispersion eines Polyesters (I) | 2,95 | - |
| Resimene® HM 2608 | 4,10 | - |
| Dimethylethanolamin in Wasser (10 Gew.-%) | 0,30 | - |
| 2,4,7,9-Tetramethyl-5-decindiol in Butylglykol (52 Gew.-%) | 1,38 | 1,38 |
| BYK®-346 | 0,46 | 0,46 |
| Wässrige Dispersion wenigstens eines polymeren Harzes (II) | 2,77 | - |
| Isopropanol | 1,64 | 1,64 |
| Butylglykol | 1,00 | 1,00 |
| Isopar® L | 0,87 | 0,87 |
| Nacure® 2500 | 0,42 | 0,42 |
| Rußpaste P2 | 12,99 | 12,99 |
| Blaupaste P1 | 0,78 | 0,78 |
| Bariumsulfat-haltige Paste P3 | 3,21 | 3,21 |
| Talkum-haltige Paste P4 | 3,25 | 3,25 |

### 4.7 Beschichtungszusammensetzungen V6 und V7 (nicht erfindungsgemäß) und B13 und B14 (erfindungsgemäß)

**Tabelle 2.6: Herstellung von V6 und V7 sowie von B13 und B14**

| | **V6** | **V7** | **B13** | **B14** |
|---|---|---|---|---|
| **Wässrige Phase:** | | | | |
| Wässrige Lösung eines Na-Mg-Schichtsilikats (3 Gew.-% in deionisiertem Wasser) | 24,35 | 24,35 | - | - |
| deionisiertes Wasser | 6,00 | 2,50 | 25,50 | 12,50 |
| n-Butoxypropanol | 1,65 | 1,65 | - | - |
| 1-Propoxy-2-propanol | 2,20 | 2,20 | - | - |
| 2-Ethylhexanol | 2,50 | 2,50 | 2,50 | 2,50 |
| Dispersion des Verdickungsmittels **X11** | - | - | 15,75 | 15,75 |
| Wässrige Dispersion wenigstens eines polymeren Harzes (III) | 26,00 | - | 26,00 | - |
| Wässrige Dispersion wenigstens eines polymeren Harzes (II) | - | 26,00 | - | 26,00 |
| Wässrige Dispersion eines Polyesters (I) | 2,60 | 2,60 | - | - |
| deionisiertes Wasser | 4,05 | 4,05 | 4,05 | 4,05 |
| Rheovis® AS 1130 | 0,20 | 0,65 | 0,40 | 0,80 |
| Resimene® HM 2608 | 3,80 | 3,80 | - | - |
| Dimethylethanolamin in Wasser (10 Gew.-%) | 0,90 | 0,50 | 1,00 | 0,20 |
| Pluriol® P900 | 0,30 | 0,30 | 1,00 | 1,00 |
| Byketol®-WS | 1,00 | 1,00 | 1,00 | 1,00 |
| Wässrige Dispersion wenigstens eines polymeren Harzes (I) | 3,80 | 3,80 | 3,80 | 3,80 |
| Isobutanol | 2,40 | 2,40 | - | - |
| Rheovis® PU 1250 | 0,80 | 0,80 | 0,80 | 0,80 |
| deionisiertes Wasser | 10,00 | 10,00 | 15,00 | 15,00 |

| **Organische Phase:** | | | | |
|---|---|---|---|---|
| Mischung aus Alu Stapa Hydrolux® 2154 & VP56450 | 4,50 | 4,50 | 4,50 | 4,50 |
| Butylglykol | 5,60 | 5,60 | 5,60 | 5,60 |
| Wässrige Dispersion eines Polyesters (I) | 1,90 | 1,90 | 1,90 | 1,90 |
| Dimethylethanolamin in Wasser (10 Gew.-%) | 0,20 | 0,20 | 0,20 | 0,20 |

### 4.8 Beschichtungszusammensetzungen V9 (nicht erfindungsgemäß) und B15 und B16 (erfindungsgemäß)

**Tabelle 2.7: Herstellung von B15, B16 sowie von V9**

| | **B15** | **B16** | **V9** |
|---|---|---|---|
| **Wässrige Phase** | | | |
| deionisiertes Wasser n-Butoxypropanol 2-Ethylhexanol | 17,40 1,90 1,70 | 17,40 1,90 1,70 | 30,35 1,90 1,70 |
| Dispersion des Verdickungsmittels **X18** | 23,10 | - | - |
| Dispersion des Verdickungsmittels **X19** | - | 23,10 | - |
| Disparlon® A670-20M | - | - | 3,47 |
| Wässrige Dispersion wenigstens eines polymeren Harzes (II) | 24,25 | 24,25 | 24,25 |
| Wässrige Dispersion eines Polyesters (I) | - | - | 5,20 |
| 1-Propoxy-2-propanol | 2,55 | 2,55 | 2,55 |
| Butylglykol | 0,70 | 0,70 | 0,70 |
| Dimethylethanolamin in Wasser (10 Gew.-%) | 0,70 | 0,70 | 0,80 |
| Rheovis® AS 1130 | 0,90 | 0,90 | 0,90 |
| Resimene® HM 2608 | 4,40 | 4,40 | 4,40 |
| Pluriol® P900 | 1,15 | 1,15 | 1,15 |
| Wässrige Dispersion wenigstens eines polymeren Harzes (II) | 3,45 | 3,45 | 3,45 |

| **Organische Phase** | | | |
|---|---|---|---|
| Alu Stapa Hydrolux® VP56450 | 5,8 | 5,8 | 5,8 |
| Butylglykol | 6,2 | 6,2 | 6,2 |
| Wässrige Dispersion wenigstens eines polymeren Harzes (II) | 5,8 | 5,8 | 5,8 |

### 4.9 Beschichtungszusammensetzungen B17 bis B19 (erfindungsgemäß) sowie V10 und V11 (nicht erfindungsgemäß)

**Tabelle 2.8: Herstellung von B17, B18, B19 sowie von V10 und V11**

| | **B17** | **B18** | **B19** | **V10** | **V11** |
|---|---|---|---|---|---|
| **Wässrige Phase** | | | | | |
| deionisiertes Wasser | 12,50 | 12,50 | 12,50 | 12,50 | 12,50 |
| Butylglykol | 4,34 | 4,34 | 4,34 | 4,34 | 4,34 |
| Dispersion des Verdickungsmittels **X20** | 35,00 | - | - | - | - |
| Dispersion des Verdickungsmittels **X21** | - | 35,00 | - | - | - |
| Dispersion des Verdickungsmittels **X22** | - | - | 35,00 | - | - |
| Wässrige Polyamid-Dispersion I | - | - | - | - | 7,00 |
| Wässrige Polyamid-Dispersion II | - | - | - | 17,50 | - |
| Wässrige Dispersion wenigstens eines polymeren Harzes (II) | 36,26 | 36,26 | 36,26 | 36,26 | 36,26 |
| Wässrige Dispersion eines Polyesters (I) | 3,92 | 3,92 | 3,92 | 3,92 | 3,92 |
| Dimethylethanolamin in Wasser (10 Gew.-%) | 1,19 | 1,19 | 1,19 | 1,19 | 1,19 |
| Resimene® HM 2608 | 5,18 | 5,18 | 5,18 | 5,18 | 5,18 |

| **Organische Phase** | | | | | |
|---|---|---|---|---|---|
| Alu Stapa Hydrolux® 8154 | 7,28 | 7,28 | 7,28 | 7,28 | 7,28 |
| Butylglykol | 8,75 | 8,75 | 8,75 | 8,75 | 8,75 |
| Wässrige Dispersion wenigstens eines polymeren Harzes (II) | 3,08 | 3,08 | 3,08 | 3,08 | 3,08 |

Die jeweiligen Mengenangaben in Tabelle 2.8 stellen jeweils Gewichtsteile dar.

### 5. Prüfungen und Untersuchungen

### 5.1 Untersuchungen hinsichtlich des Auftretens von Läufern

Diese Untersuchung erfolgt gemäß der vorstehend beschriebenen Methode. Dabei werden die erfindungsgemäße Beschichtungszusammensetzung **B1** oder **B9** oder die Vergleichsbeschichtungszusammensetzung **V1** oder **V4** als Wasserbasislack auf ein wie innerhalb der Bestimmungsmethode beschrieben beschichtetes Lochblech appliziert. Anschließend erfolgt wie innerhalb der Methode beschrieben die Applikation eines Klarlacks auf die so erhaltenen jeweiligen Basislackschichten.

Die Ergebnisse sind in Tabelle 3.1a und Tabelle 3.1b zusammengefasst.

**Tabelle 3.1a: Ergebnisse der Untersuchungen hinsichtlich des Auftretens von Läufern**

| | **V1** | **B1** |
|---|---|---|
| Läufergrenze [Schichtdicke in µm] | 30 | >40 |

**Tabelle 3.1b: Ergebnisse der Untersuchungen hinsichtlich des Auftretens von Läufern**

| | **V4** | **B9** |
|---|---|---|
| Läufergrenze [Schichtdicke in µm] | 18 | >30 |

Die Ergebnisse belegen, dass die erfindungsgemäße Beschichtungszusammensetzung **B1** im Vergleich zu **V1** eine wesentlich höhere Läufergrenze, d.h. eine signifikante Verbesserung der Läuferneigung aufweist. Analoges ergibt sich bei einem Vergleich von **B9** und **V4.**

### 5.2 Untersuchungen hinsichtlich der Wolkigkeit

Diese Untersuchung erfolgt gemäß der vorstehend beschriebenen Methode. Dabei werden die erfindungsgemäße Beschichtungszusammensetzung **B2** sowie die Vergleichsbeschichtungszusammensetzung **V2** als Wasserbasislack auf ein wie innerhalb der Bestimmungsmethode beschrieben beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 3.2 zusammengefasst.

**Tabelle 3.2: Ergebnisse der Untersuchungen hinsichtlich der Wolkigkeit**

| | **V2** | **B2** |
|---|---|---|
| Wolken Aufsicht (80°) | 4 | 2 |
| Wolken Schrägsicht (40°) | 4 | 3 |

Die Ergebnisse belegen, dass die erfindungsgemäße Beschichtungszusammensetzung **B2** im Vergleich zu **V2** eine wesentlich geringere Wolkigkeit aufweist.

### 5.3 Untersuchungen hinsichtlich des Auftretens von Kochern

Diese Untersuchung erfolgt gemäß der vorstehend beschriebenen Methode. Dabei werden die erfindungsgemäße Beschichtungszusammensetzung **B3, B4, B6, B7** oder **B8** oder die Vergleichsbeschichtungszusammensetzung **V3** als Wasserbasislack auf ein wie innerhalb der Bestimmungsmethode beschrieben beschichtetes Lochblech appliziert. Anschließend erfolgt wie innerhalb der Methode beschrieben die Applikation eines Klarlacks auf die so erhaltenen jeweiligen Basislackschichten.

Die Ergebnisse sind in Tabelle 3.3 zusammengefasst.

**Tabelle 3.3: Ergebnisse der Untersuchungen hinsichtlich des Auftretens von Kochern**

| | **V3** | **B3** | **B4** | **B6** | **B7** | **B8** |
|---|---|---|---|---|---|---|
| Kochergrenze [Schichtdicke in µm]: | 30 | > 40 | > 35 | > 35 | > 40 | > 85 |

Die erfindungsgemäßen Beschichtungszusammensetzungen **B3, B4, B6, B7** und **B8** zeigen alle ein hervorragendes Kocherniveau und Vorteile gegenüber der Vergleichsbeschichtungszusammensetzung **V3,** d.h. die erfindungsgemäßen Beschichtungszusammensetzungen **B3, B4, B6, B7** und **B8** können als Wasserbasislack in wesentlich höheren Schichtdicken appliziert werden als **V3,** ohne dass Kocher auftreten.

### 5.4 Untersuchungen hinsichtlich des Verlaufs nach einer Schwitzwasserbehandlung

Diese Untersuchung erfolgt gemäß der vorstehend beschriebenen Methode. Dabei werden die erfindungsgemäßen Beschichtungszusammensetzungen **B9, B10** oder **B11** oder Vergleichsbeschichtungszusammensetzung **V4** als Wasserbasislack jeweils auf ein wie innerhalb der Bestimmungsmethode beschrieben beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 3.4 zusammengefasst.

**Tabelle 3.4: Ergebnisse der Untersuchungen hinsichtlich des Verlaufs nach Schwitzwasserbehandlung**

| | **V4** | **B9** | **B10** | **B11** |
|---|---|---|---|---|
| **Vor Schwitzwasserbelastung** | | | | |
| Long wave (LW): | 1,7 | 1,6 | 1,5 | 1,7 |
| Short wave (SW): | 14,8 | 12,8 | 10,8 | 13,8 |
| DOI: | 86,2 | 87,6 | 88 | 87,2 |
| | | | | |

| **Nach Schwitzwasserbelastung** | | | | |
|---|---|---|---|---|
| Long wave (LW): | 4,7 | 1,8 | 1,4 | 1,5 |
| Short wave (SW): | 30,6 | 11,8 | 10,1 | 12,1 |
| DOI: | 82,1 | 88,2 | 88,6 | 88,2 |
| Quellung: | leichte Quellung | i.O. | i.O. | i.O. |

| | | | | |
|---|---|---|---|---|
| i.O. = in Ordnung | | | | |

Die Ergebnisse belegen, dass die erfindungsgemäßen Beschichtungszusammensetzungen **B9, B10** und **B11** im Vergleich zu **V4** sowohl vor als auch nach der Schwitzwasserbelastung Vorteile aufweisen, die belegen, dass ein Anquellen des Mehrschichtaufbaus umfassend ein jeweils aus einer dieser Zusammensetzungen erhaltene Basislackschicht, welcher sich in hohen LW- bzw. SW-Werten widerspiegelt, nicht auftritt.

### 5.5 Untersuchungen hinsichtlich der Steinschlaghaftung

Diese Untersuchung erfolgt gemäß der vorstehend beschriebenen Methode. Dabei werden die erfindungsgemäßen Beschichtungszusammensetzungen **B9, B10** oder **B11** oder Vergleichsbeschichtungszusammensetzung **V4** als Wasserbasislack jeweils auf ein wie innerhalb der Bestimmungsmethode beschrieben beschichtetes Stahlblech appliziert. Anschließend erfolgt wie innerhalb der Methode beschrieben die Applikation eines Klarlacks auf die so erhaltenen jeweiligen Basislackschichten.

Für alle untersuchten Substrate wurde ein Kennwert von 1 gemäß der innerhalb der Bestimmungsmethode genannten DIN-Vorschrift ermittelt.

Der Einsatz der erfindungsgemäß eingesetzten Verdickungsmittel wirkt sich somit im Vergleich zu herkömmlichen als Verdickungsmittel eingesetzten Schichtsilikaten wie Na-Mg-Schichtsilikaten nicht negativ auf die Steinschlaghaftung aus.

### 5.6 Untersuchungen hinsichtlich des schichtdickenabhängigen Verlaufs

Diese Untersuchung erfolgt gemäß der vorstehend beschriebenen Methode in einem Keil-Aufbau. Dabei werden die erfindungsgemäße Beschichtungszusammensetzung **B12** oder die Vergleichsbeschichtungszusammensetzung **V5** als Wasserbasislack jeweils auf ein wie innerhalb der Bestimmungsmethode beschrieben beschichtetes Stahlblech appliziert. Anschließend erfolgt wie innerhalb der Methode beschrieben die Applikation eines Klarlacks auf die so erhaltenen jeweiligen Basislackschichten.

Die Ergebnisse sind in Tabelle 3.5 zusammengefasst.

**Tabelle 3.5: Ergebnisse der Untersuchungen hinsichtlich des schichtdickenabhängigen Verlaufs**

| | **Schichtdickenbereich** | **V5** | **B12** |
|---|---|---|---|
| Long wave (LW): | 10-15 µm | 2,7 | 2,5 |
| | 15-20 µm | 2,4 | 2,4 |
| | 20-25 µm | 2,6 | 2,2 |
| | 25-30 µm | 2,7 | 2,2 |
| | | | |
| Short wave (SW): | 10-15 µm | 12,8 | 10,1 |
| | 15-20 µm | 12,9 | 9,2 |
| | 20-25 µm | 12,1 | 9,8 |
| | 25-30 µm | 12 | 10,4 |
| | | | |
| DOI | 10-15 µm | 94,4 | 95,4 |
| | 15-20 µm | 94,4 | 96,2 |
| | 20-25 µm | 94,7 | 95,8 |
| | 25-30 µm | 94,8 | 95,3 |

Der erfindungsgemäße Beschichtungszusammensetzung **B12** zeigt im Vergleich zu **V5** in einem Keil-Aufbau bezüglich Appearance insbesondere im Hinblick auf SW und DOI in allen Schichtdickenbereichen Vorteile, die nicht nur messtechnisch zu erfassen, sondern auch visuell nachzuvollziehen sind.

### 5.7 Untersuchungen hinsichtlich des Auftragswirkungsgrades

Diese Untersuchung erfolgt gemäß der vorstehend beschriebenen Methode. Dabei werden die erfindungsgemäßen Beschichtungszusammensetzungen **B13** oder **B14** oder die Vergleichsbeschichtungszusammensetzung **V6** oder **V7** als Wasserbasislack jeweils auf ein wie innerhalb der Bestimmungsmethode beschrieben beschichtetes Blech appliziert.

Die Ergebnisse sind in Tabelle 3.6 zusammengefasst.

**Tab. 3.6:**

| | **V6** | **V7** | **B13** | **B14** |
|---|---|---|---|---|
| Festkörper (nach DIN EN ISO 3251): | 19,6 | 18,8 | 18,3 | 19,3 |
| Volumenfestkörper (nach DIN 53219): | 17,7 | 17,2 | 17,1 | 18,4 |
| | | | | |
| Flächenintegral [10⁴ µm²) | 223 | 205 | 278 | 264 |

Das Flächenintegral der Kurve, die das mittlere Schichtdickenprofil einer Spritzbild-applikation gemäß der innerhalb der Methode beschriebenen Spritzbild-Applikation repräsentiert, ist für die erfindungsgemäßen Beschichtungszusammensetzungen **B13** und **B14** signifikant größer als für **V6** und **V7.** Dieses Integral kann als Kennwert für die unter konstanten Lackierparametern abgeschiedene Menge an Lack und damit für den Auftragswirkungsgrad gedeutet werden. Trotz eines jeweils höheren Festkörpers bzw. Volumenfestkörpers werden für **V6** im Vergleich zu **B13** ein kleineres Flächenintegral und damit ein niedrigerer Auftragswirkungsgrad erhalten. Der leicht höhere Festkörper bzw. Volumenfestkörper der erfindungsgemäßen Beschichtungszusammensetzung **B14** erklärt das signifikant höhere Flächenintegral im Vergleich zur Formulierung **V7** nicht, weshalb auch hier das vergleichsweise höhere Flächenintegral und damit ein höherer Auftragswirkungsgrad überraschend sind. Eine Applikation von **V7** im Vergleich zu **B14** analog der oben beschriebenen Methode zur Bestimmung der Wolkigkeit führt zudem zu reproduzierbar höheren Trockenfilm-Schichtdicken von **B14** von ca. 4-5 µm im Vergleich zu **V7,** die ebenfalls nicht durch die vorliegenden Differenzen der Festkörper bzw. Volumenfestkörper begründet werden können. Die jeweiligen Schichtdicken werden dabei nach DIN EN ISO 2808 Verfahren 12A (Datum: Mai 2007) (mit dem Messgerät MiniTest® 3100 - 4100 der Fa. ElektroPhysik) bestimmt.

### 5.8 Untersuchungen hinsichtlich des Auftretens von Nadelstichen und Stippen

Diese Untersuchungen erfolgen gemäß den vorstehend beschriebenen Methoden.

Die Ergebnisse sind in Tabellen 3.7 und 3.8 zusammengefasst.

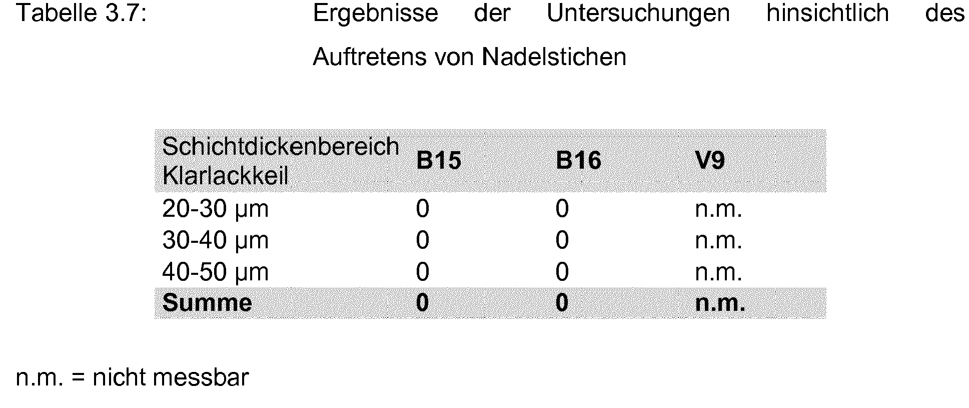

**Tabelle 3.8: Ergebnisse der Untersuchungen hinsichtlich des Auftretens von Stippen**

| | **B15** | **B16** | **V9** |
|---|---|---|---|
| Stippen | 1 | 1 | 5 |

Wie aus Tab. 3.7 ersichtlich ist, resultiert die Gegenwart der erfindungsgemäßen Dispersionen **X18** und **X19** als Komponente der wässrigen Basislacke **B15** und **B16** in einer exzellenten Nadelstichrobustheit: es konnten keine Nadelstiche beobachtet werden. Wie aus Tab. 3.8 ersichtlich ist, konnte zudem keinerlei Stippenbildung im Fall von **B15** und **B16** beobachtet werden. Dagegen wurde eine Vielzahl von Stippen im Fall des Vergleichsbasislack **V9** beobachtet: Der wässrige Vergleichsbasislack **V9** enthält die zur Herstellung der erfindungsgemäß eingesetzten Dispersionen eingesetzten Einzelkomponenten, d.h. einen Polyester (wässrige Dispersion des Polyesters (I)) und ein Polyamid (Disparlon® A670-20M), welche jedoch nicht vorab zu einer entsprechenden Dispersion verarbeitet worden sind, sondern direkt als separate Komponenten in den Vergleichsbasislack **V9** eingearbeitet wurden. Zudem kann im Fall von **V9** bei einer Lagerung bei 18-23°C bereits nach einigen wenigen Stunden eine Entmischung beobachtet werden. Aufgrund dessen ist eine Auswertung der Nadelstichprüfung im Fall von **V9** nicht möglich.

### 5.9 Untersuchungen hinsichtlich des Auftretens von Stippen und der Lagerstabilität

Diese Untersuchungen erfolgen gemäß den vorstehend beschriebenen Methoden.

Die Ergebnisse sind in Tabellen 3.9 und 3.10 zusammengefasst.

**Tabelle 3.9: Ergebnisse der Untersuchungen hinsichtlich des Auftretens von Stippen**

| | **V2** | **B2** | **V8** |
|---|---|---|---|
| Stippen | 1 | 1 | 5 |

**Tabelle 3.10: Ergebnisse der Untersuchungen hinsichtlich der Lagerstabilität**

| | | **V2** | **B2** | **V8** |
|---|---|---|---|---|
| Niederscher-viskosität (1 s-¹) in mPa·s | direkt nach Herstellung | 3013 | 3053 | n.m. |
| | nach 2 Wochen Lagerung bei 40°C | 3819 | 3177 | n.m. |
| | Veränderung [%] | 27% | 4% | |
| | | | | |
| Hochscherviskosität (1000 s-¹) in mPa·s | direkt nach Herstellung | 78 | 79 | n.m. |
| | nach 2 Wochen Lagerung bei 40 °C | 87 | 85 | n.m. |
| | Veränderung [%] | 11% | 6% | |
| | | | | |

| | | | | |
|---|---|---|---|---|
| n.m. = nicht messbar | | | | |

Wie aus Tab. 3.9 ersichtlich ist, konnte keinerlei Stippenbildung im Fall von **B2** und **V2** (enthaltend ein Na-Mg-Schichtsilikat als Verdicker) beobachtet werden. Dagegen wurde eine Vielzahl von Stippen im Fall des Vergleichsbasislack **V8** beobachtet: Der wässrige Vergleichsbasislack **V8** enthält die zur Herstellung der erfindungsgemäß eingesetzten Dispersionen eingesetzten Einzelkomponenten, d.h. einen Polyester (wässrige Dispersion des Polyesters (I)) und ein Polyamid (Disparlon® A670-20M), welche jedoch nicht vorab zu einer erfindungsgemäß eingesetzten Dispersion verarbeitet worden sind, sondern direkt als separate Komponenten in den Vergleichsbasislack **V8** eingearbeitet wurden. Zudem kann im Fall von **V8** bei einer Lagerung bei 40°C bereits nach einigen wenigen Stunden eine Phasenseparation bzw. Entmischung beobachtet werden. Aufgrund dessen ist eine Bestimmung der Nieder- und Hochscherviskositäten im Fall von **V8** nicht möglich. Die Wasserbasislacke **V2** und **B2** hingegen sind stabil bei einer Lagerung bei 40°C und zeigen eine akzeptable Verschiebung der Hoch- und Niederscher-viskosität nach 2 Wochen Lagerung bei 40 °C, wobei der erfindungsgemäße Wasserbasislack **B2** signifikante Vorteile gegenüber der **V2** (geringere Veränderungen) aufweist (vgl. Tab. 3.10).

### 5.10 Untersuchungen hinsichtlich des Auftretens von Stippen

Diese Untersuchung erfolgt gemäß der vorstehend beschriebenen Methode.

Die Ergebnisse sind in Tabelle 3.11 zusammengefasst.

**Tabelle 3.11: Ergebnisse der Untersuchungen hinsichtlich des Auftretens von Stippen**

| | **B17** | **B18** | **B19** | **V10** | **V11** |
|---|---|---|---|---|---|
| Stippen nach 3 Tagen der Lagerung nach Herstellung bei 18-23°C | 1 | 1 | 1 | 5 | 5 |

Wie aus Tabelle 3.11 ersichtlich ist, hat der Einsatz von üblicherweise in wässrigen Zusammensetzungen eingesetzten Polyamiden mit hoher Säure-Zahl als Verdickungsmittel in Beschichtungszusammensetzungen **(V10** und **V11)** wie der kommerziell erhältlichen Produkte Disparlon® AQ600 und AQ630 Nachteile hinsichtlich des Auftretens von Stippen, die im Fall der erfindungsgemäßen Beschichtungszusammensetzungen **(B17** bis **B19)** nicht beobachtet werden können.

### 5.11 Untersuchungen hinsichtlich des Auftretens von Stippen, der Homogenität und der Wassermischbarkeit von erfindungsgemäß eingesetzten Dispersionen und Vergleichsdispersionen

Diese Untersuchungen erfolgen gemäß den vorstehend beschriebenen Methoden.

Die Ergebnisse sind in Tabelle 3.12 zusammengefasst.

**Tab. 3.12**

| | **Y1** | **X23** |
|---|---|---|
| | | |
| **Homogenität** | 5 | 1 |
| **Wassermischbarkeit** | 5 | 1 |
| **Stippenbildung** | 5 | 1 |

Aus Tab. 3.12 ist ersichtlich, dass mit **Y1** im Gegensatz zu **X23** weder eine gute Homogenität noch eine gute Wassermischbarkeit erzielt werden kann. Zur Bestimmung der Wassermischbarkeit werden **Y1** bzw. **X23** jeweils durch Mischen der in Tabelle 1.6 genannten Komponenten in der darin angegebenen Reihenfolge hergestellt, wobei in Einklang mit der Beschreibung der Methode zur Bestimmung der Wassermischbarkeit die in Tabelle 1.6 jeweils angegebenen Menge an deionisiertem Wasser erst als letzte Komponente zur Herstellung von **Y1** bzw. **X23** eingesetzt wird. Zudem konnte eine Vielzahl von aufgetretenen Stippen im Fall von **Y1** beobachtet werden. **Y1** enthält im Gegensatz zu **X23** als Polyester-Komponente einen Polyester, welcher *nicht* durch Umsetzung wenigstens einer polymerisierten aliphatischen C₁₂-C₂₄-Monocarbonsäure mit wenigstens einem Diol und/oder Polyol erhalten worden ist: diese Ergebnisse zeigen, dass es erfindungswesentlich ist, dass der erfindungsgemäß eingesetzte Polyester durch eine solche Umsetzung unter Beteiligung einer polymerisierten aliphatischen C₁₂-C₂₄-Monocarbonsäure erhältlich ist.

### 5.12 Untersuchungen hinsichtlich des Auftretens von Stippen und der Homogenität von erfindungsgemäß eingesetzten Dispersionen und Vergleichsdispersionen

Die erfindungsgemäß eingesetzte Dispersion des Verdickungsmittels **X12** sowie die Vergleichsdispersionen **Y2** und **Y3** werden gemäß den vorstehend beschriebenen Methoden hinsichtlich des Auftretens von Stippen und der Homogenität untersucht und beurteilt.

Die Ergebnisse sind in Tabelle 3.13 zusammengefasst.

**Tab. 3.13**

| | **X12** | **Y2** | **Y3** |
|---|---|---|---|
| | | | |
| **Homogenität** | 1 | 1 | 1 |
| **Stippenbildung nach Herstellung** | 1 | 3-4 | 3-4 |
| **nach 14 Tagen bei 40 °C** | 1 | 3-4 | 3-4 |

Aus Tab. 3.13 ist ersichtlich, dass mit **Y2** und **Y3** zwar ebenso wie mit **X12** eine gute Homogenität erzielt werden kann, im Fall von **Y2** und **Y3** jedoch im Gegensatz zu **X12** das Auftreten einer Vielzahl von Stippen nach Herstellung und ebenso nach Lagerung beobachtet wird. **Y2** und **Y3** enthalten als Polyamide üblicherweise in wässrigen Zusammensetzungen eingesetzte Polyamide mit hoher Säure-Zahl, nämlich die kommerziell erhältlichen Produkte Disparlon® AQ600 **(Y2)** und AQ630 **(Y3).** Dieser Nachteil wird im Fall von **X12** nicht beobachtet.

## Patentansprüche

1. Eine wässrige Beschichtungszusammensetzung umfassend
wenigstens eine Mischung (M) aus wenigstens einem polymeren Harz (P1) und wenigstens einem davon verschiedenen polymeren Harz (P2), wobei
das polymere Harz (P1) ein Polyamid ist und
das polymere Harz (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol,
wenigstens ein Bindemittel (A) umfassend wenigstens ein polymeres Harz (A1), welches von den polymeren Harzen (P1) und (P2) verschieden ist, und gegebenenfalls wenigstens ein Vernetzungsmittel (A2), und
wenigstens ein Pigment (B)
zur zumindest teilweisen Beschichtung eines gegebenenfalls beschichteten Substrats mit einer Basislackschicht,
**dadurch gekennzeichnet, dass** das als polymeres Harz (P1) eingesetzte Polyamid eine Säure-Zahl <10 mg KOH pro g an Polyamid aufweist und
die Mischung (M) erhältlich ist durch Dispergieren des polymeren Harzes (P1) in Wasser oder einem wässrigen Medium in Gegenwart des polymeren Harzes (P2).

2. Die Beschichtungszusammensetzung gemäß Anspruch 1, **dadurch gekennzeichnet, dass** das als polymeres Harz (P1) eingesetzte Polyamid eine Säure-Zahl in einem Bereich von 0,01 bis 8,0 mg KOH pro g an Polyamid aufweist.

3. Die Beschichtungszusammensetzung gemäß Anspruch 1 oder 2, **dadurch gekennzeichnet, dass** das relative Gewichtsverhältnis der polymeren Harze (P2) und (P1) zueinander, jeweils bezogen auf deren Festkörpergehalt, in der Beschichtungszusammensetzung in einem Bereich von 10:1 bis 1,5:1 liegt.

4. Die Beschichtungszusammensetzung gemäß einem der vorstehenden Ansprüche, **dadurch gekennzeichnet, dass** die Beschichtungszusammensetzung erhältlich ist durch die in dieser Reihenfolge aufeinanderfolgende Schritte (1) und (2), nämlich
(1) Dispergieren des polymeren Harzes (P1) in Wasser oder einem wässrigen Medium in Gegenwart des polymeren Harzes (P2) unter Erhalt einer wässrigen Dispersion der Mischung (M) und
(2) Vermischen der nach Schritt (1) erhaltenen wässrigen Dispersion der Mischung (M) mit den weiteren zur Herstellung der Beschichtungszusammensetzung eingesetzten Komponenten.

5. Die Beschichtungszusammensetzung gemäß einem der vorstehenden Ansprüche, **dadurch gekennzeichnet, dass** die Mischung (M) aus dem wenigstens einen polymeren Harz (P1) und dem wenigstens einen davon verschiedenen polymeren Harz (P2) in der Beschichtungszusammensetzung in einer Menge in einem Bereich von 0,5 bis 15 Gew.-%, bezogen auf das Gesamtgewicht der Beschichtungszusammensetzung, vorhanden ist.

6. Die Beschichtungszusammensetzung gemäß einem der vorstehenden Ansprüche, **dadurch gekennzeichnet, dass** sie das als polymeres Harz (P1) eingesetzte Polyamid in einer Menge in einem Bereich von 0,05 bis 5 Gew.-%, bezogen auf das Gesamtgewicht der Beschichtungszusammensetzung, enthält.

7. Die Beschichtungszusammensetzung gemäß einem der vorstehenden Ansprüche, **dadurch gekennzeichnet, dass** der als polymeres Harz (P2) eingesetzte Polyester eine Säure-Zahl in einem Bereich von 20 bis 50 mg KOH pro g an Polyester und/oder eine Hydroxyl-Zahl in einem Bereich von 20 bis 300 mg KOH pro g an Polyester aufweist.

8. Die Beschichtungszusammensetzung gemäß einem der vorstehenden Ansprüche, **dadurch gekennzeichnet, dass** der als polymeres Harz (P2) eingesetzte Polyester mindestens erhältlich ist durch Umsetzung wenigstens einer dimerisierten und/oder trimerisierten aliphatischen C₁₂-C₂₄-Monocarbonsäure mit wenigstens einem aliphatischen C₂-C₂₀-Polyol und/oder C₂-C₂₀-Diol.

9. Die Beschichtungszusammensetzung gemäß einem der vorstehenden Ansprüche, **dadurch gekennzeichnet, dass** zur Herstellung des als polymeres Harz (P2) eingesetzten Polyesters zudem wenigstens eine Dicarbonsäure und/oder wenigstens eine Tricarbonsäure ausgewählt aus der Gruppe bestehend aus aliphatischen C₃-C₁₂-Dicarbonsäuren, cycloaliphatischen C₅-C₁₂-Dicarbonsäuren, aromatischen C₈-C₁₂-Dicarbonsäuren, aliphatischen C₅-C₁₂-Tricarbonsäuren, cycloaliphatischen C₆-C₁₂-Tricarbonsäuren und aromatischen C₉-C₁₂-Tricarbonsäuren, und gegebenenfalls zudem wenigstens eine aliphatische C₁₂-C₂₄-Monocarbonsäure eingesetzt wird.

10. Die Beschichtungszusammensetzung gemäß einem der vorstehenden Ansprüche, **dadurch gekennzeichnet, dass** das Bindemittel (A) wenigstens ein Polyurethan und/oder wenigstens ein Poly(meth)acrylat und/oder wenigstens einen Polyester als wenigstens ein polymeres Harz (A1) umfasst.

11. Die Beschichtungszusammensetzung gemäß einem der vorstehenden Ansprüche, **dadurch gekennzeichnet, dass** sie das polymere Harz (A1) in einer Menge in einem Bereich von 5 bis 40 Gew.-%, bezogen auf das Gesamtgewicht der Beschichtungszusammensetzung, und das Pigment (B) in einer Menge in einem Bereich von 0,1 bis 25 Gew.-%, bezogen auf das Gesamtgewicht der Beschichtungszusammensetzung, enthält.

12. Ein Verfahren zur zumindest teilweisen Beschichtung eines gegebenenfalls beschichteten Substrats mit einer Basislackschicht umfassend wenigstens einen Schritt (a)
(a) zumindest teilweise Beschichtung wenigstens eines gegebenenfalls beschichteten Substrats mit einer Basislackschicht mittels der wässrigen Beschichtungszusammensetzung gemäß einem der Ansprüche 1 bis 11.

13. Eine Basislackschicht, welche erhältlich ist durch zumindest teilweise Beschichtung wenigstens eines gegebenenfalls beschichteten Substrats mit der wässrigen Beschichtungszusammensetzung gemäß einem der Ansprüche 1 bis 11 und/oder welche erhältlich ist durch das Verfahren gemäß Anspruch 12.

14. Ein zumindest teilweise mit der wässrigen Beschichtungszusammensetzung gemäß einem der Ansprüche 1 bis 11 oder mit der Basislackschicht gemäß Anspruch 13 beschichtetes Substrat.

15. Eine Verwendung einer Mischung (M) aus wenigstens einem polymeren Harz (P1) und wenigstens einem davon verschiedenen polymeren Harz (P2), wobei
das polymere Harz (P1) ein Polyamid ist, welches eine Säure-Zahl <10 mg KOH pro g an Polyamid aufweist und
das polymere Harz (P2) ein Polyester ist, welcher mindestens erhältlich ist durch Umsetzung wenigstens einer polymerisierten aliphatischen C₁₂-C₂₄-Monocarbonsäure mit wenigstens einem Diol und/oder Polyol,
als Rheologiehilfsmittel in wässrigen Beschichtungszusammensetzungen.

## Claims

1. Aqueous coating composition comprising
at least one mixture (M) of at least one polymeric resin (P1) and at least one polymeric resin (P2), different therefrom, where
the polymeric resin (P1) is a polyamide and
the polymeric resin (P2) is a polyester which is at least obtainable by reaction of at least one polymerized aliphatic C₁₂-C₂₄-monocarboxylic acid with at least one diol and/or polyol,
at least one binder (A) comprising at least one polymeric resin (A1), which is different from the polymeric resins (P1) and (P2), and optionally at least one crosslinking agent (A2), and
at least one pigment (B)
for at least partly coating an optionally coated substrate with a basecoat film,
**characterized in that** the polyamide used as polymeric resin (P1) has an acid number < 10 mg of KOH per g of polyamide and
the mixture (M) is obtainable by dispersing of the polymeric resin (P1) in water or an aqueous medium in the presence of the polymeric resin (P2).

2. Coating composition according to Claim 1, **characterized in that** the polyamide used as polymeric resin (P1) has an acid number in a range from 0.01 to 8.0 mg of KOH per g of polyamide.

3. Coating composition according to Claim 1 or 2, **characterized in that** the relative weight ratio of the polymeric resins (P2) and (P1) to one another, based in each case on their solids content, in the coating composition is in a range from 10:1 to 1.5:1.

4. Coating composition according to any of the preceding claims, **characterized in that** the coating composition is obtainable by the steps (1) and (2), succeeding one another in this order, specifically
(1)dispersing the polymeric resin (P1) in water or an aqueous medium in the presence of the polymeric resin (P2), to give an aqueous dispersion of the mixture (M), and
(2)mixing the aqueous dispersion of the mixture (M) obtained by step (1) with the further components used for preparing the coating composition.

5. Coating composition according to any of the preceding claims, **characterized in that** the mixture (M) of the at least one polymeric resin (P1) and the at least one polymeric resin (P2), different therefrom, is present in the coating composition in an amount in a range from 0.5 to 15 wt%, based on the total weight of the coating composition.

6. Coating composition according to any of the preceding claims, **characterized in that** it comprises the polyamide used as polymeric resin (P1) in an amount in a range from 0.05 to 5 wt%, based on the total weight of the coating composition.

7. Coating composition according to any of the preceding claims, **characterized in that** the polyester used as polymeric resin (P2) has an acid number in a range from 20 to 50 mg of KOH per g of polyester and/or a hydroxyl number in a range from 20 to 300 mg of KOH per g of polyester.

8. Coating composition according to any of the preceding claims, **characterized in that** the polyester used as polymeric resin (P2) is at least obtainable by reaction of at least one dimerized and/or trimerized aliphatic C₁₂-C₂₄ monocarboxylic acid with at least one aliphatic C₂-C₂₀ polyol and/or C₂-C₂₀ diol.

9. Coating composition according to any of the preceding claims, **characterized in that** to prepare the polyester used as polymeric resin (P2) use is made additionally of at least one dicarboxylic acid and/or at least one tricarboxylic acid selected from the group consisting of aliphatic C₃-C₁₂ dicarboxylic acids, cycloaliphatic C₅-C₁₂ dicarboxylic acids, aromatic C₈-C₁₂ dicarboxylic acids, aliphatic C₅-C₁₂ tricarboxylic acids, cycloaliphatic C₆-C₁₂ tricarboxylic acids, and aromatic C₉-C₁₂ tricarboxylic acids, and optionally additionally at least one aliphatic C₁₂-C₂₄ monocarboxylic acid.

10. Coating composition according to any of the preceding claims, **characterized in that** the binder (A) comprises at least one polyurethane and/or at least one poly(meth)acrylate and/or at least one polyester as at least one polymeric resin (A1).

11. Coating composition according to any of the preceding claims, **characterized in that** it comprises the polymeric resin (A1) in an amount in a range from 5 to 40 wt%, based on the total weight of the coating composition, and the pigment (B) in an amount in a range from 0.1 to 25 wt%, based on the total weight of the coating composition.

12. Method for at least partly coating an optionally coated substrate with a basecoat film, comprising at least one step (a)
(a) at least partly coating at least one optionally coated substrate with a basecoat film by means of the aqueous coating composition according to any of Claims 1 to 11.

13. Basecoat film which is obtainable by at least partly coating at least one optionally coated substrate with the aqueous coating composition according to any of Claims 1 to 11 and/or which is obtainable by the method according to Claim 12.

14. Substrate coated at least partly with the aqueous coating composition according to any of Claims 1 to 11 or with the basecoat film according to Claim 13.

15. Use of a mixture (M) of at least one polymeric resin (P1) and at least one polymeric resin (P2), different therefrom, where
the polymeric resin (P1) is a polyamide which has an acid number < 10 mg of KOH per g of polyamide and the polymeric resin (P2) is a polyester which is at least obtainable by reaction of at least one polymerized aliphatic C₁₂-C₂₄ monocarboxylic acid with at least one diol and/or polyol,
as a rheological assistant in aqueous coating compositions.

## Revendications

1. Composition aqueuse de revêtement, comprenant au moins un mélange (M) constitué par au moins une résine polymère (P1) et au moins une résine polymère (P2) différente de celle-ci,
la résine polymère (P1) étant un polyamide et
la résine polymère (P2) étant un polyester qui peut au moins être obtenu par transformation d'au moins un acide C₁₂-C₂₄-monocarboxylique aliphatique polymérisé avec au moins un diol et/ou polyol,
au moins un liant (A) comprenant au moins une résine polymère (A1), qui est différente des résines polymères (P1) et (P2) et le cas échéant un réticulant (A2), et au moins un pigment (B)
pour le revêtement au moins partiel d'un substrat le cas échéant revêtu par une couche de laque de base, **caractérisée en ce que** le polyamide utilisé comme résine polymère (P1) présente un indice d'acide <10 mg de KOH par g de polyamide et
le mélange (M) peut être obtenu par dispersion de la résine polymère (P1) dans de l'eau ou dans un milieu aqueux en présence de la résine polymère (P2).

2. Composition de revêtement selon la revendication 1, **caractérisée en ce que** le polyamide utilisé comme résine polymère (P1) présente un indice d'acide dans une plage de 0,01 à 8,0 mg de KOH par g de polyamide.

3. Composition de revêtement selon la revendication 1 ou 2, **caractérisée en ce que** le rapport pondéral relatif des résines polymères (P2) et (P1) l'une par rapport à l'autre, à chaque fois par rapport à leur teneur en solides, dans la composition de revêtement se situe dans une plage de 10:1 à 1,5:1.

4. Composition de revêtement selon l'une quelconque des revendications précédentes, **caractérisée en ce que** la composition de revêtement peut être obtenue par les étapes (1) et (2) consécutives dans cet ordre, à savoir
(1) dispersion de la résine polymère (P1) dans de l'eau ou dans un milieu aqueux en présence de la résine polymère (P2) avec obtention d'une dispersion aqueuse du mélange (M) et
(2) mélange de la dispersion aqueuse du mélange (M) obtenue après l'étape (1) avec les autres composants utilisés pour la préparation de la composition de revêtement.

5. Composition de revêtement selon l'une quelconque des revendications précédentes, **caractérisée en ce que** le mélange (M) constitué par ladite au moins une résine polymère (P1) et ladite au moins une résine polymère (P2) différente de celle-ci est présent dans la composition de revêtement en une quantité dans une plage de 0,5 à 15% en poids, par rapport au poids total de la composition de revêtement.

6. Composition de revêtement selon l'une quelconque des revendications précédentes, **caractérisée en ce qu'**elle contient le polyamide utilisé comme résine polymère (P1) en une quantité dans une plage de 0,05 à 5% en poids, par rapport au poids total de la composition de revêtement.

7. Composition de revêtement selon l'une quelconque des revendications précédentes, **caractérisée en ce que** le polyester utilisé comme résine polymère (P2) présente un indice d'acide dans une plage de 20 à 50 mg de KOH par g de polyester et/ou un indice d'hydroxyle dans une plage de 20 à 300 mg de KOH par g de polyester.

8. Composition de revêtement selon l'une quelconque des revendications précédentes, **caractérisée en ce que** le polyester utilisé comme résine polymère (P2) peut au moins être obtenu par transformation d'au moins un acide C₁₂-C₂₄-monocarboxylique aliphatique dimérisé et/ou trimérisé avec au moins un C₂-C₂₀-polyol et/ou C₂-C₂₀-diol aliphatique(s).

9. Composition de revêtement selon l'une quelconque des revendications précédentes, **caractérisée en ce que**, pour la préparation du polyester utilisé comme résine polymère (P2), on utilise en outre au moins un acide dicarboxylique et/ou au moins un acide tricarboxylique, choisi(s) dans le groupe constitué par les acides C₃-C₁₂-dicarboxyliques aliphatiques, les acides C₅-C₁₂-dicarboxyliques cycloaliphatiques, les acides C₈-C₁₂-dicarboxyliques aromatiques, les acides C₅-C₁₂-tricarboxyliques aliphatiques, les acides C₆-C₁₂-tricarboxyliques cycloaliphatiques et les acides C₉-C₁₂-tricarboxyliques aromatiques et le cas échéant en outre au moins un acide C₁₂-C₂₄-monocarboxyique aliphatique.

10. Composition de revêtement selon l'une quelconque des revendications précédentes, **caractérisée en ce que** le liant (A) comprend au moins un polyuréthane et/ou au moins un poly(méth)acrylate et/ou au moins un polyester en tant qu'au moins une résine polymère (Al).

11. Composition de revêtement selon l'une quelconque des revendications précédentes, **caractérisée en ce qu'**elle contient la résine polymère (A1) en une quantité dans une plage de 5 à 40% en poids, par rapport au poids total de la composition de revêtement, et le pigment (B) en une quantité dans une plage de 0,1 à 25% en poids, par rapport au poids total de la composition de revêtement.

12. Procédé pour le revêtement au moins partiel d'un substrat le cas échéant revêtu par une couche de laque de base, comprenant au moins une étape (a)
(a) revêtement au moins partiel d'au moins un substrat le cas échéant revêtu par une couche de laque de base au moyen de la composition aqueuse de revêtement selon l'une quelconque des revendications 1 à 11.

13. Couche de laque de base, qui peut être obtenue par le revêtement au moins partiel d'au moins un substrat le cas échéant revêtu par la composition aqueuse de revêtement selon l'une quelconque des revendications 1 à 11 et/ou qui peut être obtenue par le procédé selon la revendication 12.

14. Substrat revêtu au moins partiellement par la composition aqueuse de revêtement selon l'une quelconque des revendications 1 à 11 ou par la couche de laque de base selon la revendication 13.

15. Utilisation d'un mélange (M) constitué par au moins une résine polymère (P1) et au moins une résine polymère (P2) différente de celle-ci,
la résine polymère (P1) étant un polyamide qui présente un indice d'acide <10 mg de KOH par g de polyamide et
la résine polymère (P2) étant un polyester qui peut au moins être obtenu par transformation d'au moins un acide C₁₂-C₂₄-monocarboxylique aliphatique polymérisé avec au moins un diol et/ou polyol,
en tant qu'adjuvant de rhéologie dans des compositions aqueuses de revêtement.
